(19) Europäisches Patentamt / European Patent Office / Office européen des brevets

(11) **EP 3 472 557 B1**

(12) **FASCICULE DE BREVET EUROPEEN**

(45) Date de publication et mention de la délivrance du brevet:
**14.12.2022 Bulletin 2022/50**

(51) Classification Internationale des Brevets (IPC):
**G01C 9/00** *(2006.01)* **G01C 17/38** *(2006.01)*
**G01S 5/16** *(2006.01)*

(21) Numéro de dépôt: **17730208.0**

(52) Classification Coopérative des Brevets (CPC):
**G01C 9/00; G01C 17/38; G01S 5/163**

(22) Date de dépôt: **20.06.2017**

(86) Numéro de dépôt international:
**PCT/EP2017/065025**

(87) Numéro de publication internationale:
**WO 2017/220537 (28.12.2017 Gazette 2017/52)**

(54) **PROCEDE D'ESTIMATION D'UNE DIRECTION D'ORIENTATION ABSOLUE D'UN SYSTEME OPTRONIQUE**

VERFAHREN ZUR SCHÄTZUNG EINER RICHTUNG DER ABSOLUTEN AUSRICHTUNG EINES OPTRONISCHEN SYSTEMS

METHOD OF ESTIMATING A DIRECTION OF ABSOLUTE ORIENTATION OF AN OPTRONIC SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2016 FR 1600986**

(43) Date de publication de la demande:
**24.04.2019 Bulletin 2019/17**

(73) Titulaire: **Thales**
**92400 Courbevoie (FR)**

(72) Inventeur: **SIMON, Alain**
**78490 Les Mesnuls (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-2011/073144 FR-A1- 2 969 766**
**US-B2- 7 451 059**

**Description**

Le domaine de l'invention est celui de l'estimation du gisement d'un ou de plusieurs systèmes optroniques afin de déterminer des directions d'orientation absolues dans un repère géographique (fonction chercheur de Nord) et éventuellement des positions (fonction localisation). L'invention permet aussi d'estimer l'attitude complète d'un ou plusieurs systèmes en repère géographique (fonction calibration d'attitude).

Les technologies d'orientation de système, qu'il s'agisse de technologie de détermination de direction du Nord ou d'estimation d'attitude, se retrouvent dans de nombreuses applications civiles, militaires ainsi que dans des mécanismes au sein d'êtres vivants.

Pour les applications militaires, on peut citer les techniques utilisant :

- des compas magnétiques comme décrit dans le document US6009629 "Process for determining the direction of the earth's magnetic field", mais ils sont peu performants (classe 10 milli-radians), difficiles à intégrer pour isoler le compas d'autres équipements utilisant des sources de courant modifiant l'environnement EM, et nécessitent la connaissance de la déclinaison magnétique locale (angle entre méridiens locaux magnétique et géographique, à ajouter à la mesure magnétique pour disposer de l'azimut géographique) elle aussi mal connue dans la classe 10 milli-radians, pour transformer l'azimut magnétique en azimut ou direction géographique ;
- des FOG acronyme de l'expression anglo-saxonne Fiber Optical Gyroscope, des gyromètres laser (RLG ou Ring Laser Gyroscope), des gyromètres à résonateur hémisphérique (HRG ou Hemispherical Resonator Gyroscope), comme décrit dans le document US8151475 "North finding device, system and method", mais ils présentent des inconvénients en termes de volume, de masse, de consommation électrique et un coût élevé ;
- des MEMS (Micro-Electro-Mechanical Systems), qui visent à remplacer les compas magnétiques, comme décrit dans le document US20100088063 "Method and Apparatus for Precision Azimuth Measurement", mais de performance insuffisante (quelques milli-radian), de faible maturité et nécessitant une procédure de calibration pouvant être longue et complexe ;
- des amers ou des coordonnées géographiques d'informations spatiales ou terrestres, comme décrit dans le document US7451059 "True azimuth and north finding method and system", mais ils ne permettent pas toujours de disposer de 'bonnes coordonnées' c.à.d. de classe métrique au minimum ainsi que de détails suffisamment caractéristiques quelle que soit la zone de mise en oeuvre et situés dans le périmètre d'acquisition du dispositif. A cela s'ajoute une problématique de vieillissement/mise à jour de données de référence et de description insuffisante pour permettre le repérage sous des points de vue pouvant être très différents (entres vues verticales de cartes ou satellite et une vue quasi-horizontale du dispositif notamment) ;
- des directions de corps célestes, comme décrit dans le document EP0351469 "An astronomical north finding system", et qui procurent une performance élevée mais non permanente (difficulté pour voir les étoiles de jour, ou le soleil à travers de gros nuages) ;
- des antennes avec récepteurs GNSS qui permettent l'accès à une performance modérée pour des bases de longueur supérieure à 1m mais pour une taille, une masse, une consommation peu compatibles d'un dispositif portable et nécessitant délai et précaution d'installation ;
- la Magneto Hydrodynamique, comme décrit dans le document d'Agnew et al. "North-Finding Module base on Magneto-Hydrodynamic Sensor".

Au niveau des applications civiles et en complément de la liste précédente, on cite essentiellement la station totale (théodolite ou tachéomètre) utilisés par les géomètres. Ces équipements utilisent des gyromètres ou des codeurs qui permettent des mesures d'angles avec une excellente précision (50 $\mu$rad). Mais cette précision de la mesure est non calibrée et ne permet pas de les utiliser seuls en vue d'atteindre une mesure absolue. Pour cela ils recourent en général à l'emploi de références (amer, corps célestes). De plus, le délai de mise en œuvre de ces systèmes est long (supérieur à 10 minutes), ils ont un coût élevé (environ 50k€) et un poids conséquent (environ 30kg).

Grâce à un coût et un volume attractifs, la part grandissante des MEMS dans de nombreux équipements et applications domestiques accélère leur maturité (maitrise des composants tels que les accéléromètres et magnétomètres, et performance de calibration) sans toutefois pouvoir envisager d'ici plusieurs années des performances meilleures que 5 mrd. Par ailleurs, si la calibration de leurs accéléromètres peut être réalisée une unique fois (en usine), la calibration de leurs magnétomètres nécessite une procédure systématique sur le site d'utilisation préalablement à la mesure.

Au niveau des techniques mises en œuvre par des êtres vivants on cite en particulier la navigation et l'orientation d'animaux (tels que les abeilles, les pigeons voyageurs, les étourneaux, les papillons monarques, ...) avec le soleil et l'exploitation de la polarisation du ciel, utilisée par certains animaux volants pour leur navigation sur de longues distances, comme décrit dans le document d'Guan et al "The Novel Method of North-finding Based on the Skylight Polarization" (2013). D'autres utilisent les étoiles pour leur migration nocturnes (passereaux, et certaines sauterelles), d'autres utilisent le champ magnétique terrestre, le vent ou les courants des fonds marins. Pour beaucoup, le fonctionnement des organes récepteurs et le traitement de l'information restent à éclaircir. Il en est de même de la performance avec laquelle ces organismes sont susceptibles d'estimer l'orientation mais celle-ci semble insuffisante (>1°) en regard de celle ici visée (~1 mrd) et s'appuie sur un dispositif et des mécanismes non facilement reproductibles hors d'un système vivant.

On résume les inconvénients de ces approches dans le tableau suivant :

| Compas magnétique | Mesure imprécise et sujette aux fluctuations électromagnétiques de l'environnement nécessite la connaissance de la déclinaison magnétique locale |
| --- | --- |
| FOG gyro | Cher et lourd et contrainte d'initialisation |
| MEMS | Peu précis, peu mature et contrainte d'initialisation |
| Céleste | Non permanent, difficulté d'identification possible sur des |
|  | étoiles, nécessite une bonne mesure de la verticale. |
| GNSS | Nécessite une réception sur la zone du système optronique et encombrement du déploiement (antenne) de l'équipement |
| Amer | Nécessite d'accéder à des détails sur zone dont les coordonnées doivent être déterminées lors d'une préparation. Le niveau de précision des coordonnées ajoute des contraintes sur les sources servant à la préparation. Visibilité des amers sur zone et capacité de mesure non garanties. |
| Magnétohydrodynamique | Performance insuffisant sur détecteur bas coût, sinon volume, coût et mise en œuvre assez lourds. |
| Codeur optique | Mesure relative précise mais nécessite une calibration avec une référence pour fixer l'origine des mesures. |
| Polarisation du ciel | Très peu précise, peu mature |
| théodolites | Cout et délai de mise en œuvre élevé. Besoin de référence géodésique. |

Globalement la disponibilité de la direction du Nord ou plus généralement d'une direction d'orientation, de la classe du milli-radian reste un défi difficile à relever sans utiliser d'informations de référence et en utilisant un système à faible volume et à faible coût (de l'ordre d'1k€).

Il s'agit de déterminer au moyen de systèmes optroniques, des directions géographiques et éventuellement des localisations géographiques d'objets d'une scène, avec un objectif d'exactitude élevé (meilleur que le milli radian), rapidement (en quelques secondes) et sans accéder à une référence spatiale telle que coordonnées d'amer, mensuration ou direction d'objet visibles dans la scène, et ceci au moyen d'un dispositif additionnel léger, de moindre coût.

Le document WO 2011/073144 divulgue quant à lui, un procédé d'étalonnage d'un système optronique se déplaçant en plusieurs positions et observant un même objet entre chaque position, l'orientation étant définie par rapport au Nord.

Le but de l'invention est de répondre à ce défi en palliant les inconvénients associés aux méthodes précédentes.

Selon l'invention, la fonction permettant d'estimer la direction du Nord ou "chercheur de nord" est réalisée, généralement en temps réel, par une estimation collaborative du gisement de plusieurs systèmes optroniques délocalisés, pouvant en particulier être équipés de composants optroniques dont une ou plusieurs caméras, d'Equipements de Mesure d'Angles Relatifs (EMAR), d'Equipements de Mesure de Position Géodésique (EMPG) et de moyens de communication entre eux, qui s'échangent des informations et des mesures sur des objets dont on ne connaît pas les coordonnées géographiques ou positions absolues, ni les directions d'orientation par rapport auxdits systèmes. Les mesures obtenues de manière autonome par les moyens propres à chaque système optronique, sont réalisées et échangées entre systèmes selon un protocole prédéfini.

Plus précisément l'invention a pour objet un procédé d'estimation de gisement d'un système optronique dans un repère géographique, avec une précision souhaitée prédéterminée (PGS) selon la revendication 1.

Le procédé permet d'obtenir un gisement et donc une direction du Nord géographique (aussi désignée Nord) de qualité supérieure à ce qu'un système optronique unique serait capable d'obtenir, y compris dans la situation où il disposerait des mêmes mesures sur l'ensemble des objets. Certains systèmes optroniques peuvent même ne pas disposer des équipements de mesure qui leur permettraient de déterminer un Nord de manière autonome même de mauvaise qualité.

Pour fixer les idées, avec des mesures dont les précisions sont les suivantes :

- position absolue, avec EMPG, de la classe 3m à 1σ,
- positions relatives des systèmes optroniques de l'ordre de 1 m à 1σ,
- élévations des visées sur les objets de la classe 1.5 mrd,
- distance d'un objet au système optronique de la classe 2 m à 1σ,
- mesure d'angle relatif entre visées de la classe 0.5 mrd à 1σ,

alors, la classe d'exactitude obtenue sur l'estimation de gisement du premier système optronique est de l'ordre de 1 mrd à 1σ avec une base entre les systèmes d'ordre de grandeur du kilomètre, σ étant l'écart type de la distribution autour de la valeur moyenne. La performance (ou précision) est ici simplement donnée sous forme d'ordre de grandeur car elle dépend :

- du nombre d'objets sur lesquels les systèmes partagent leurs mesures,
- de la configuration géométrique des objets, c'est-à-dire leur position relative sur le terrain ainsi que leur disposition face aux systèmes optroniques,
- les modalités des mesures mises en œuvre par les systèmes optroniques ; par exemple avec ou sans "Equipement de Mesure Electronique de Distance" EMED, avec ou sans "Equipement de Mesure de Position Géodésique" EMPG...

La performance peut être sub-mrd mais pour atteindre ce niveau de performance, au regard des ordres de grandeurs communiqués pour les mesures, on optimise en jouant de préférence sur :

- le nombre ou/et le positionnement des systèmes optroniques collaborant,
- le nombre ou/et le positionnement des objets sur lesquels sont effectuées les mesures.

Les principaux avantages du procédé selon l'invention sont les suivants :

- forte précision pour la fonction estimation du gisement et donc pour la fonction chercheur de Nord, liée à l'aptitude à observer des objets dans des configurations de base entre systèmes et/ou de positionnement d'objets relativement aux systèmes collaborant ; ceci indépendamment de la latitude contrairement à des méthodes sensibles à la mesure de la gravité ou à l'accélération de mouvement ou de rotation terrestre, et indépendamment de la connaissance fine de l'environnement électromagnétique local pour des méthodes basées sur des mesures du champ magnétique terrestre,
- aptitude à estimer au moyen d'un réseau de systèmes optroniques et d'un jeu d'observations, une grandeur (comme en particulier un gisement ou la direction du Nord ou/et la position d'un système) inaccessible au niveau d'un système unique,
- haut degré de disponibilité de la fonction chercheur de Nord liée :

  ◦ aux faibles contraintes sur l'information à acquérir (objets de coordonnées inconnues et non coopérants)
  ◦ à l'aptitude à travailler avec des systèmes disposant de dispositifs hors d'usage (par exemple des systèmes sans EMED, sans EMPG)
  ◦ à la possibilité de travailler dans un environnement contraint, susceptible de dégrader ou d'inhiber au moins localement l'utilisation de dispositifs sur certains systèmes,
  ◦ d'étendre la zone d'acquisition de référence (passif),
  ◦ d'étendre la zone d'activité (couverture de systèmes en réseau supérieure à celle d'un système seul),

- aspect SWaP (Small Weight and Power)

  ◦ iso-volume car pas d'ajout d'équipement matériel spécifique pour réaliser la fonction chercheur de nord sur un système optronique déjà équipé pour réaliser des fonctions de mesures topographique, de surveillance ou de poursuite de cible, (hors aspect moyens de communication généralement disponibles par ailleurs)
  ◦ iso-masse car besoin essentiellement logiciel pouvant être implémenté sur cartes/ CPU existantes,
  ◦ faible consommation limitée à un besoin CPU faible,

- de pouvoir être ajouté simplement au sein d'équipements déjà existants avec peu d'impact sur l'architecture des systèmes optroniques (modification logicielle essentiellement),
- sans besoin de préparation méthodique de la mission avec notamment le besoin préalable de disposer d'information ou le besoin de déployer des équipements sur place pour relever des coordonnées géographiques d'objets,
- rapidité de disponibilité d'une solution de gisement (typiquement moins de 10s) contrairement à certaines méthodes 'North finding', en particulier à base d'inertie, pouvant nécessiter plusieurs minutes d'observations au niveau d'un système optronique ou à base de points de référence nécessitant un travail de préparation pour l'élaboration de coordonnées,

- permanence de la solution puisque sans besoin d'entretien car pas de dérive de la solution, ainsi que la possibilité additionnelle de localiser des objets de l'environnement une fois un gisement estimé en vue d'établir une base de données de coordonnées pouvant servir d'ancrage et possibilité de ré-estimer ainsi des gisements de systèmes y compris s'ils observent des déplacements,
- faible coût du procédé dès lors que le système optronique est équipé des dispositifs de mesure nécessaires et que l'utilisateur dispose d'un moyen de communication.

Ce procédé permet aussi de procéder en opportunité. Par opportunité on entend la capacité à estimer le gisement :

- de manière rapide c'est-à-dire :

  ∘ sans recourir à une analyse ou à une opération préalable d'analyse ou d'élaboration de caractéristiques d'éléments de la zone (par exemple une préparation de la mission consistant à extraire des amers ou d'autres informations de la scène),
  ∘ sans mettre en œuvre une procédure d'acquisition qui excéderait 30 secondes,

- de manière autonome c'est-à-dire sans recourir à une source d'informations externes susceptibles d'apporter des informations d'échelle, et sans recourir à une source de références spatiales ou coordonnées géographiques d'entités de la scène,
- avec des objets qui ne sont pas présélectionnés mais sont choisis sur place (sans pré-désignation ou identification par avance) et qui ne présentent pas de configuration d'ensemble ou de motif géométrique spécifique qui réduirait considérablement la possibilité d'utiliser efficacement le dispositif sans en modifier le déploiement,
- avec des objets particuliers qui ne nécessitent pas un échange d'informations sur leur position/direction ou plus généralement qui ne nécessitent pas d'informations autres que leur seule émission photonique,
- sans préparation préalable à la mission et sans déploiement de tout autre dispositif additionnel dans la scène avant réalisation des mesures.

Le fait d'utiliser une configuration de systèmes optroniques collaborant en réseau permet ainsi d'accroitre substantiellement le nombre d'informations/observations disponibles et le nombre d'inconnues à déterminer.

Les avantages attendus portent sur :

- l'aptitude de fonctionnement qui s'étend sur une zone, supérieure à ce qu'un système optronique fonctionnant avec amer serait en mesure de réaliser (la dispense de mesure de distance sur des objets permet d'augmenter notablement la zone de recherche, de la portée d'acquisition de l'EMED à la portée visuelle du système),
- la performance du système collaboratif est meilleure que celle d'un système seul accédant à un amer, et est ajustable en jouant simplement sur l'éloignement et le positionnement relatif à (aux) l'objet(s), le nombre d'objets utilisés, la nature des mesures réalisées, la manière d'estimer ou d'élaborer les calculs,
- l'aptitude de fonctionnement avec des dispositifs munis de modalités différentes (par exemple absence d'EMED pour alléger les systèmes, diminuer leur coût, leur masse, leur consommation et accroitre leur discrétion),
- la capacité de fonctionnement dans des conditions électromagnétiques contraintes :

  ∘ absence de signaux GNSS sur un système (masquage ou absence de récepteur),
  ∘ absence de MED sur un objet, soit par choix de discrétion en contexte tactique, soit en raison d'une surface équivalente trop faible de l'objet pour renvoyer un niveau de signal susceptible d'établir la MED,

- avantages des systèmes en réseau (modularité, robustesse panne, ...),
- aptitude à déployer la fonction sur système déjà existant par simple mise à jour logicielle (principalement software hors moyen d'échange d'informations).

La classe PGS est typiquement la classe 1 mrd.
L'acquisition d'un objet de la scène au niveau d'un système réfère, au sens le plus large, aux opérations :

- de choix de cet objet dans la scène,
- de collecte d'informations sur cet objet,
- d'extraction d'informations sur cet objet.

Pour une mise en œuvre spécifique du processus, ces opérations peuvent être réalisées de manière assistée par un opérateur ou de manière automatique.

Le choix d'un objet peut être guidé selon une doctrine d'acquisition préétablie ou/et des raisons de visibilité.

La collecte d'information concerne la réalisation d'image de l'objet dans une voie optronique ou sa matérialisation dans une voie directe assurant son simple centrage sur la voie utilisée, la mesure d'angles absolus ou/et relatifs, la mesure de distance entre le système et l'objet, la réception sur le système de signaux issus d'autre système et réfléchis par cet objet.

L'extraction d'information consiste à rechercher des structures spécifiques sur le signal collecté pour disposer d'une représentation caractéristique et généralement compressée de l'objet en vue de l'exploiter ou/et la transmettre de manière plus pertinente, robuste et automatique. Ces traitements sont réalisés dans l'unité de calcul 110 ou sur le calculateur interne de 120.

Dans une mise en œuvre assistée, le pointage de l'objet au centre d'un imageur 101 sera suffisant pour collecter et lui associer les informations d'EMED et d'EMAR sans plus extraire d'information. On peut aussi envisager l'extraction manuelle des coordonnées d'un ou plusieurs objets imagés hors du centre image par désignation de l'opérateur et l'utilisation des caractéristiques optiques de l'imageur et des moyens de mesure angulaire pour déterminer les directions des objets imagés qui seraient désignés dans l'image.

Dans une mise en œuvre automatique qui peut être envisagée avec des imageurs soit à faible champ montés sur plate-forme pan & tilt soit omnidirectionnels (OMNI), les caractéristiques des objets seront préférentiellement extraites de manière automatique comme indiqué plus loin. Pour ces 2 situations, le matériel en question joue le rôle d'EMAR 130. Pour une utilisation avec pan & tilt, l'automatisation du procédé suppose :

- qu'un premier système établisse une localisation approchée de la zone d'intérêt avec ses propres moyens de collecte (EMPG 105, EMED 106/107 et compas magnétique 108 par exemple)
- que les systèmes collaborant orientent leur voie à imagerie et EMED selon la direction définie d'après leur position donnée par leur EMPG et la localisation approchée communiquée par le premier système.

La ré-acquisition sur un système 'Sj' d'un objet de la scène déjà acquis par un système 'Sj' peut être guidée par les même principes que ceux mis en œuvre pour sa collecte sur le premier système 'Si'. Elle utilise comme indiquée par ailleurs une localisation 'approchée'. Le terme 'approchée' qualifie ici la qualité d'une localisation accessible sur système 'Si' qui ne dispose généralement pas d'un gisement ou d'une orientation de référence lui permettant d'accéder directement à la PGS ; en pratique il peut exister plus d'un ordre de grandeur entre l'orientation approchée mesurée sur 'Si' et celle permettant d'accéder à la PGS.

La collecte recouvre aussi l'échange entre les systèmes des informations relatives à leurs mesures. Lors de la réception d'informations, la mise à disposition de mesures émanant d'autres systèmes conduisant à atteindre ou dépasser le nombre de degrés de liberté (DoF) en regard des quantités à estimer du système récepteur permet :

- d'estimer les quantités comprenant en particulier son gisement,
- d'améliorer les positions des objets déjà acquis par le système ; ce post-traitement améliorera notamment une éventuelle future orientation d'un nouveau système sur cet objet,
- d'améliorer le positionnement lors d'un nouvel objet choisi au niveau du système ; cette bonification profitera alors aux futures réacquisitions de cet objet.

Différentes configurations de systèmes collaborant sont envisagées.

Par exemple, les étapes d'estimation du gisement ($\overline{G_1}$) du premier système optronique sont réalisées au moyen de deux systèmes optroniques et pour un seul objet commun, et les mesures supplémentaires sont obtenues de la façon suivante :

- mesurer la distance entre chaque système optronique et l'objet, au moyen d'un dispositif de mesure de distance équipant chaque système optronique,
- mesurer de manière approchée avec une précision meilleure que 5°, un azimut de l'objet au moyen d'un dispositif de mesure d'azimut approché équipant le premier système optronique,

et les observations suffisent à l'estimation.

Par exemple, les étapes d'estimation du gisement ($\overline{G_1}$) du premier système optronique sont réalisées au moyen de deux systèmes optroniques et pour deux objets communs, et les mesures supplémentaires sont obtenues de la façon suivante :

- mesurer la distance entre chaque système optronique et chaque objet, au moyen d'un dispositif de mesure de distance équipant chaque système optronique,
- mesurer l'élévation entre chaque système optronique et chaque objet,

et les observations suffisent à l'estimation.

Par exemple, les étapes d'estimation du gisement $(\overline{G_1})$ du premier système optronique sont réalisées au moyen de deux systèmes optroniques et pour deux objets communs, et les mesures supplémentaires sont obtenues de la manière suivante par chaque système optronique :

- mesurer la distance entre le premier système optronique et chaque objet, au moyen d'un dispositif de mesure de distance équipant le premier système optronique,
- mesurer l'élévation de chaque objet au moyen d'un dispositif de mesure d'élévation équipant chaque système optronique,
- mesurer l'angle relatif de chaque objet, au moyen d'un dispositif de mesure d'angle relatif équipant chaque système optronique,
- mesurer un azimut avec une précision meilleure que 5°, sur un des deux objets au moyen d'un dispositif de mesure d'azimut équipant chaque système optronique,
- à partir des observations, estimation par le premier ou le second système optronique, du gisement du second système optronique avec une précision d'au moins la classe PGS,

et les observations suffisent aux estimations.

Par exemple, les étapes d'estimation du gisement $(\overline{G_1})$ du premier système optronique sont réalisées au moyen de deux systèmes optroniques et pour au moins deux objets communs, et les mesures supplémentaires sont obtenues de la manière suivante :

- mesurer la distance entre chaque système optronique et chaque objet, au moyen d'un dispositif de mesure de distance équipant chaque système optronique,
- mesurer l'élévation de chaque objet au moyen d'un dispositif de mesure d'élévation équipant chaque système optronique,
- mesurer l'angle relatif de chaque objet au moyen d'un dispositif de mesure d'angle relatif équipant chaque système optronique,
- à partir des observations, estimation du gisement du deuxième système optronique avec une précision d'au moins la classe PGS,

et les observations suffisent aux estimations.

Par exemple, les étapes d'estimation du gisement $(\overline{G_1})$ du premier système optronique sont réalisées au moyen de deux systèmes optroniques et pour un objet commun, et les mesures supplémentaires sont obtenues de la manière suivante :

- mesurer la distance entre chaque système optronique et l'objet, au moyen d'un dispositif de mesure de distance équipant chaque système optronique,
- mesurer l'élévation de l'objet au moyen d'un dispositif de mesure d'élévation équipant chaque système optronique,
- à partir des observations, estimation du gisement du deuxième système optronique avec une précision d'au moins la classe PGS,

et les observations suffisent aux estimations.

Par exemple, les étapes d'estimation du gisement $(\overline{G_1})$ du premier système optronique sont réalisées au moyen de deux systèmes optroniques et pour un objet commun mobile, les mesures sont réalisées sur des intervalles de temps qui se recouvrent au moins partiellement, et les mesures supplémentaires sont obtenues de la manière suivante :

- mesurer la distance entre chaque système optronique et l'objet, au moyen d'un dispositif de mesure de distance équipant chaque système optronique,
- mesurer l'élévation de l'objet au moyen d'un dispositif de mesure d'élévation équipant chaque système optronique,
- mesurer l'angle relatif au moyen d'un dispositif de mesure d'angle relatif équipant chaque système optronique),
- mesurer un azimut entre chaque système optronique et l'objet, avec une précision meilleure que 5° au moyen d'un dispositif de mesure d'azimut équipant chaque système optronique,
- à partir des observations, estimation du gisement du deuxième système optronique,

et les observations suffisent aux estimations.

L'acquisition de mesures sur des objets fixes, depuis des systèmes optroniques fixes délocalisés ne nécessite pas de précaution particulière pour synchroniser les mesures.

L'acquisition d'objets mobiles, peut aussi permettre d'assurer une fonction de type chercheur de nord. Au milieu d'une étendue d'eau par exemple, un navire en mouvement peut jouer le rôle d'objet commun pour des mesures dès lors que le système peut les synchroniser.

Selon une caractéristique de l'invention, au moins un objet commun est mobile ; les mesures sont alors réalisées sur des intervalles de temps qui se recouvrent au moins partiellement.

Avantageusement, la trajectoire de l'objet mobile est estimée simultanément auxdites estimations, sur la plage de temps des mesures.

Par exemple, les étapes d'estimation du gisement ($\overline{G_1}$) du premier système optronique sont réalisées pour deux objets communs et au moyen de deux systèmes optroniques, les moyens de communication sont des moyens optiques, les mesures supplémentaires sont obtenues de la manière suivante:

- mesurer la distance correspondant à la somme de la distance entre un objet et un système optronique et de la distance entre ledit objet et l'autre système optronique, au moyen d'un dispositif de mesure de distance comportant un émetteur équipant l'autre système optronique et un récepteur équipant le système optronique,
- mesurer l'angle relatif de chaque objet au moyen d'un dispositif de mesure d'angle relatif équipant chaque système optronique,
- mesurer un azimut entre chaque système optronique et chaque objet, au moyen d'un dispositif de mesure d'azimut équipant chaque système optronique,
- à partir des observations, estimation du gisement du deuxième système optronique,

et les observations suffisent aux estimations.

Par exemple, les étapes d'estimation du gisement ($\overline{G_1}$) du premier système optronique sont réalisées pour au moins deux objets communs et au moyen d'au moins deux systèmes optroniques, les mesures supplémentaires sont obtenues de la manière suivante:

- mesurer l'angle relatif de chaque objet au moyen du dispositif de mesure d'angle relatif équipant le premier système optronique,
- mesurer l'élévation de chaque objet au moyen du dispositif de mesure d'élévation équipant le premier système optronique,
- mesurer la distance entre chaque système optronique et chaque objet, au moyen d'un dispositif de mesure de distance équipant chaque système optronique,

et les observations suffisent à l'estimation.

Par exemple, les étapes d'estimation du gisement ($\overline{G_1}$) du premier système optronique sont réalisées pour au moins un objet commun et au moyen d'au moins trois systèmes optroniques, les mesures supplémentaires sont obtenues de la manière suivante:

- mesurer l'angle relatif de chaque objet au moyen d'un dispositif de mesure d'angle relatif équipant chaque système optronique,
- et l'élévation de chaque objet au moyen d'un dispositif de mesure d'élévation équipant chaque système optronique,
- déterminer la position d'un troisième système optronique,
- à partir des observations, estimation du gisement de chaque système optronique,

et les observations suffisent à l'estimation.

Par exemple, les étapes d'estimation du gisement ($\overline{G_1}$) du premier système optronique sont réalisées pour au moins deux objets communs et au moyen d'au moins deux systèmes optroniques, les mesures supplémentaires sont obtenues de la manière suivante:

- mesurer l'angle relatif de chaque objet au moyen d'un dispositif de mesure d'angle relatif équipant chaque système optronique,
- mesurer la distance entre chaque système optronique et chaque objet, au moyen d'un dispositif de mesure de distance équipant chaque système optronique,
- mesurer un azimut entre chaque système optronique et chaque objet, avec une précision meilleure que 5°, au moyen d'un dispositif de mesure d'azimut équipant chaque système optronique,

- à partir des observations, estimation du gisement ainsi que les roulis et tangage de chaque système optronique,

et les observations suffisent aux estimations.

Par exemple, les étapes d'estimation du gisement ($\overline{G_1}$) du premier système optronique sont réalisées au moyen du premier et d'un deuxième système optronique, pour un objet commun et un autre objet de position connue non commun aux deux systèmes optroniques, c'est-à-dire visible seulement par le deuxième système optronique, les mesures supplémentaires sont obtenues de la manière suivante:

- mesurer l'élévation de chaque objet au moyen d'un dispositif de mesure d'élévation équipant le deuxième système optronique,
- mesurer la distance entre le premier système optronique et l'objet commun, au moyen d'un dispositif de mesure de distance équipant le premier système optronique,
- mesurer la distance entre le deuxième système optronique et chaque objet, au moyen d'un dispositif de mesure de distance équipant le deuxième système optronique,

la position du premier système optronique est déterminée au moyen d'un dispositif de positionnement équipant ledit système optronique et la position du second système optronique est déterminée par l'estimation et en ce que les observations suffisent aux estimations.

Lorsqu'au moins un système optronique Sm, m variant de 2 à M, est un système optronique mobile de trajectoire connue, les mesures effectuées à partir du (ou des) système(s) mobile(s) peuvent être temporellement synchronisées.

Lorsqu'un compas magnétique est utilisé, il peut être calibré au moyen des mesures sur un ou/et des objets.

Selon une caractéristique de l'invention, il comporte préalablement aux mesures, une étape de sélection des objets de la scène selon un critère de visibilité commune et/ou un critère de performance sur la direction d'orientation.

Il peut aussi comporter préalablement aux mesures, une étape de sélection de positions des systèmes optroniques.

Les positions des systèmes optroniques sont typiquement déterminées au moyen d'un dispositif de positionnement équipant chaque système optronique.

Les positions des objets sont généralement inconnues.

Lorsqu'un objet est de position connue, la position du premier système optronique est déterminée au moyen d'un dispositif de positionnement équipant ledit système optronique et la position du second système optronique est déterminée par l'estimation et les observations suffisent aux estimations.

Selon une caractéristique de l'invention, les moyens de communication entre les deux systèmes optroniques sont assurés par une liaison de type radio.

Ayant réalisé la fonction estimation de gisement ou "chercheur de Nord", le réseau de systèmes optroniques qui collaborent, peut assurer également de manière simultanée ou séquentielle des fonctions de type localisation, poursuite ou reconstruction 3D d'objet sur la zone des mesures.

Le procédé selon l'invention peut avantageusement comporter une étape de calcul des coordonnées et/ou de la direction des objets acquis, à partir des observations.

Deux systèmes optroniques voire plus, peuvent être un même système optronique portable, et le procédé comporte alors une étape de déplacement du système portable de la première position à la deuxième position.

Les valeurs et caractéristiques des observations sont généralement stockées par chaque système optronique.

L'invention a aussi pour objet un produit programme d'ordinateur, ledit programme d'ordinateur comprenant des instructions de code permettant d'effectuer les étapes du procédé tel que décrit, lorsque ledit programme est exécuté sur un ordinateur.

Le gisement et donc le Nord est obtenu sur chaque système optronique disposant d'un équipement de mesure angulaire relatif, étant bien entendu que les systèmes optroniques qui en sont dépourvus se limitent à alimenter les autres systèmes optroniques du réseau en observations sur des objets.

D'autres caractéristiques et avantages de l'invention apparaîtront à la lecture de la description détaillée qui suit, faite à titre d'exemple non limitatif et en référence aux dessins annexés dans lesquels :

la figure 1 illustre les grandeurs respectivement définies par les termes, gisement, azimut, angle relatif,
les figures 2 représentent schématiquement des exemples de carte de visibilité, respectivement vues depuis 2 positions (fig 2a, fig 2b) et la carte de visibilité commune aux deux positions (fig 2c),
la figure 3 représente schématiquement un exemple de systèmes optroniques collaborant selon l'invention, et utilisant des moyens de communication par liaison radio,
la figure 4 représente schématiquement un autre exemple de systèmes optroniques collaborant selon l'invention, et utilisant des moyens de communication optique,

les figures 5 représentent schématiquement des exemples de configurations de systèmes collaboratifs aptes à mettre en œuvre le procédé selon l'invention, à 2 systèmes optroniques et un seul dispositif de mesure d'angle relatif,
les figures 6 représentent schématiquement des exemples de configurations de systèmes collaboratifs aptes à mettre en œuvre le procédé selon l'invention, à 2 systèmes optroniques et 2 dispositifs de mesure d'angle relatif,
les figures 7 représentent schématiquement des exemples de configurations de systèmes collaboratifs aptes à mettre en œuvre le procédé selon l'invention, à au moins 3 systèmes optroniques,
les figures 8 représentent schématiquement des exemples de configurations d'au moins 2 systèmes collaboratifs dont l'un d'entre eux ne dispose pas d'EMPG,
la figure 9 représente schématiquement les équipements d'un exemple de configuration de collaboration avec 2 systèmes disposant d'EMARs de faible qualité sous forme de compas magnétique,
les figures 10 montrent un exemple de représentation spatiale de la performance avec laquelle on peut estimer un gisement (fig 10a) ou une position (fig 10b) en présentant l'information sous forme de courbes iso-performance, obtenue à partir de la configuration 2.4 de la figure 6,
la figure 11 est un organigramme illustrant différentes étapes de sélection d'une configuration de collaboration.

D'une figure à l'autre, les mêmes éléments sont repérés par les mêmes références.

Comme on va le voir à présent plus en détail, le procédé selon l'invention permet à un ou plusieurs systèmes optroniques de calibrer leur dispositif mécanique ou équipement de mesure d'angle relatif (EMAR), ce qui revient à estimer le gisement du système et donc à déterminer la direction du Nord avec une précision souhaitée prédéterminée. Cela couvre le cas d'un système optronique qui n'est pas capable de l'obtenir par lui-même, ainsi que le cas d'un système optronique qui peut obtenir un gisement mais de manière insuffisamment précise. Le terme EMAR est utilisé pour désigner plus généralement un équipement ayant la capacité de mesurer un angle relatif. L'EMAR peut en pratique être un goniomètre, une unité de mesure inertielle (UMI), un compas magnétique ou tout autre instrument utilisant un principe permettant d'évaluer une rotation relative. Sa précision de mesure doit être cohérente de la PGS sur des configurations de déploiement accessible et de mise en œuvre des systèmes.

Un EMAR à 2 axes (avec lecture horizontale et verticale) mis en station permet de mesurer directement les élévations. La mise en station consiste en particulier à régler l'horizontalité du plan de l'EMAR par exemple avec un dispositif à bulle. Afin d'éviter cette opération qui peut s'avérer délicate, on peut estimer, en préalable des mesures sur des objets, la non horizontalité de l'EMAR lorsque le système optronique dispose d'inclinomètres intégrés.

Pour procéder avec un dispositif généralement plus léger, on peut aussi utiliser un EMAR mono-axe ; un inclinomètre permettant de mesurer en outre les élévations d'objets visés doit alors être intégré au système optronique et aligné avec sa LdV. Dans la suite on assimile donc la configuration {EMAR 2 axes mis en station} à la configuration {EMAR 1 axe mis en station + inclinomètre}.

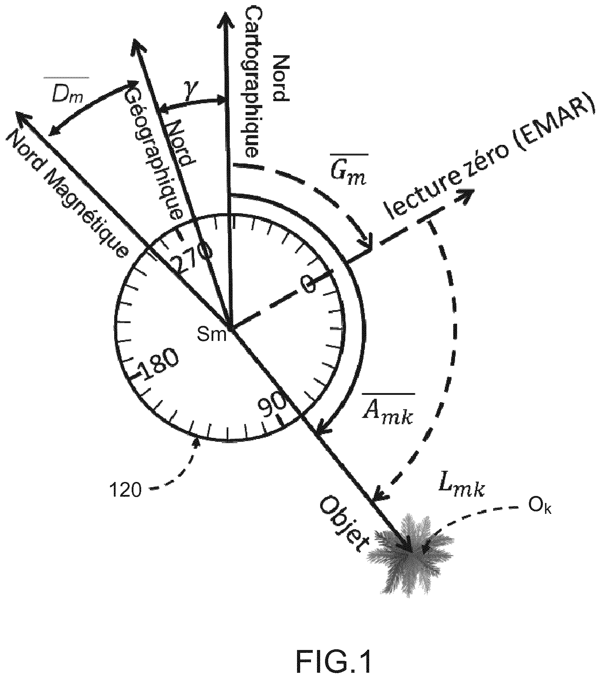

On rappelle en relation avec la figure 1 quelques définitions. Lorsque la référence d'azimut est cartographique (Grid North) la direction d'un objet relativement au 'Nord de la carte' est qualifiée de gisement ou d'azimut cartographique. Lorsque la référence des directions est le nord géographique (True North) l'angle entre un objet et ce Nord est un azimut géographique. L'écart entre les deux azimuts correspond à la convergence locale des méridiens 'γ' qui est fixée en un lieu et pour une projection cartographique donnés. Azimut géographique et gisement de l'EMAR (correspondant à la direction de la lecture zéro) ou d'un objet, sont alors équivalents (à la constante γ près). La déclinaison magnétique 'D' représente l'angle entre méridiens magnétique et géographique locaux. Alors que 'γ' est obtenu de manière exacte sans recours à une mesure physique, il n'en est rien pour 'D' dont la valeur est entachée d'une erreur résiduelle de classe ½°.

Si $A_{mk}$ est l'azimut géographique sous lequel un système optronique 'm' observe un objet 'k' et si $L_{mk}$ est la lecture horizontale de l'EMAR du système optronique m lorsque la direction d'observation (ou Ligne de Visée ou LdV) du système optronique optronique est alignée sur l'objet 'k', alors le gisement $G_m$ du système optronique vérifie la relation élémentaire :

$$\overline{G}_m = \overline{A}_{mk} - L_{mk}$$

Le gisement 'G' d'un système disposant d'un EMAR correspond à l'azimut géographique de la direction correspondant au zéro de sa lecture horizontale. Lors de son stationnement, l'EMAR est positionné à l'horizontale au moyen d'un niveau à bulle ou au moyen d'une procédure automatique (telle que la configuration de mesure d'attitude par exemple ou encore en comparant des mesures verticales d'un EMAR 2 axes avec celles d'un inclinomètre aligné avec la LdV du système optronique).

Le procédé selon l'invention est un procédé collaboratif basé sur :

-    l'observation au moyen d'au moins deux systèmes optroniques non co-localisés (c'est-à-dire respectivement situés en des positions distinctes) d'un à plusieurs objets communs de la scène, ces objets étant de position et de direction inconnues, (la direction d'orientation entre chaque système optronique et ce (ou ces) objet(s) est inconnue(s)) ; la seule condition nécessaire pour un objet est d'être suffisamment distinct du fond de façon à pouvoir être acquis par lesdits systèmes optroniques délocalisés,

- la réalisation de mesures sur ces objets, de manière autonome par chacun des systèmes optroniques,
- l'échange entre systèmes optroniques :

- d'au moins deux positions prédéterminées de systèmes optroniques et
- de mesures sur ces objets.

On désigne le dispositif d'ensemble des systèmes optroniques collaborant, par « système collaboratif ».

L'objet peut correspondre à une structure artificielle ou naturelle de la scène. Il peut être fixe ou mobile.

Avant de lancer l'étape d'acquisition des observations, on détermine les systèmes optroniques qui vont collaborer, les équipements à utiliser et les objets à mesurer, en vue de collecter les mesures qui contribueront au mieux à la fonction calcul de Nord. On optimise la collaboration entre systèmes en déterminant les objets de la scène qui seront utilisés et/ou des groupes de systèmes optroniques destinés à collaborer.

On évalue tout d'abord si les ressources disponibles (systèmes optroniques, équipements disponibles sur les systèmes optroniques, position d'objets susceptibles de faire l'objet de mesure) permettent d'évaluer les gisements à estimer (sur un ou plusieurs systèmes optroniques) selon l'objectif de qualité assigné, aussi désigné PGS pour précision souhaitée de gisement.

On désigne par PGE la précision estimée du gisement, par PGS la précision de gisement souhaitée (seuil de précision souhaité) prédéterminée, et par PGT la précision de gisement théorique, prédite d'après le calcul en fonction du choix d'une configuration de collaboration.

Lorsqu'on souhaite disposer du gisement avec une précision prédéterminée PGS (pour précision souhaitée de gisement), une ou plusieurs configurations collaboratives sont définies (étape A1) par l'unité de traitement de S1, ou toute autre unité qui disposerait des informations relevées et communiquées par les autres systèmes, une configuration collaborative comportant plusieurs systèmes optroniques et un ou plusieurs objets communs, et on réalise les étapes suivantes préalablement aux mesures, au moyen de l'unité de traitement de S1 :

a) on calcule une précision de gisement théorique PGT pour une configuration collaborative (étape A2),

b) lorsque PGT $\leq$ PGS (étape A3), on valide la configuration collaborative sinon on réitère les étapes a et b pour une autre configuration collaborative.

Pour atteindre la PGS on détermine parmi l'ensemble des ressources disponibles (systèmes optroniques, dispositifs de mesure, zones accessibles) une configuration minimale offrant une Précision de Gisement Théorique (PGT) la plus proche de PGS. On évalue tout d'abord une Précision de Gisement Théorique (PGT) avec un calcul basé sur l'information apportée par la géométrie de l'ensemble des systèmes optroniques (aussi désigné réseau) ou par la position des systèmes, par la nature des mesures disponibles (mesures qui seront utilisées, telles que : angle, distance, élévation, position, etc, qui est la nature de ces mesures à ne pas confondre avec les valeurs des mesures exprimées en nombre de degrés, de mètres, en coordonnées géographiques, etc) et par les caractéristiques statistiques des erreurs de ces mesures (biais, moyenne, écart-type, distribution, ...) ; ceci sans mise en œuvre effective de mesures, c'est-à-dire sans mesurer leurs valeurs.

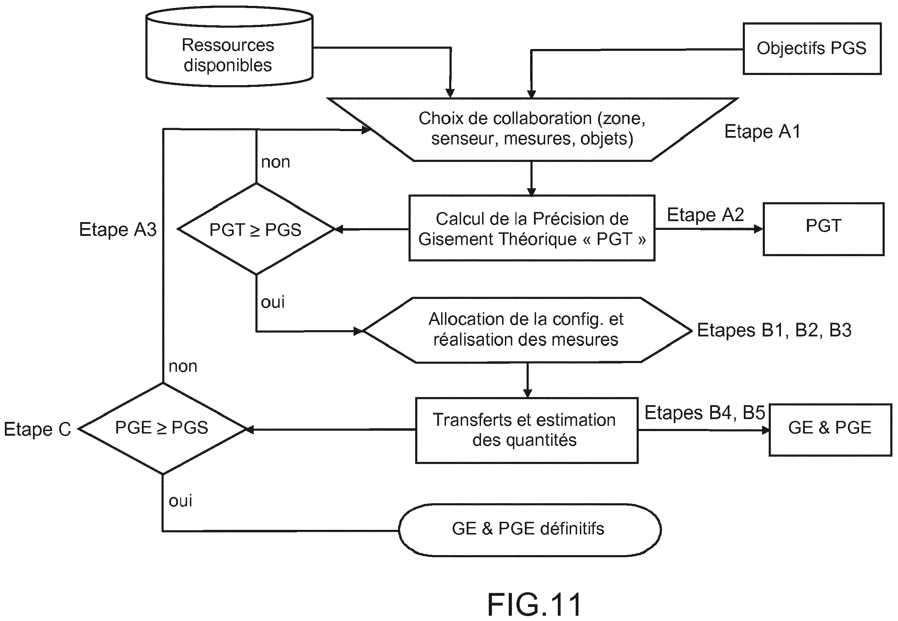

De préférence, on procède de la manière incrémentale suivante comme illustré figure 11, GE étant le gisement estimé aussi noté $\overline{G_1}$.

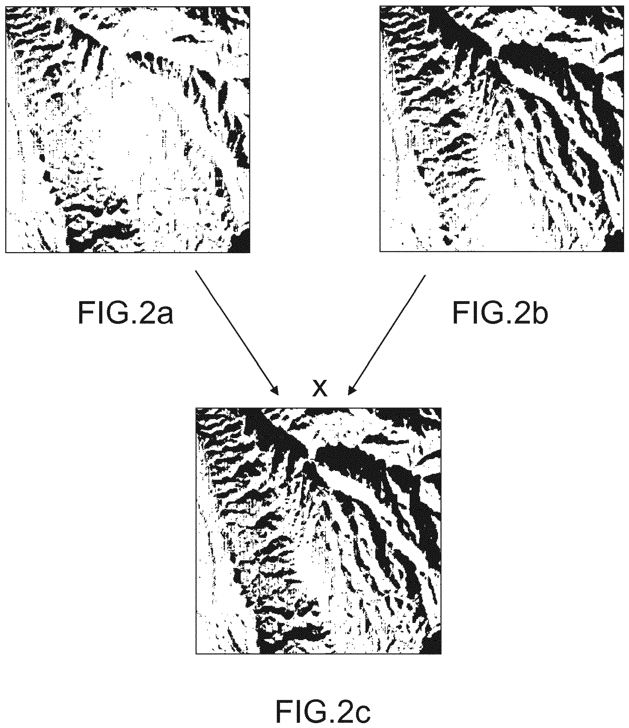

On commence de manière naturelle avec le choix de 2 systèmes S1, S2 et on recherche une collaboration entre eux par exemple limitée aux mesures sur un objet unique 'visible' (K=1) depuis les 2 systèmes (cf fig 2) en cherchant un objet dont la position a priori inconnue donne la meilleure PGT.

Si la PGT est compatible de la PGS (étape A3) on valide la configuration collaborative.

Si la PGT est insuffisante, on suppose que l'objet occupe une position correspondant au lieu pour lequel cette PGT est la meilleure possible (même si elle est insuffisante), et on recherche un objet supplémentaire permettant d'améliorer la PGT. On itère ainsi jusqu'à atteindre un seuil sur un nombre maximal d'objets (K=4 par exemple mais ce nombre peut être ajusté de manière à respecter une durée acceptable d'échange d'informations et de prise de mesures ou afin d'atteindre un degré de liberté suffisant en regard du nombre de quantités à estimer).

- Si la PGT est compatible de la PGS on valide la configuration collaborative.
- Si la PGT reste encore inférieure à la PGS, on considère un système optronique supplémentaire s'il existe (S3) en repartant d'une collaboration sur un nombre minimal d'objets (K) :

∘ Si la PGT est compatible de la PGS on valide la configuration collaborative.

∘ Si la PGT est insuffisante, on suppose que l'objet occupe une position correspondant au lieu pour lequel cette PGT est la meilleure possible (même si elle est insuffisante), et on recherche un objet supplémentaire permettant d'améliorer la PGT. On itère ainsi jusqu'à atteindre un seuil sur le nombre maximal d'objets.

■ Si la PGT reste encore inférieure à la PGS, on considère un système optronique supplémentaire s'il existe, et on réitère le processus avec ce système optronique supplémentaire en se limitant à un nombre maximal de systèmes optroniques (M=5 par exemple).

■ Si la PGT reste encore inférieure à la PGS, on déplace si possible l'un des systèmes optroniques sur la zone, en recherchant essentiellement la performance optimale selon le paramètre de positionnement relatif des systèmes optroniques ; on fixe par exemple un premier objet collaboratif sur le critère de visibilité commune et sur un caractère remarquable de l'objet susceptible de faciliter son acquisition depuis un autre système optronique.

Ces objets peuvent être sélectionnés à partir de critères de visibilité entre systèmes et/ou de visibilité des objets de la scène pour chaque système (objets dégagés, et/ou situés en altitude par exemple). Le choix de l'objet peut obéir à des règles préétablies sur des critères utilisant :

- la hauteur de l'objet par exemple afin de faciliter leur visibilité commune depuis les différentes positions des systèmes optroniques, et/ou l'élévation du sol sur la zone (accessible via un d'un modèle numérique de terrain MNT),
- des spécificités dans l'image optronique en termes de signature radiométrique (gradient ou contraste) de façon à être extraites et caractérisées automatiquement par des traitements d'image classiques de la littérature comme à titre non limitatif : SIFT pour Scale-invariant feature transform, SURF pour Speeded-Up Robust Feature, HOG pour Histogram of Oriented Gradients, GLOG pour Gradient Location and Orientation Histogram) .
- la répartition ou densité spatiale des détections précédentes projetées dans la scène de façon à choisir un objet candidat aux mesures suffisamment éloigné d'un autre objet voisin afin d'éviter une éventuelle ambiguïté d'association de l'objet entre systèmes répartis.

Ils peuvent aussi être sélectionnés dans une zone prédéfinie et l'association des objets destinés aux mesures entre systèmes est alors guidée pour faciliter l'orientation calculée au moyen des positions des systèmes.

De manière facultative, des données de type Modèle Numérique de Terrain (MNT ou DTM pour Digital Terrain Data en anglais) peuvent être utilisées dans le processus. Lorsqu'elles sont disponibles, ces données peuvent être utilisées de plusieurs manières :

- pour prédéterminer des zones candidates au partage d'entité. On peut privilégier des zones situées au voisinage des lignes crêtes ou encore au fond de vallées (talweg) qui peuvent être directement déterminées à partir des données MNT,
- pour déterminer si une zone réduite (ou objet pré-localisé de manière approché) est visible depuis la position du système optronique,
- pour évaluer au niveau d'un système optronique particulier devant réaliser plusieurs prises de mesure sur un objet donné au cours d'un cheminement, une zone d'acquisition à privilégier pour le choix de l'objet (visibilité depuis plusieurs points de vue) ainsi que les lieux candidats à la prise de mesure,
- pour évaluer, à partir des positions connues de plusieurs (au moins 2) systèmes optroniques, des zones ou positions communes vues par ces différents systèmes optroniques en vue de privilégier des zones d'objet d'intérêt pour le partage d'information.

Pour illustrer ce dernier point, on se reporte aux figures 2. Les figures 2a, 2b représentent des cartes de visibilité $CV_1$ et $CV_2$ respectivement obtenues depuis deux positions (P1, P2) différentes sur le terrain ; elles sont obtenues à partir d'un MNT établi sur une zone géographique échantillonnée en coordonnées topographiques sur 5km x 5km, centrée sur une position géographique. Ces cartes de visibilité sont des cartes binaires de valeur 0 (noire) si le point n'est pas vu et de valeur 1 (blanc) si le point de la scène correspondant est visible depuis la position du système optronique. La figure 2c représente la carte de visibilité commune $CV_{12}$ aux positions P1 et P2. Elle s'obtient simplement comme produit des deux cartes de visibilité $CV_1$ en P1 et $CV_2$ en P2. Un objet situé sur une cellule blanche de la carte $CV_{12}$ est vu à la fois par le système S1 en P1 et le système S2 en P2. Naturellement la probabilité de trouver une zone contenant un objet visible depuis P1 et P2 est toujours inférieure (ou égale en cas extrême de terrain plat) à la probabilité d'en trouver un depuis P1 ou depuis P2.

Si N systèmes sont amenés à tous collaborer sur un objet depuis leurs 'N' positions, la zone candidate est une carte de visibilité d'ensemble 'CVE' déterminée d'après les cartes de visibilité individuelles '$CV_n$' depuis chaque position

de système optronique avec :

$$CVE_{1...N} = \prod_{n=1}^{N} CV_n$$

De manière moins contraignante, si l'on recherche la carte de visibilité 'CVT' pour un ensemble de systèmes collaboratifs correspondant à l'ensemble des zones géographiques sur laquelle un objet est vu par un minimum de η systèmes, la carte de visibilité 'CVT' est donnée d'après :

$$CVT_{1...N} = \left( \sum_{n=1}^{N} CV_n \right) \geq \eta\, I_{WH}$$

où le nombre minimal de systèmes pour une collaboration possible correspond de manière la moins contraignante à η=2 (objet visible par uniquement 2 systèmes), W et H sont les nombres de nœuds des grilles du MNT, et 'I_{WH}' la matrice identité de taille WxH.

L'exploitation de MNT est réalisée par l'unité de calcul. Une Interface Graphique adaptée est proposée à l'utilisateur en vue de faciliter l'acquisition d'objet avec :

- la désignation de zone,
- la désignation de point de passage,
- la présentation de zones spécifiques comme des lignes de crêtes,
- la visualisation d'inter-visibilité de zones (point à zone) depuis la position courante du système optronique ou multipoints à zone en fusionnant des visibilités d'une même zone vue par plusieurs systèmes optroniques.

Pour atteindre une performance (ou précision) prédéfinie, les objets peuvent aussi être sélectionnés selon :

- le type de mesures sur les objets et le type d'erreurs associées,
- des contraintes imposées par l'environnement électromagnétique pouvant influer sur les dispositifs de mesure disponibles, ou plus généralement
- leurs contraintes d'utilisation effective.

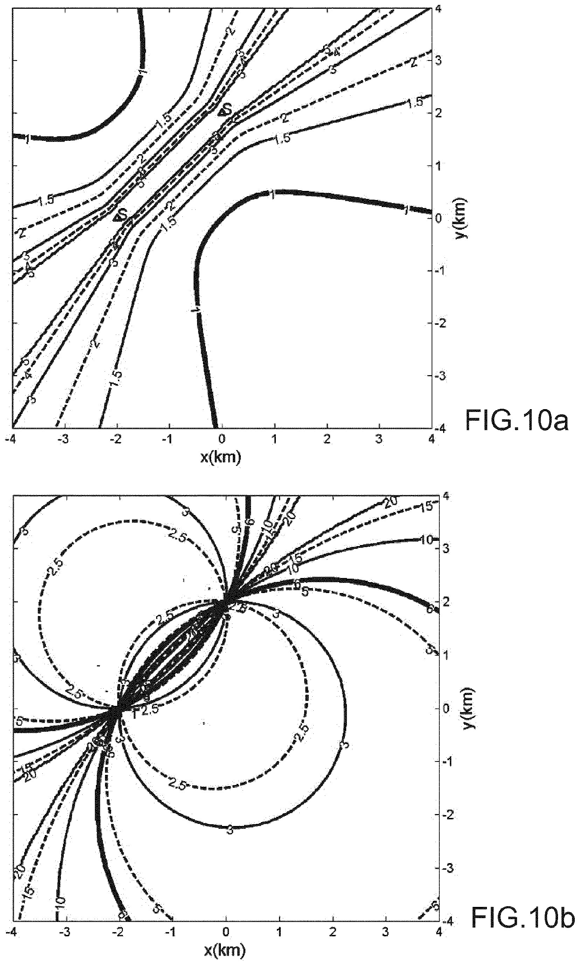

Un exemple de sélection selon un critère de performance des mesures sur les objets est donné plus loin, dans le cadre d'une collaboration de 2 systèmes optroniques devant estimer leurs gisements sur un objet unique (configuration 2.4). Une représentation de la performance accessible pour le gisement (PGT) selon la position de l'objet est illustrée figure 10a et une représentation de la performance accessible pour la position de l'objet selon la zone où se situe l'objet est illustrée figure 10b. Cette variation spatiale de la performance illustre notamment que la performance du gisement PGT dépend de la zone où se trouve l'objet pour collaborer. Pour accéder à une performance sub-mrd du gisement, l'objet unique doit être situé dans une zone correspondant au ¼ en bas à droite de la figure.

En fixant la position de l'objet O1 au sein d'une zone appropriée, le gisement pourrait être estimé avec une meilleure performance en utilisant un objet 02. On optimise cette performance, en déplaçant l'objet 02 sur l'ensemble de la zone ; la performance serait pour l'essentiel de la zone, meilleure en chaque position (excepté dans le cas où les 2 objets seraient confondus ou si 02 est aligné avec S1 et S2).

Dans le cas d'une zone peu propice (désert, mer), les objets communs peuvent être mobiles (véhicule terrestre, navire, aéronef). Bien que dans le cas général ces objets soient de position inconnue, certains peuvent être des amers terrestres ou célestes ; cela diminue le nombre d'objets à observer et/ou améliore la qualité des résultats des calculs.

Des objets communs ayant été sélectionnés et partagés entre les systèmes optroniques concernés, les étapes suivantes (étapes B1, B2, B3, B4, B5, C) sont mises en œuvre. On va prendre le Nord (=Nord géographique) comme exemple de direction d'orientation à estimer, mais toute autre direction peut être choisie.

Le procédé selon l'invention est mis en œuvre au moyen de systèmes optroniques qui collaborent c'est-à-dire qui communiquent entre eux pour échanger des informations.

Une configuration de systèmes collaborant est caractérisée par les éléments suivants :

- le nombre des systèmes collaborant,
- le type de dispositif disponible et mis en œuvre pour la collecte des mesures sur des objets de la scène depuis chaque système,

- le nombre d'objets de la scène sur lesquels sont réalisées les mesures,
- la (ou les) quantité(s) physique(s) estimée(s) (gisement, position, attitude, ...).

Le trait commun de ces configurations est :

- de mettre en œuvre au moins 2 systèmes collaborant,
- d'exploiter des observations dont les positions de systèmes optroniques stationnés sur au moins 2 positions distinctes,
- de disposer d'un EMAR sur au moins l'un des systèmes collaborant (S1),
- d'effectuer des mesures sur au moins un objet 'k' de la scène,
- d'estimer au minimum le gisement de l'EMAR du système S1 collaborant.

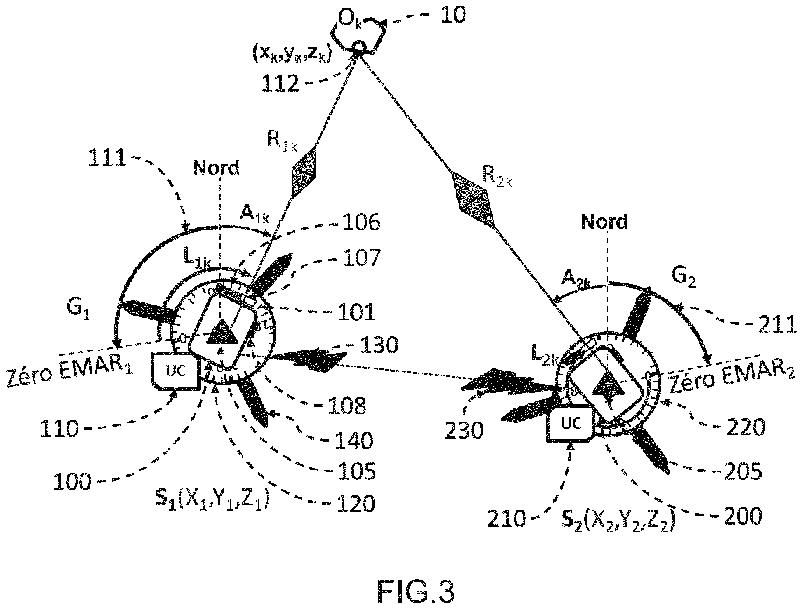

Un exemple de configuration à 2 systèmes optroniques collaborant S1 et S2, et avec 1 objet commun Ok est montré figure 3.

De manière générale, le procédé selon l'invention permet d'estimer avec précision dans un repère géographique le Nord d'un système optronique situé à une première position et désigné premier système optronique S1. Il est équipé :

- d'un dispositif d'acquisition, 101 pouvant produire des images soit avec un détecteur visible ou/et infra-rouge (IR) soit directement sur la pupille de l'utilisateur avec une voie directe optique ou une jumelle, produisant des images d'au moins un objet k dans une scène (k varie de 1 à K, avec K le nombre d'objets de la scène, $K \geq 1$ ; dans l'exemple de la figure K=1), tel qu'une caméra (dont le champ de vision ou FoV peut varier de quelques degrés pour améliorer la portée jusqu'à 360° pour une vision hémisphérique basée sur un détecteur de type fish-eye) ou des jumelles équipées d'un pointeur, la direction d'orientation entre S1 et chacun de ces K objets est inconnue, et
- d'un dispositif (EMAR ou « Equipement de Mesure Angulaire horizontal Relatif ») de mesure d'angle relatif $L_{1k}$ entre S1 et chaque objet k, et monté sur un trépied de manière à être le plus horizontal possible ou plus précisément de manière à ce que son inclinaison soit de l'ordre de la précision visée pour le calcul de la direction, soit de l'ordre du mrd, cet alignement pouvant être indépendamment réalisé au moyen d'une procédure de stationnement ;
- d'un dispositif de mesure d'élévation $E_{1k}$ entre S1 et chaque objet k (par exemple EMAR 2 axes seul qui assure la double fonction de mesure d'angle relatif et d'élévation, ou inclinomètre),
- d'une unité de calcul 110 intégrée au système optronique ou externe par exemple sous forme de tablette, PDA, ..., apte à faire les calculs et plus généralement à mettre en œuvre le procédé d'estimation du gisement de l'EMAR d'un système ou de plusieurs,
- de moyens de communication 130 avec un ou plusieurs autres systèmes optroniques S2, S3, ..., Sm, ... SM, avec $M \geq 2$. Ces moyens de communication peuvent être intégrés au système optronique Sm, ou à l'unité de calcul 110, ou prendre une forme commune plus standard. A priori le réseau de communication est déployé en extérieur sur un théâtre terrestre, aéroporté, naval ou/et satellitaire. Les communications peuvent être assurées par une liaison radio ou phonique ou téléphonique ou optique, .... Le réseau de communication peut être un réseau GSM, ou UTMS, via satellite ou un autre réseau de télécommunication. Les échanges d'informations peuvent être réalisés par des moyens externes conventionnels (liaison hertziennes ou numériques, via antennes ou satellites, internet si les systèmes optroniques sont connectés au réseau, talkie-walkie, morse ...). On n'exclut pas le fait que les systèmes optroniques peuvent aussi directement dialoguer par connexion à un réseau physique de type Ethernet/fibre optique dès lors que l'unité de calcul du système optronique Sm ou l'unité de calcul externe 110 peuvent y être connectées. On peut aussi envisager une communication optique entre systèmes,
- éventuellement d'un support 140 pouvant être un trépied posé au sol ou sur un plan de référence d'un véhicule,
- éventuellement une Pan & tilt ou plateforme motorisée jouant le rôle d'EMAR 130 ; supportée par 140, elle permet d'orienter automatiquement le dispositif d'acquisition selon une direction de commande.

S1 est généralement équipé de moyens de positionnement « EMPG » ou « Equipement de Mesure de Position Géographique » sous forme par exemple de récepteur GNSS 105 (GPS, GLONAS, ...). Sauf indication contraire, on considère que S1 est équipé d'un EMPG.

S1 est généralement équipé d'un EMED harmonisé avec l'axe de la LdV du système S1, tel qu'un télémètre laser avec voies d'émission 106 et réception 107.

Selon l'invention S1 coopère avec au moins un autre système S2,..., Sm, ... SM, avec $M \geq 2$, chaque autre système optronique (Sm) étant équipé :

- d'un dispositif d'acquisition optronique (visible ou IR) 201 apte à former des images d'un objet Ok vu à la fois par S1 et par Sm et désigné objet commun à S1 et Sm ; il s'agit d'une caméra ou de jumelles généralement équipées d'un EMED de type télémètre laser harmonisé avec la LdV du système Sm,

- de moyens 230 de communication avec S1 compatibles avec ceux de S1 130 pour l'échange des observations,
- et de préférence d'une unité de calcul interne 210 utilisée notamment lorsque Sm calcule également son gisement.

Sm est généralement équipé d'un EMPG sous forme par exemple de récepteur GNSS 205. Sauf indication contraire, on considère que Sm est équipé d'un EMPG.

Les dispositifs d'acquisition des systèmes optroniques peuvent être aussi des capteurs optroniques omnidirectionnels qui intègrent nativement un EMAR sous forme de leur détecteur à imagerie. Ces derniers peuvent indifféremment être dioptriques ou catadioptriques. Dans ce type de dispositif d'observation, l'axe de la LdV est orienté au voisinage de la verticale et le capteur omnidirectionnel est monté sur une plate-forme (aérienne) ou un trépied (terrestre). La différence essentielle avec les capteurs optroniques à plus petit champ est que le détecteur optronique joue ici directement le rôle d'EMAR sur le tour d'horizon. Les paramètres internes du capteur omnidirectionnel, qui permettent de décrire les trajets des photons en interne au moyen de lois paramétriques, sont supposés avoir été estimés au préalable par un processus de calibration. A défaut, l'observation commune d'un nombre d'objets en nombre suffisant peut permettre de mieux estimer ou raffiner ces lois géométriques qui dépendent de l'architecture du système optronique et conditionne la formation des images.

Ces capteurs omnidirectionnels sont particulièrement intéressants pour réaliser des veilles panoramiques afin de pister des objets ou reconstruire des scènes en 3D dans les zones de visibilité communes des systèmes optroniques. La qualité d'orientation absolue du capteur omnidirectionnel améliore le référencement EMAR spatial des objets suivis et permet de les superposer à d'autres informations géographiques. Ceci est détaillé en fin de description.

Pour les configurations utilisant des EMED, on peut utiliser comme dispositif d'acquisition, celui équipant les téléphones portables de nouvelle génération, en outre munis d'une fonction de télémétrie.

Les positions des objets sur lesquels sont effectuées les mesures, sont inconnues. Les directions d'orientation entre chaque système optronique et les objets sont inconnues. On ne dispose par conséquent ni des coordonnées géographiques, ni des directions géographiques (azimut, élévation) des objets sur lesquels les mesures sont réalisées.

Un premier système optronique S1 signifie un système optronique situé en une première position ; ... ; un $m^{\text{ième}}$ système optronique Sm signifie un système optronique situé en une $m^{\text{ième}}$ position. Il peut s'agir de systèmes optroniques distincts ou d'un même système optronique qui est transportable ou portable et a été déplacé d'une position à l'autre.

On peut même considérer un seul système optronique qui profite de son mouvement sur le terrain pour engranger des observations sur des objets de son choix. Il s'agit en quelque sorte d'un système auto-collaboratif. On note qu'au cours du déplacement les mesures réalisées sur un objet particulier ne sont pas forcément toutes de même nature. On peut par exemple illustrer cet aspect en considérant un système optronique équipé d'une caméra portable avec récepteur GNSS, télémètre et inclinomètre qui vont permettre de réaliser des mesures au cours du déplacement. Une fois la course terminée, l'utilisateur peut par exemple monter sa caméra sur un EMAR de type goniomètre et estimer son gisement, (son nord ou azimut géographique correspondant à la valeur zéro de la lecture horizontale du goniomètre). Pour l'une au moins de ces positions (par exemple la dernière) la partie légère du dispositif (caméra ou jumelle) est montée sur l'EMAR lui-même porté sur un trépied. Cette mise en œuvre présente pour principal avantage de réduire le délai de collecte de mesure et le volume d'équipement nécessaire et permet aussi de se dispenser du besoin en communication des observations qui peuvent être gérées en interne du système.

Le procédé selon l'invention consiste à estimer le gisement d'au moins un système soit $\overline{G_1}$ pour le système S1, ce gisement représente l'azimut géographique correspondant à la lecture zéro de son EMAR. Dit autrement il s'agit de trouver la direction du Nord géographique depuis la position de S1 ou encore calibrer l'EMAR de S1 en estimant son gisement.

Le procédé selon l'invention comporte les étapes suivantes :

- déterminer deux positions géodésiques parmi celles des systèmes optroniques (S1, S2, ..., Sm, ...SM) ; ces positions sont déterminées par leurs EPMG ou, en l'absence de 2 positions Sm connues, celles-ci peuvent accessoirement :

  ◦ soit être déterminées par triangulation en utilisant des amers, ou par d'autres méthodes connues de l'homme du métier ;
  ◦ soit être déduites par le processus en réalisant des mesures sur d'autres objets de position connue ; dans ce cas, le nombre total de positions connues entre système optronique et objet doit être $\geq 2$.

- acquérir au moins un objet commun k au moyen du dispositif d'acquisition de S1,
- mesurer l'angle relatif $L_{1k}$ au moyen du dispositif de mesure d'angle relatif (EMAR) de S1, ainsi que $E_{1k}$,
- acquérir l'objet k au moyen des autres systèmes optroniques collaborant avec S1,
- réaliser des mesures supplémentaires (de distance $R_{mk}$ et/ou d'élévation $E_{mk}$ et/ou d'angle relatif $L_{mk}$ et/ou d'azimut approché $A_{0mk}$) au moyen des systèmes optroniques collaborant S1, S2, ..., Sm, ..., SM,

- les positions des autres systèmes et lesdites mesures (=$L_{1k}$+ $E_{1k}$ +mesures supplémentaires) constituant des observations, communiquer à S1 les observations ou plus précisément celles dont S1 ne dispose pas lui-même (S1 connaît par exemple sa position ainsi que $L_{1k}$ et $E_{1k}$),
- calculer le gisement de S1 (le Nord) à partir de ces seules observations, ceci étant effectué par S1.

Remarque : l'ordre de la plupart de ces opérations peut être changé, seul le calcul de gisement est réalisé après collecte de toutes les observations.

On a indiqué que le système S1 commence à observer avant les autres systèmes Sm (m=2..M), mais il est bien entendu que l'ordre d'observation par les différents systèmes n'est pas imposé.

S1 peut aussi calculer les gisements des autres systèmes optroniques ($G_2$, ..., $G_m$, ..., $G_M$) et leur communiquer le résultat dans la mesure où il existe également des moyens de communication de S1 vers ces autres systèmes optroniques. Selon une alternative, certains de ces autres systèmes qui sont équipés de moyens de calcul et qui ont reçu les observations nécessaires, calculent eux-mêmes leur gisement.

S1 calcule le gisement $\overline{G_1}$ (ou de l'azimut correspondant à la valeur zéro) de son EMAR 120 à partir des observations et en utilisant les notations suivantes :

◦ les coordonnées cartésiennes des positions des systèmes optroniques coopérants sont notées ($X_m$, $Y_m$, $Z_m$) ; elles sont des coordonnées cartésiennes locales en général connues et obtenues après transformations des coordonnées géodésiques (longitude, latitude, altitude ou hauteur sur l'ellipsoïde terrestre) issues de la mesure par l'EMPG ou peuvent être prédéterminées via un autre moyen ;
◦ l'élévation de la visée depuis le système optronique m sur l'objet k est $E_{mk}$, qui est en général connue ;
◦ la lecture angulaire de l'EMAR sur le système optronique m vers l'entité k est noté $L_{mk}$, en général connue ;
◦ la distance entre le système optronique m et l'entité k est $R_{mk}$, en général connue d'après l'EMED ;
◦ le gisement $\overline{G_m}$ du système optronique m est inconnu et constitue la solution à la recherche de Nord ;
◦ les coordonnées cartésiennes des objets sur lesquels portent les mesures sont ($\overline{x_k}$, $\overline{y_k}$, $\overline{z_k}$) ; elles sont en général inconnues.

Remarque sur les alignements d'équipements : l'EPMG est de préférence situé au voisinage du centre de phase de l'EMED lui-même harmonisé avec la LdV du système optronique lui-même orthogonal à l'axe d'élévation de l'EMAR. Ces opérations d'estimation d'alignement peuvent être réalisées via des procédures de calibration usine ou lors de procédures ou d'étapes d'acquisition spécifiques sur le terrain par chaque système avant collaboration. Les erreurs résiduelles doivent être limitées de façon à ne pas dégrader le bilan au regard de l'objectif PGS alloué de performance (et typiquement inférieure, pour chaque allocation, à la moitié de la performance de mesure).

En toute rigueur, une direction obtenue depuis un système S2 se transforme en une direction très légèrement différente, et ce d'autant plus que les 2 systèmes sont proches, dans le repère local du système S1. La transformation est une rotation dont les éléments sont simplement fixés d'après les longitudes et latitudes des 2 systèmes.

Plus précisément, l'exploitation des mesures de direction nécessite une rectification réalisée comme suit. Une direction $u_{2k}$ mesurée sur l'objet 'k' depuis l'origine du repère géographique local du système S2, correspondra à une direction rectifiée $u_{2k}$' d'azimut et d'élévation légèrement différents lorsqu'ils seront considérés dans le repère cartésien dont les axes correspondant au repère géographique local du système S1. En pratique, si l'on désigne par ($\lambda_m, \varphi_m$) les longitude et latitude du senseur '$S_m$' pour $m \in \{1,2\}$ on a :

$$\mathbf{u}_{2k}^{'} = \begin{pmatrix} \sin\varphi_2 \sin\varphi_1 \cos\Delta\lambda + \cos\varphi_2 \cos\varphi_1 & \sin\varphi_2 \sin\Delta\lambda & \sin\varphi_2 \cos\varphi_1 \cos\Delta\lambda - \cos\varphi_2 \sin\varphi_1 \\ \sin\varphi_1 \sin\Delta\lambda & \cos\Delta\lambda & \cos\varphi_1 \sin\Delta\lambda \\ \cos\varphi_2 \sin\varphi_1 \cos\Delta\lambda - \sin\varphi_2 \cos\varphi_1 & -\cos\varphi_2 \sin\Delta\lambda & \cos\varphi_2 \cos\varphi_1 \cos\Delta\lambda + \sin\varphi_2 \sin\varphi_1 \end{pmatrix} \mathbf{u}_{2k}$$

où $\Delta\lambda = \lambda_2 - \lambda_1$. Ce qui permet d'obtenir ainsi les angles d'azimut et d'élévation rectifiés, qui caractérisent 'une direction exprimée dans le repère local de S2, dans le repère local de S1.

Pour 2 systèmes proches, la matrice de transformation est proche de l'identité, mais les termes du premier ordre suffisent à produire un écart de l'ordre du mrd en azimut sur la direction rectifiée pour des systèmes distant de moins de 10km. Outre les séparations en longitude et latitude des deux systèmes, la latitude influence aussi l'écart entre angles d'origine et réctifiés avec des valeurs croissantes en s'éloignant de l'équateur.

La rectification des mesures de site peut en outre faire l'objet de correction de réfraction atmosphérique. Cette correction est d'autant plus importante que les visées des senseurs sur les objets sont très obliques. Elle peut être réalisée sans information additionnelle en utilisant une atmosphère standard mais il sera plus précis d'utiliser des paramètres météorologiques locaux comme température, pression et pression partielle de vapeur d'eau

Dans la suite on simplifie les notations en oubliant l'indice 'prime' sur les mesures d'azimut et d'élévation ce qui suppose que les angles indiqués correspondent à des directions pré-rectifiées.

Dans les calculs, les inconnues sont indiquées coiffées d'un trait comme : $\overline{G}$ . Les grandeurs décrivant les objets sont affectées d'un symbole en minuscule. Les grandeurs relevées par le système optronique ont un symbole avec majuscule.

Avec des équipements ayant des performances courantes (EMPG donnant une précision de différence de position de classe métrique, EMAR de précision 0.5 mrad, EMED de S1 de la classe 2 m à $1\sigma$), le procédé selon l'invention permet à S1 (et éventuellement d'autres systèmes optroniques S2, .., Sm, ...) de déterminer son gisement avec une précision de la classe du milli-radian.

Un avantage de ce système collaboratif est de ne pas imposer de visibilité entre tout ou partie des systèmes. Cela facilite la mise en place et étend les conditions d'utilisation sur une zone avec masquage (relief, forêt, agglomération, ...). Bien que non visibles entre eux, deux systèmes ont bien entendu toute latitude et une probabilité forte de pouvoir observer au moins un objet commun dans la scène.

Distinguant une configuration du réseau d'après le nombre de systèmes coopérant, la configuration matérielle sur chaque système, le nombre d'objets sur lesquels sont réalisées les mesures ainsi que les grandeurs physiques estimées (comme gisement, attitude ou caractéristique de position / vitesse d'objets), on comprend aisément qu'il existe une infinité de combinaisons possibles et donc de configurations. La suite en décrit un échantillon représentatif à titre non limitatif. On considère que la complexité d'une configuration décroit avec :

- le nombre de systèmes coopérant,
- le nombre et la précision des équipements mis en œuvre,
- le nombre d'objets sur lesquels les mesures sont partagées,
- le nombre des grandeurs estimées (gisement, attitude, coordonnées des objets et/ou des systèmes) par le processus.

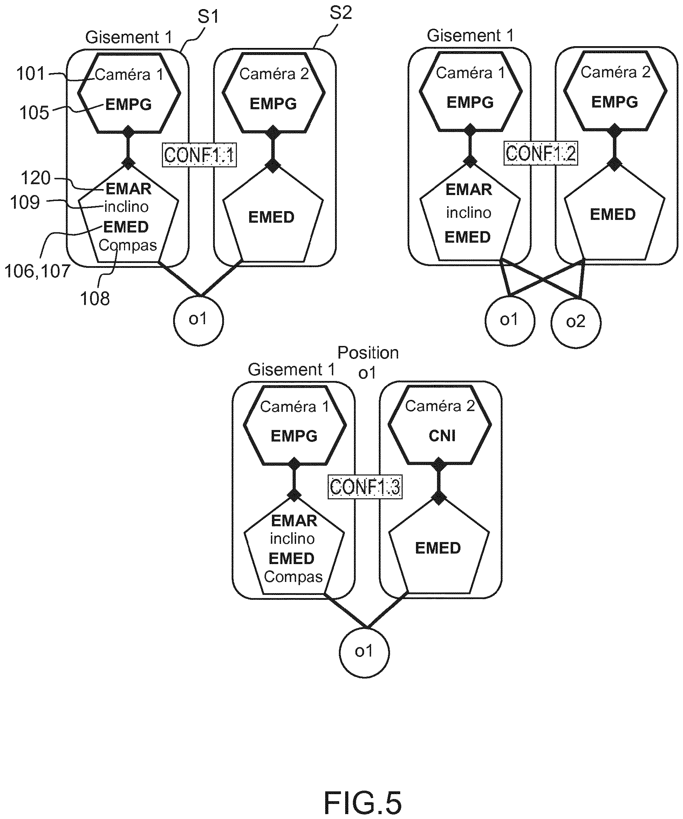

Dans la suite les configurations 1.1, 1.2 et 1.3 décrites en relation avec les figures 5, sont des configurations avec une spécificité de collaboration limitée à 2 systèmes collaborant, le seul système S1 devant estimer son gisement.

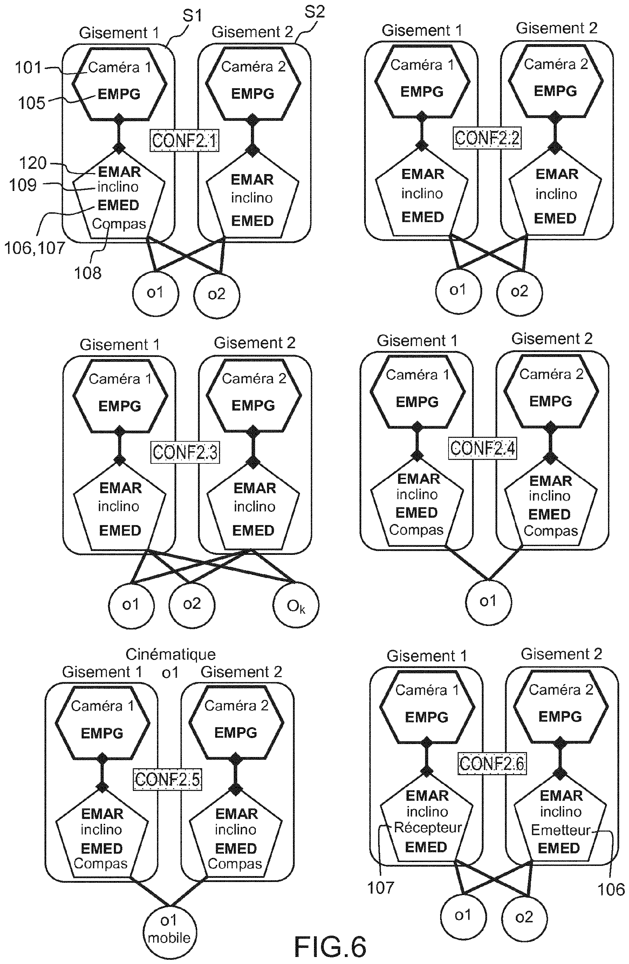

Les configurations 2.1 à 2.6 décrites en relation avec les figures 6 sont encore des configurations limitées à 2 systèmes collaborant mais devant estimer cette fois au moins chacun leur gisement (ainsi que d'autres caractéristiques selon la configuration considérée).

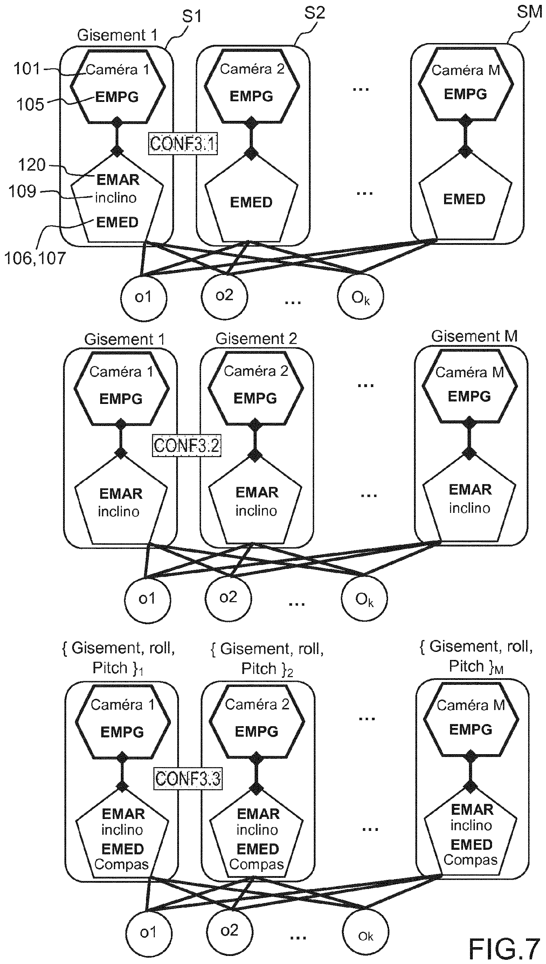

Les configurations 3.1, 3.2 , 3.3 décrites en relation avec les figures 7 concernent davantage de systèmes collaborant (M>2).

Les configurations 4 présentent une spécificité de collaboration à plusieurs systèmes disposant partiellement d'EPMG (4.1), et avec d'exploitation d'amer (4.2).

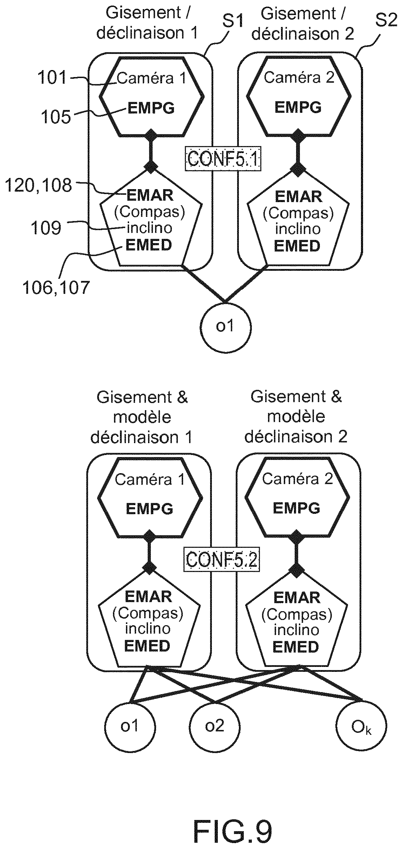

Les configurations 5.1 et 5.2, décrites en relation avec les figures 9, correspondent à des collaborations avec des systèmes portables disposant d'EMAR plus légers et moins performants de type compas magnétique ou MEMS.

**Configuration 1.1**

On va tout d'abord décrire un premier mode de calcul du Nord avec une configuration à deux systèmes optroniques collaborant S1 et S2 (ou tandem) sur un objet unique Ok (k=K=1) en vue de déterminer le gisement de l'EMAR de S1. Les mesures supplémentaires sont des mesures :

- de distance $R_{1k}$ entre S1 et l'objet Ok et $R_{2k}$ entre S2 et l'objet Ok,
- d'azimut approché $A_{01k}$ fourni par S1 et permettant de déterminer un gisement approché $G_{01}$ (au moyen de $G_{01} = A_{01k} - L_{1k}$) à une précision de quelques degrés près (meilleure que 5°) ; par azimut approché on entend une précision 10 fois moins bonne que la précision visée pour l'estimation du gisement $\overline{G_1}$, ou des autres gisements ou attitudes comme on le verra par la suite.

Pour effectuer ces mesures supplémentaires, les deux positions déterminées étant celles de S1 et S2 :

- Le premier système optronique S1 comporte en outre :

  ○ un EMED ou « Equipement de Mesure Electronique de Distance» de type télémètre avec un émetteur 106 et un récepteur 107, dont la direction est harmonisée sur l'axe du dispositif d'acquisition 101, apte à fournir la distance $R_{1k}$ entre S1 et l'objet Ok,
  ○ un compas magnétique 108, ou tout autre moyen apte à fournir un azimut approché $A_{01k}$ de l'objet Ok ; on indique plus loin une autre manière de l'obtenir.

- Et le second système optronique S2 comporte en outre un EMED de type télémètre avec un émetteur 206 et un récepteur 207, dont la direction est harmonisée sur l'axe du dispositif 201 d'acquisition de S2, et qui est apte à fournir la distance $R_{2k}$ entre S2 et l'objet Ok. On note que sans EMAR précis (de type goniomètre par exemple) S2 peut dans ce cas être un système léger de type caméra ou jumelle portable.

- Les acquisitions des deux systèmes sont effectuées sur un objet unique Ok,

- L'information calculée par le processus concerne :

  ○ le gisement estimé $\overline{G_1}$ de l'EMAR de S1,
  ○ les coordonnées estimées de l'objet $(\overline{x_k}, \overline{y_k}, \overline{z_k})$ qui s'obtiennent facilement une fois le gisement estimé,
  ○ les précisions théoriques sur ces grandeurs.

Le compas magnétique de S1 dispose par exemple d'une qualité de mesure d'azimut magnétique de la classe 10 mrad ; d'autre part, la qualité de connaissance de la déclinaison magnétique locale portée par les modèles mondiaux WMM/IGRF est de 8.5 mrad aux faibles latitudes. L'azimut géographique $A_{01k}$ se déduit de la lecture d'azimut magnétique $M_{1k}$ et de la déclinaison magnétique locale $D_{M1}$ par $A_{01k} = M_{1k} + DM_1$. Au bilan l'erreur de mesure dépasse en moyenne les 13 mrad et se dégrade lorsque le système optronique se déplace vers les pôles magnétiques. Ainsi, pris isolément les deux systèmes S1 et S2 sont incapables de remplir l'objectif permettant de localiser en moyenne un objet situé à 10km à 10m près. En effet d'une part S2 ne peut pas localiser l'objet. D'autre part S1 peut localiser l'objet avec une erreur de l'ordre de 130m du fait de son erreur angulaire de 13mrad en azimut du fait de sa limitation à estimer le nord avec une qualité absolue correspondant à celle de son compas. Le but de l'invention consiste à ce que S1 estime le nord avec une qualité conforme à l'objectif PGS, c'est-à-dire dans la catégorie du milli-radian.

Avec des amers, S1 peut trouver un Nord de la classe du mrad mais cette approche devient inopérante dès lors que le système se situe dans un environnement peu propice à l'acquisition d'amers (cas de scène désertique ou forestière) et/ou lorsqu'il doit procéder en opportunité

Bien que ne n'accédant pas à des objets de coordonnées géographiques connues, la configuration avec deux systèmes S1 et S2 permet selon l'invention d'estimer le gisement du système optronique S1 et donc de construire son Nord. Pour cela, les 2 systèmes optroniques S1 et S2 du tandem vont réaliser leurs mesures respectives sur un ou plusieurs (k={1 ,...,K}) objets communs Ok.

Une mesure collaborative est effectuée sur un premier objet Ok (k=1) visible par S1 et par S2 :

- Au moyen de son compas 108, S1 réalise une localisation approchée de l'objet tel qu'un détail topographique jugé pertinent. La pertinence d'un point se décline en matière de visibilité pour S2, et/ou de non ambiguïté sur le point commun de visée, et/ou de surface équivalente laser (ou "SEL").
- S1 envoie à S2 la localisation approchée et optionnellement dès lors que les moyens de communication 130 le lui permettent, une image de l'objet à mesurer. Comme moyens de communication S1 et S2 utilisent par exemple un téléphone portable. S2 reçoit la localisation approchée de l'objet Ok à mesurer.
- S2 recherche l'objet en utilisant la localisation approchée et sa position propre (via son EMPG) pour déterminer une direction de visée (azimut, élévation) et distance approchées, qu'il peut pointer à partir de la mesure 'approximative' de son compas 208. Ce pointage peut être manuel avec un capteur à petit champ d'acquisition, automatique avec une pan & tilt, inutile avec un capteur OMNI. Notons que la présence d'un compas sur S2 n'est pas nécessaire au calcul du gisement sur S1 mais qu'elle peut guider et raccourcir le délai d'acquisition d'objets communs entre les deux systèmes optroniques. Compte tenu de l'erreur d'orientation de la classe du degré, l'acquisition est facilitée dès lors que le champ du système S2 est supérieur à l'erreur de pointé. Cela autorise alors une recherche visuelle ou automatique de l'objet dans une image unique.
- S2 réalise ses mesures sur l'objet centré sur l'image : mesure de distance $R_{2k}$ entre S2 et l'objet, mesure de l'élévation $E_{2k}$ de l'objet Ok avec l'inclinomètre de S2. S2 vérifie que sa mesure de distance est compatible (aux erreurs de mesure près) à la distance théorique calculée de manière approchée,
- S2 envoie vers S1 ces mesures ainsi que la position géodésique (longitude, latitude, altitude) de S2.
- S1 calcule la direction du Nord (l'azimut ou le gisement $\overline{G_1}$ correspondant à la valeur zéro de son goniomètre) à partir de ces observations.

Les calculs par S1 pour déterminer le gisement $G_1$ de S1 peuvent être décrits en 2 ou 3 dimensions. Dans le cas d'une description plane 2D, les mesures réalisées en 3D sont rectifiées en déduisant les distances dans le plan à partir des mesures d'élévation réalisées sur les objets. Le gisement (ou Nord) $\overline{G_1}$ est calculé :

- en linéarisant les équations d'observation en utilisant l'expression approchée :

$$G_{01} = M_{1k} + DM_1 - L_{1k}$$

où $M_{1k}$ est la mesure d'azimut magnétique du système S1 sur l'objet k, $DM_1$, la déclinaison magnétique locale,
- en écrivant le gisement $\overline{G_1}$ au moyen de cette approximation et de l'incrément $\overline{\Delta G1}$ avec :

$$\overline{G_1} = G_{01} + \overline{\Delta G_1}$$

- en calculant l'incrément $\overline{\Delta G1}$ avec :

$$
\boxed{
\begin{array}{c}
\left[(X_2 - X_1)\cos(L_{1k} + G_{01}) - (Y_2 - Y_1)\sin(L_{1k} + G_{01})\right]\overline{\Delta G_1} = \\[2mm]
\dfrac{B_{21}^2 - R_{2k}^2 + R_{1k}^2}{2R_{1k}\cos E_{1k}} - (X_2 - X_1)\sin(L_{1k} + G_{01}) - (Y_2 - Y_1)\cos(L_{1k} + G_{01}) - (Z_2 - Z_1)\tan E_{1k} \\[2mm]
\overline{G_1} = M_{1k} + DM_1 - L_{1k} + \overline{\Delta G_1}
\end{array}
}
$$

Dans cette expression, k=1 (les mesures portent sur l'unique objet sujet aux mesures de S1 et S2) la valeur approchée du gisement approché $G_{01}$ de S1 est obtenue à partir des mesures fournies par le compas magnétique de S1 ; la base '$B_{21}$' qui est la distance euclidienne entre les 2 systèmes optroniques S1 et S2 est obtenue à partir des coordonnées de S1 et S2.

$$B_{nm}^2 = \sqrt{(X_m - X_n)^2 + (Y_m - Y_n)^2 + (Z_m - Z_n)^2}$$

$$\Delta X_{nm} = X_n - X_m \quad ; \quad \Delta Y_{nm} = Y_n - Y_m \quad ; \quad \Delta Z_{nm} = Z_n - Z_m$$

On peut aussi obtenir $G_{01}$ de la façon suivante en absence de compas magnétique sur S1, mais avec un compas magnétique sur S2 qui donnera une localisation approchée (longitude, latitude, altitude ou hauteur sur l'ellipsoïde selon le type de référence verticale retenu) de l'objet avec une mesure $E_{2k}$ qui transmise à S1 permettra de déterminer un azimut $A_{01k}$ approché (au sens d'une faible exactitude) sur l'objet et donc un gisement $G_{01}$ approché au moyen de la lecture $L_{1k}$ avec $G_{01} = A_{01k} - L_{1k}$.

Comme on le verra dans les autres exemples de configurations, l'estimation du gisement ou azimut approché n'est pas indispensable, néanmoins l'aptitude à réaliser ce type de mesure est souvent de nature à faciliter la réacquisition d'un objet depuis un autre système optronique délocalisé. En effet,

- un compas disponible sur un système optronique Sm permet de positionner un objet de manière approchée dès lors que Sm dispose d'un équipement de mesure d'élévation (ex inclinomètre) et d'un EMED (ex télémètre).
- Un système optronique S1 recevant la position approchée d'un objet est en mesure de l'identifier plus facilement puisque, disposant de sa position S1 et de la position approchée de l'objet, S1 est en mesure de déterminer :

    ◦ l'azimut approché de l'objet qu'il peut lui-même pointé dans un champ de l'ordre du degré s'il dispose d'un compas magnétique,
    ◦ l'élévation approchée de l'objet qu'il observe pour approcher l'objet du centre de son imageur en inclinant sa LdV,
    ◦ la distance approchée de l'objet qu'il peut mesurer sur l'objet à partager au moyen de l'EMED.

Les coordonnées cartésiennes de S1 et S2 sont obtenues partant de leurs coordonnées géodésiques (en général en WGS84) de la façon suivante :

- conversion des coordonnées géodésiques en coordonnées géocentriques (origine centre terre, axe X et Y dans le plan équatorial, X passant par le méridien de Greenwich, z par l'axe des pôles),
- conversion des coordonnées géocentriques dans un repère topocentrique local, (origine sur la position du système optronique S1 par exemple, X dans le parallèle local, Y le long du méridien local et z vertical ascendant perpendiculaire à l'ellipsoïde terrestre).

Le système S1 peut aussi caractériser l'erreur sur son gisement $G_1$ dès lors qu'il a connaissance des erreurs sur les mesures au moyen des expressions et construire une évaluation théorique de l'erreur quadratique moyenne (ou RMSE pour Root Mean Square Error). Ceci en séparant les contributions de biais et de bruit sur les mesures qui engendrent respectivement une erreur de biais ou systématisme et de bruit ou aléatoire sur le gisement $G_1$.

Sur la base de ces informations (biais +bruit), lorsque l'objectif de performance alloué PGS est plus ambitieux que l'erreur obtenue, le système S1 peut déterminer la zone d'opération possible du système S2 où des objets communs permettraient, s'il en existe, de se rapprocher de l'objectif de performance PGS.

Pour cela et de manière générale, on peut jouer sur la position relative des 2 systèmes S1 et S2 (ou de 2 systèmes optroniques choisis parmi N), et/ou le choix d'un objet situé dans une région spatiale où la configuration globale (objet et système optronique) permet d'atteindre la performance allouée.

Concernant la performance du Nord ainsi obtenu, on note que l'expression indiquée ne fait apparaître que des termes en différences des 2 positions. A l'échelle des distances du dispositif, cet aspect est favorable à la performance sur le positionnement des systèmes optroniques. Avec un EMPG de type GNSS, une part importantes des contributions à l'erreur globale de positionnement sont dues aux délais de propagation dans la ionosphère et la troposphère et se retranchent pour des mesures quasi-simultanées sur des positions proches (quelques 10 km).

Selon le processus proposé, une performance jugée insuffisante peut conduire à l'utilisation d'un deuxième objet ($\rightarrow$K=2, k={1,2} voir configuration 1.2).

Avant de se lancer dans l'acquisition de mesures sur un deuxième objet, le système S1 va évaluer la performance théorique PGT qu'un deuxième objet peut apporter dans l'amélioration de son Nord en vue d'atteindre l'objectif alloué PGS. Les zones candidates à l'acquisition (=zones où se trouvent des objets susceptibles d'être sélectionnés) sont celles qui à la fois permettent d'atteindre cette performance et correspondent à une visibilité commune sur la zone pour les deux systèmes d'un même objet.

Une fois les mesures réalisées, le gisement $\overline{G1}$ estimé sur S1 va faciliter l'acquisition et le partage entre les 2 systèmes optroniques. En effet cette information permet de localiser précisément le premier objet puis d'exploiter cette meilleure position en la transmettant à S2. Ce dernier peut alors utiliser l'objet comme un amer pour réduire à la fois le biais sur la connaissance de la déclinaison magnétique locale et son résidu de biais de montage.

Le calcul du gisement avec un second objet est décrit ultérieurement (dans une configuration 1.2). Nous verrons alors qu'un second objet dispense d'utiliser un compas magnétique sur S1.

Si l'utilisation d'un deuxième objet rapproche de la performance objectif PGS tout en y restant encore en-deçà, d'autres objets peuvent être utilisés pour effectuer des mesures communes (cf configuration 1.3).

**Configuration 1.2 (sans compas)**

Cette configuration se distingue de la précédente en ce que le système optronique S1 (de la configuration 1.1) est dépourvu de compas magnétique 108, et idem pour S2 sans compas magnétique 208 : il n'y a plus d'accès à un azimut approché de visée sur un objet. Le système S1 peut encore déterminer son gisement de manière non ambiguë (c'est-à-dire sur [$-\pi,\pi$]) en utilisant au moins deux objets (K$\geq$2).

On va décrire cette configuration avec deux systèmes optroniques S1 et S2 et K=2 objets, mais le calcul s'applique plus généralement à M systèmes optroniques et K$\geq$2 objets (voir configuration 3.1).

Les mesures supplémentaires sont des mesures :

- de distance $R_{1k}$ entre S1 et l'objet k et $R_{2k}$ entre S2 et l'objet k,
- d'élévation $E_{12}$ entre S1 et l'objet 2 et $E_{2k}$ entre S2 et l'objet k.

S2 envoie vers S1 ces mesures $R_{2k}$ et $E_{2k}$ ainsi que sa position géodésique (longitude, latitude, altitude).

Pour effectuer les mesures supplémentaires, les deux positions déterminées étant celles de S1 et S2 et avec K=2 :

- Le premier système optronique S1 comporte en outre un EMED 106, 107 apte à fournir la distance $R_{1k}$ entre S1 et l'objet k, un inclinomètre pour mesurer l'élévation $E_{12}$ sur l'objet 2,
- et le second système optronique S2 comporte en outre :

∘ un EMED de type télémètre 206 et 207 dont la direction est harmonisée sur l'axe du dispositif d'acquisition de S2 201, apte à fournir la distance $R_{2k}$ entre S2 et l'objet k,
∘ un inclinomètre 209 apte à fournir l'élévation $E_{2k}$ de l'objet k par rapport à S2.

- La quantité calculée est le gisement $\overline{G_1}$ de l'EMAR de S1.

Pour cette configuration, on décrit une approche permettant d'obtenir le gisement G1 après rectification des mesures de distance dans le plan horizontal 2D (en projetant la base B entre les systèmes qui devient 'b' et les distance 3D mesurées $R_{1k}$ et $R_{2k}$ dans le plan horizontal au moyen des élévations $E_{1k}$ et E2k avec $r_{1k} = R_{1k} \sin E_{1k}$ ) comme :

$$\overline{G_1} = \mathrm{atan2}\left(\overline{\sin G_1} ; \overline{\cos G_1}\right)$$

atan(a ;b) correspondant à la fonction atan(b/a) bijective sur [-π,π], souvent aussi notée atan2, $\overline{\sin G1}$ et $\overline{\cos G1}$ s'obtenant comme solution du système linéaire :

$$\begin{pmatrix} \alpha_{11} & \alpha_{12} \\ \alpha_{21} & \alpha_{22} \end{pmatrix} \begin{pmatrix} \overline{\sin G_1} \\ \overline{\cos G_1} \end{pmatrix} = \begin{pmatrix} \beta_{11} \\ \beta_{21} \end{pmatrix}$$

où :

$$\begin{pmatrix} \alpha_{11} & \alpha_{12} \\ \alpha_{21} & \alpha_{22} \end{pmatrix} = \begin{pmatrix} r_{11}\left(\Delta X_{21} \cos L_{11} - \Delta Y_{21} \sin L_{11}\right) & r_{11}\left(\Delta X_{21} \sin L_{11} + \Delta Y_{21} \cos L_{11}\right) \\ r_{12}\left(\Delta X_{21} \cos L_{12} - \Delta Y_{21} \sin L_{12}\right) & r_{12}\left(\Delta X_{21} \sin L_{12} + \Delta Y_{21} \cos L_{12}\right) \end{pmatrix}$$

$$\begin{pmatrix} \beta_{11} \\ \beta_{21} \end{pmatrix} = \frac{1}{2}\begin{pmatrix} b_{21}^2 - r_{21}^2 + r_{11}^2 \\ b_{21}^2 - r_{22}^2 + r_{12}^2 \end{pmatrix}$$

avec une solution unique pour des visées non-alignées :

$$\det = b_{21}^2\ r_{11}\ r_{12} \sin\left(L_{12} - L_{11}\right) \neq 0 \Leftrightarrow L_{12} \neq L_{11} + n\pi$$

Dans cette description 2D, les mesures sont préalablement transposées dans un repère topographique local dont l'origine peut être prise par exemple au barycentre des 2 positions des systèmes optroniques.
L'opération de rectification/transposition consiste simplement à remplacer les distances R des mesures issues des EMED par leur projection r sur le plan horizontal, et à remplacer la base entre les 2 systèmes au moyen des mesures $E_{mk}$ des inclinomètres.
S1 peut évaluer le biais sur le gisement $\overline{G_1}$ d'après les biais de mesure en 2D :

$$\delta\overline{G_1} = \frac{\delta\beta_{k1} - \delta\alpha_{k1}\overline{\sin G_1} - \delta\alpha_{k2}\overline{\cos G_1}}{\alpha_{k1}\cos G_1 - \alpha_{k2}\sin G_1} \quad ;$$

$k \in \{1,2\}$

$$\delta\alpha_{11} = \frac{\alpha_{11}}{r_{11}}\delta r_1 + r_{11}\left(\delta\Delta X_{21} \cos L_{11} - \delta\Delta Y_{21} \sin L_{11}\right) - \alpha_{12}\delta L_1$$

$$\delta\alpha_{12} = \frac{\alpha_{12}}{r_{11}}\delta r_1 + r_{11}\left(\delta\Delta X_{21}\sin L_{11} + \delta\Delta Y_{21}\cos L_{11}\right) + \alpha_{11}\delta L_1$$

$$\delta\alpha_{21} = \frac{\alpha_{21}}{R_{12}}\delta r_1 + r_{12}\left(\delta\Delta X_{21}\cos L_{12} - \delta\Delta Y_{21}\sin L_{12}\right) - \alpha_{22}\delta L_1$$

$$\delta\alpha_{22} = \frac{\alpha_{22}}{r_{12}}\delta r_1 + r_{12}\left(\delta\Delta X_{21}\sin L_{12} + \delta\Delta Y_{21}\cos L_{12}\right) + \alpha_{21}\delta L_1$$

$$\delta\beta_{k1} = b_{21}\delta b_{21} - r_{2k}\delta r_2 + r_{1k}\delta r_1$$

et le bruit d'après :

$$\sigma^2_{\overline{G_1}} = \frac{\sigma^2_{\beta_{11}} + \overline{\sin G_1}^2\sigma^2_{\alpha_{11}} + \overline{\cos G_1}^2\sigma^2_{\alpha_{12}}}{\left(\alpha_{11}\overline{\cos G_1} - \alpha_{12}\overline{\sin G_1}\right)^2} \quad ou \quad \sigma^2_{\overline{G_1}} = \frac{\sigma^2_{\beta_{21}} + \overline{\sin G_1}^2\sigma^2_{\alpha_{21}} + \overline{\cos G_1}^2\sigma^2_{\alpha_{22}}}{\left(\alpha_{21}\overline{\cos G_1} - \alpha_{22}\overline{\sin G_1}\right)^2}$$

$$\sigma^2_{\alpha_{11}} = \frac{\alpha^2_{11}}{r^2_{11}}\sigma^2_{r_1} + r^2_{11}\left(\cos^2 L_{11}\sigma^2_{\Delta X_{21}} + \sin^2 L_{11}\sigma^2_{\Delta Y_{21}}\right) + \alpha^2_{12}\sigma^2_{L_1}$$

$$\sigma^2_{\alpha_{12}} = \frac{\alpha^2_{12}}{r^2_{11}}\sigma^2_{r_1} + r^2_{11}\left(\sin^2 L_{11}\sigma^2_{\Delta X} + \cos^2 L_{11}\sigma^2_{\Delta Y_{21}}\right) + \alpha^2_{11}\sigma^2_{L_1}$$

$$\sigma^2_{\alpha_{21}} = \frac{\alpha^2_{21}}{r^2_{12}}\sigma^2_{r_1} + r^2_{12}\left(\cos^2 L_{12}\sigma^2_{\Delta X_{21}} + \sin^2 L_{12}\sigma^2_{\Delta Y_{21}}\right) + \alpha^2_{22}\sigma^2_{L_1}$$

$$\sigma^2_{\alpha_{22}} = \frac{\alpha^2_{22}}{r^2_{12}}\sigma^2_{r_1} + r^2_{12}\left(\sin^2 L_{12}\sigma^2_{\Delta X_{21}} + \cos^2 L_{12}\sigma^2_{\Delta Y_{21}}\right) + \alpha^2_{21}\sigma^2_{L_1}$$

$$\sigma^2_{\beta_{11}} = b^2_{21}\sigma^2_{b_{21}} + r^2_{21}\sigma^2_{r_2} + r^2_{11}\sigma^2_{r_1}$$

$$\sigma^2_{\beta_{21}} = b^2_{21}\sigma^2_{b_{21}} + r^2_{22}\sigma^2_{r_2} + r^2_{12}\sigma^2_{r_1}$$

Selon la valeur de l'erreur quadratique résultante (PGT) et l'objectif de performance visé (PSG), S1 peut déterminer par avance les positions de S2 éligibles pour l'objectif assigné.

En 3D, le gisement $\overline{G_1}$ s'obtient simplement comme cas particulier de la configuration 3.1 décrite ultérieurement.

Une fois son Nord ou gisement $\overline{G_1}$ déterminé, le système S1 peut localiser les objets mesurés Ok mais aussi d'autres objets de la scène qui ne seraient vus que de sa position. Il extrait ainsi les coordonnées géographiques d'objet de la scène avec une bonne qualité. Ces informations de localisation peuvent directement répondre à un besoin ou être archivées pour construire une base locale de données d'amer qui pourra ultérieurement alimenter d'autres besoins ou utilisateurs. Ces informations seront en particulier utiles pour entretenir un Nord sur un système devant se déplacer dans la scène.

Une fois $\overline{G_1}$ obtenu, l'utilisation d'autres objets permet de traiter les équations d'observation comme précédemment en linéarisant les équations autour de la valeur $\overline{G_1}$ pour estimer un incrément le rapprochant de sa valeur optimale.

**Configuration 2.1 (en partie sans dispositif de mesure de distance)**

Selon une autre configuration, deux systèmes disposant d'un EMAR collaborent avec la particularité que le système S2 n'utilise plus son EMED 206, 207, soit volontairement par souci de discrétion, soit par incapacité (objet trop éloigné ou Surface Equivalente de l'objet trop faible), soit involontairement (panne) : les mesures de distance $R_{2k}$ ne sont plus disponibles. Le tandem S1, S2 va chercher à obtenir le gisement sur chacun des deux systèmes ; S2 dispose alors également d'un EMAR 220. Il va pour cela réaliser des mesures sur 2 objets O1 et 02 (K=2). Les mesures supplémentaires sont des mesures :

- depuis S1

  ◦ de distance $R_{11}$ sur l'objet O1 et $R_{12}$ sur l'objet 02,
  ◦ d'élévation $E_{12}$ entre S1 et l'objet 02,
  ◦ d'angle relatif horizontal $L_{12}$ de l'EMAR lorsque son système optronique pointe sur l'objet 02,
  ◦ d'azimut approché, disons mieux que 5 degrés, sur les 2 objets $A_{01k}$ pour $k \in \{1, 2\}$ ; ceci en vue d'estimer une valeur approchée $G_{01}$ de $G_1$,

- depuis S2

  ◦ d'élévation $E_{21}$ et $E_{22}$ entre S2 et les objets respectifs O1 et 02,
  ◦ d'angle relatif horizontal $L_{21}$ et $L_{22}$ sur l'EMAR de S2 lorsque son système optronique pointe les objets O1 et O2 respectivement.

- Deux objets (k =1,2) participent aux mesures des deux systèmes,
- Les quantités estimées sont les gisements $\overline{G_1}$ et $\overline{G_2}$ des EMAR de S1 et S2. Si besoin, les coordonnées des 2 objets s'en déduisent aisément ainsi que les précisions sur ces quantités.

Pour effectuer les mesures supplémentaires, les deux positions déterminées étant celles de S1 et S2 et avec K=2 :

- Le premier système optronique S1 comporte en outre :

  ◦ un EMED ou « Equipement de Mesure Electronique de Distance » de type télémètre 106 et 107 dont la direction est harmonisée sur l'axe du dispositif d'acquisition, apte à fournir la distance $R_{1k}$ entre S1 et l'objet Ok,
  ◦ un inclinomètre 109 apte à fournir l'élévation $E_{12}$ de l'objet 02 par rapport à S1.

- Et le second système optronique S2 comporte en outre :

  ◦ un inclinomètre 209 apte à fournir les élévations $E_{2k}$ des objets Ok (k=1 et 2) par rapport à S2,
  ◦ un EMAR 220 apte à fournir les angles relatifs $L_{2k}$ entre S2 et les objets Ok,

- le système S1 comporte un compas magnétique apte à fournir directement (par mesure) ou indirectement (par calcul) un azimut approché sur les 2 objets $A_{02k}$.
- S2 envoie vers S1 les mesures réalisées à partir de S2 ainsi que sa propre position géodésique (longitude, latitude, altitude).

En rectifiant les mesures de distance (projection dans le plan au moyen des élévations) les équations d'observation sont de la forme :

|  | Objet O1 | Objet 02 |
|---|---|---|
| S1 | $\overline{x}_1 - X_1 = r_{11} \sin\left(L_{11} + \overline{G}_1\right)$ | $\overline{x}_2 - X_1 = r_{12} \sin\left(L_{12} + \overline{G}_1\right)$ |
|  | $\overline{y}_1 - Y_1 = r_{11} \cos\left(L_{11} + \overline{G}_1\right)$ | $\overline{y}_2 - Y_1 = r_{12} \cos\left(L_{12} + \overline{G}_1\right)$ |

(suite)

| | | Objet O1 | Objet 02 |
|---|---|---|---|
| S2 | | $\overline{x}_1 - X_2 = \overline{r}_{21} \sin(L_{21} + \overline{G}_2)$ | $\overline{x}_2 - X_2 = \overline{r}_{22} \sin(L_{22} + \overline{G}_2)$ |
| | | $\overline{y}_1 - Y_2 = \overline{r}_{21} \cos(L_{21} + \overline{G}_2)$ | $\overline{y}_2 - Y_2 = \overline{r}_{22} \cos(L_{22} + \overline{G}_2)$ |

En éliminant les coordonnées des objets,

$$X_2 - X_1 = r_{11} \sin(L_{11} + \overline{G}_1) - \overline{r}_{21} \sin(L_{21} + \overline{G}_2)$$

$$Y_2 - Y_1 = r_{11} \cos(L_{11} + \overline{G}_1) - \overline{r}_{21} \cos(L_{21} + \overline{G}_2)$$

$$X_2 - X_1 = r_{12} \sin(L_{12} + \overline{G}_1) - \overline{r}_{22} \sin(L_{22} + \overline{G}_2)$$

$$Y_2 - Y_1 = r_{12} \cos(L_{12} + \overline{G}_1) - \overline{r}_{22} \cos(L_{22} + \overline{G}_2)$$

Le système peut être résolu simplement par linéarisation dès lors que l'on dispose d'une valeur approchée (de quelques degrés) des gisements avec :

$$\overline{G}_1 = G_{01} + \overline{\Delta G_1} \quad ; \quad \overline{G}_2 = G_{02} + \overline{\Delta G_2}$$

Dans cette situation les gisements sont obtenus par solution du système linéaire :

$$\begin{pmatrix} r_{11} \cos(A_{011} - A_{021}) & \Delta X_{21} \sin(L_{21} + G_{02}) + \Delta Y_{21} \cos(L_{21} + G_{20}) - r_{11} \cos(A_{011} - A_{021}) \\ r_{12} \cos(A_{012} - A_{022}) & \Delta X_{21} \sin(L_{22} + G_{02}) + \Delta Y_{21} \cos(L_{22} + G_{20}) - r_{12} \cos(A_{012} - A_{022}) \end{pmatrix} \begin{pmatrix} \overline{\Delta G_1} \\ \overline{\Delta G_2} \end{pmatrix}$$
$$= \begin{pmatrix} \Delta X_{21} \cos(L_{21} + G_{02}) - \Delta Y_{21} \sin(L_{21} + G_{02}) - r_{11} \sin(A_{011} - A_{021}) \\ \Delta X_{21} \cos(L_{22} + G_{02}) - \Delta Y_{21} \sin(L_{22} + G_{02}) - r_{12} \sin(A_{012} - A_{022}) \end{pmatrix}$$

Où l'azimut approché $A_{0mk}$ est obtenu pour $m \in \{1,2\}$ et $k \in \{1,2\}$ par :

$$A_{0mk} = L_{mk} + G_{0m}$$

Une fois les gisements obtenus, les coordonnées des 2 objets s'obtiennent simplement dans le repère topographique de S1 d'après les relations d'observations de S1 et son gisement. Les distances $R_{21}$ et $R_{22}$ peuvent aussi s'en déduire simplement. La précision théorique sur les gisements s'obtient aussi classiquement par une technique de propagation de covariance similaire à celle décrite en configuration 1.2.

**Configuration 2.2 (sans compas / 2 objets)**

Selon une autre configuration, on considère 2 systèmes optroniques (M=2, m={1, 2}) identiques collaborant sur 2 objets (K=2, k={1, 2}) sans compas magnétique. Les deux systèmes ont pour objectif de collaborer pour déterminer le gisement de chacun ou de manière équivalente l'azimut géographique correspondant à l'origine de la lecture horizontale de leur EMAR. Chacun dispose d'un EMED et :

- d'un EMAR sous forme de goniomètre biaxes apte à fournir un angle relatif horizontal et une élévation, ou
- d'un EMED mono-axe et d'un inclinomètre qui peut être intégré à la caméra par exemple.

Les deux systèmes collaborent et échangent leurs mesures sur deux objets distincts de la scène. Les mesures supplémentaires sont des mesures :

- depuis S1

  ◦ de distance $R_{11}$ sur l'objet O1 et $R_{12}$ sur l'objet 02,
  ◦ d'élévation $E_{12}$ entre S1 et l'objet 02,
  ◦ d'angle relatif horizontal $L_{12}$ de l'EMAR lorsque son système optronique pointe sur l'objet 02,

- depuis S2

  ◦ de distance $R_{21}$ sur l'objet O1 et $R_{22}$ sur l'objet 02,
  ◦ d'élévation $E_{21}$ et $E_{22}$ entre S2 et les objets respectifs O1 et 02,
  ◦ d'angle relatif horizontal $L_{21}$ et $L_{22}$ sur l'EMAR de S2 lorsque son système optronique pointe les objets O1 et O2 respectivement.

- Deux objets (k =1,2) participent aux mesures des deux systèmes,
- Les quantités calculées sont les gisements $\overline{G_1}$ et $\overline{G_2}$ des EMAR de S1 et de S2. Si besoin, les coordonnées des 2 objets s'en déduisent aisément ainsi que les précisions sur ces quantités. Le gisement de S1 est estimé par S1 comme on l'a déjà vu. Celui de S2 est estimé par l'unité de calcul de S2 à partir des observations, celles dont il ne dispose pas directement lui étant communiquées par S1. Selon une variante, le gisement de S2 est estimé par S1 puis communiqué à S2.

Un calcul de performance permet d'évaluer l'aptitude d'atteindre la performance selon les caractéristiques connues des instruments de mesure et en jouant sur la configuration d'acquisition du système :

- pour le premier objet utilisé, et si aucune zone ou aucun objet appropriés n'ont été déterminés a priori (avant les mesures), S1 cherche les zones favorables d'un objet sur lequel le tandem S1, S2 va échanger ses mesures,
- pour une base (positions des 2 systèmes optroniques) fixée et la position fixée d'un objet n°1, on modifie la position d'un objet n°2 de façon à déterminer les zones spatiales compatibles de la performance et dans lesquelles un deuxième objet serait pertinent,
- pour des objets de positions fixées et connues et une position connue et fixée de S1, on peut déterminer les zones correspondant à des positions spatiales de S2 éligibles à l'obtention de la performance. Ces zones peuvent être utilisées :

  ◦ en exploitant directement la position de S2 sans déplacement,
  ◦ en proposant un déplacement de S2 sur une zone accessible.

Les 2 gisements des 2 systèmes peuvent être simultanément obtenus en résolvant d'abord le système linéaire :

$$\begin{pmatrix} R_{11}\cos E_{11}\sin L_{11} & R_{11}\cos E_{11}\cos L_{11} & -R_{21}\cos E_{21}\sin L_{21} & -R_{21}\cos E_{21}\cos L_{21} \\ R_{11}\cos E_{11}\cos L_{11} & -R_{11}\cos E_{11}\sin L_{11} & -R_{21}\cos E_{21}\cos L_{21} & R_{21}\cos E_{21}\sin L_{21} \\ R_{12}\cos E_{12}\sin L_{12} & R_{12}\cos E_{12}\cos L_{12} & -R_{22}\cos E_{22}\sin L_{22} & -R_{22}\cos E_{22}\cos L_{22} \\ R_{12}\cos E_{12}\cos L_{12} & -R_{12}\cos E_{12}\sin L_{12} & -R_{22}\cos E_{22}\cos L_{22} & R_{22}\cos E_{22}\sin L_{22} \end{pmatrix} \begin{pmatrix} \overline{\cos G_1} \\ \overline{\sin G_1} \\ \overline{\cos G_2} \\ \overline{\sin G_2} \end{pmatrix} = \begin{pmatrix} \Delta X_{21} \\ \Delta Y_{21} \\ \Delta X_{21} \\ \Delta Y_{21} \end{pmatrix}$$

puis en utilisant les 4 inconnues obtenues, on déduit les 2 gisements :

$$\overline{G_1} = \mathrm{atan2}\left(\overline{\sin G_1}, \overline{\cos G_1}\right)$$

$$\overline{G_2} = \mathrm{atan2}\left(\overline{\sin G_2}, \overline{\cos G_2}\right)$$

Dans cette approche, le système ne nécessite pas de valeur approchée ($G_{01}$, $G_{02}$) et donc d'équipement de type compas sur les systèmes optroniques par exemple.
Une fois les gisements $\overline{G_1}$ et $\overline{G_2}$ obtenus par cette approche non-optimale, le système des équations d'observation peut être résolu itérativement de manière définitive dans une procédure d'estimation de type Gauss-Newton qui estime à chaque étape les incréments $\overline{\Delta G_1}$ et $\overline{\Delta G_2}$ (voir détails dans la description de la configuration 2.3).

**Configuration 2.3 (sans compas / K objets)**

Selon une autre configuration, on généralise la configuration 2.2 en collaborant toujours avec 2 systèmes mais en observant K>2 objets. La situation de la configuration 2.2 se généralise sans difficulté lorsque K>2 objets participent au calcul de nord collaboratif en résolvant le système suivant à 4 inconnues :

$$
\begin{pmatrix}
R_{11}\cos E_{11}\sin L_{11} & R_{11}\cos E_{11}\cos L_{11} & -R_{21}\cos E_{21}\sin L_{21} & -R_{21}\cos E_{21}\cos L_{21} \\
R_{11}\cos E_{11}\cos L_{11} & -R_{11}\cos E_{11}\sin L_{11} & -R_{21}\cos E_{21}\cos L_{21} & R_{21}\cos E_{21}\sin L_{21} \\
R_{12}\cos E_{12}\sin L_{12} & R_{12}\cos E_{12}\cos L_{12} & -R_{22}\cos E_{22}\sin L_{22} & -R_{22}\cos E_{22}\cos L_{22} \\
R_{12}\cos E_{12}\cos L_{12} & -R_{12}\cos E_{12}\sin L_{12} & -R_{22}\cos E_{22}\cos L_{22} & R_{22}\cos E_{22}\sin L_{22} \\
\vdots & \vdots & \vdots & \vdots \\
R_{1K}\cos E_{1K}\sin L_{1K} & R_{1K}\cos E_{1K}\cos L_{1K} & -R_{2K}\cos E_{2K}\sin L_{2K} & R_{2K}\cos E_{2K}\cos L_{2K} \\
R_{1K}\cos E_{1K}\cos L_{1K} & -R_{1K}\cos E_{1K}\sin L_{1K} & -R_{2K}\cos E_{2K}\cos L_{2K} & R_{2K}\cos E_{2K}\sin L_{2K}
\end{pmatrix}
\begin{pmatrix}
\overline{\cos G_1} \\
\overline{\sin G_1} \\
\overline{\cos G_2} \\
\overline{\sin G_2}
\end{pmatrix}
=
\begin{pmatrix}
\Delta X_{21} \\
\Delta Y_{21} \\
\Delta X_{21} \\
\Delta Y_{21} \\
\vdots \\
\Delta X_{21} \\
\Delta Y_{21}
\end{pmatrix}
$$

Disposant de solutions approchées des gisements (soit avec compas soit en ayant pratiqué la procédure précédente), il est plus efficace (en terme de performance) de résoudre le système à deux inconnues ( $\overline{\Delta G_1}$ , $\overline{\Delta G_2}$ ) en inversant classiquement le système suivant au moyen de la matrice pseudo-inverse :

$$
\begin{pmatrix}
R_{11}\cos E_{11}\cos(L_{11}+G_{01}) & -R_{21}\cos E_{21}\cos(L_{21}+G_{02}) \\
-R_{11}\cos E_{11}\sin(L_{11}+G_{01}) & R_{21}\cos E_{21}\sin(L_{21}+G_{02}) \\
R_{12}\cos E_{12}\cos(L_{12}+G_{01}) & -R_{22}\cos E_{22}\cos(L_{22}+G_{02}) \\
-R_{12}\cos E_{12}\sin(L_{12}+G_{01}) & R_{22}\cos E_{22}\sin(L_{22}+G_{02}) \\
\vdots & \vdots \\
R_{1K}\cos E_{1K}\cos(L_{1K}+G_{01}) & -R_{2K}\cos E_{2K}\cos(L_{2K}+G_{02}) \\
-R_{1K}\cos E_{1K}\sin(L_{1K}+G_{01}) & R_{2K}\cos E_{2K}\sin(L_{2K}+G_{02})
\end{pmatrix}
\begin{pmatrix}
\overline{\Delta G_1} \\
\overline{\Delta G_2}
\end{pmatrix}
=
$$

$$
\begin{pmatrix}
\Delta X_{21}-R_{11}\cos E_{11}\sin(L_{11}+G_{01})+R_{21}\cos E_{21}\sin(L_{21}+G_{02}) \\
\Delta Y_{21}-R_{11}\cos E_{11}\cos(L_{11}+G_{01})+R_{21}\cos E_{21}\cos(L_{21}+G_{02}) \\
\Delta X_{21}-R_{12}\cos E_{12}\sin(L_{12}+G_{01})+R_{22}\cos E_{22}\sin(L_{22}+G_{02}) \\
\Delta Y_{21}-R_{12}\cos E_{12}\cos(L_{12}+G_{01})+R_{22}\cos E_{22}\cos(L_{22}+G_{02}) \\
\vdots \\
\Delta X_{21}-R_{1K}\cos E_{1K}\sin(L_{1K}+G_{01})+R_{2K}\cos E_{2K}\sin(L_{2K}+G_{02}) \\
\Delta Y_{21}-R_{12}\cos E_{12}\cos(L_{12}+G_{01})+R_{2K}\cos E_{2K}\cos(L_{2K}+G_{02})
\end{pmatrix}
$$

Pour disposer de la solution on inverse d'abord le système en utilisant la matrice pseudo-inverse puis disposant des incréments $\overline{\Delta G_1}$ et $\overline{\Delta G_2}$, on calcule une nouvelle approximation en remplaçant la valeur de $G_{0k}$ par celle de $G_{0k}$+ $\overline{\Delta G_k}$. Le système converge au bout de quelques itérations qui peuvent être interrompues selon la précision souhaitée sur les gisements (par exemple lorsque la norme du vecteur [ $\overline{\Delta G_1}$ , $\overline{\Delta G_2}$ ], devient inférieure à un certain seuil - 0.1 mrad par exemple - pour l'itération courante).

Dès lors que K≥2 objets sont disponibles, le gain en performance de cette méthode d'estimation (Gauss-Newton) sur la méthode directe de la configuration 2.2 précédente est notable dans les situations d'une faible surabondance d'informations, par exemple lorsque les 2 systèmes optroniques collaborent sur deux objets et plus particulièrement lorsque les 2 objets se rapprochent dans le voisinage (tendant de la sorte à ne porter qu'une information unique). Cette considération permet de choisir entre les 2 approches selon la configuration géométrique des capteurs et des objets de la scène.

**Configuration 2.4 (2 EMAR / 1 objet)**

Selon cette configuration 2 systèmes S1 et S2 avec chacun un EMAR ont l'objectif de trouver leur gisement puis leur Nord en collaborant sur un objet unique 'k'.

Les mesures supplémentaires sont des mesures :

- de distance $R_{1k}$ entre S1 et l'objet k et $R_{2k}$ entre S2 et l'objet k,
- d'élévation $E_{2k}$ entre S2 et l'objet k.

Pour effectuer les mesures supplémentaires, les deux positions déterminées étant celles de S1 et S2 et pour un seul objet :

- Le premier système optronique S1 comporte en outre un EMED 106, 107 apte à fournir la distance $R_{1k}$ entre S1 et l'objet k,
- Et le second système optronique S2 comporte en outre :

  ◦ un EMED de type télémètre 206 et 207 dont la direction est harmonisée sur l'axe du dispositif d'acquisition de S2 201, apte à fournir la distance $R_{2k}$ entre S2 et l'objet k,
  ◦ un inclinomètre 209 apte à fournir l'élévation $E_{2k}$ de l'objet k par rapport à S2 (ou un EMED 2 axes tel qu'un goniomètre placé à l'horizontal avec un moyen classique de type niveau à bulle intégré).

Comme indiqué, un objet unique (k =1) est sujet aux mesures des deux systèmes.

Les quantités calculées sont les gisements $\overline{G_1}$ et $\overline{G_2}$ des EMAR de S1 et S2 respectivement. Au besoin, les coordonnées de l'objet et les performances sur ces grandeurs peuvent en être déduites. Le gisement de S1 est estimé par S1 comme on l'a déjà vu. Celui de S2 est estimé par l'unité de calcul de S2 à partir des observations, celles dont il ne dispose pas directement lui étant communiquées par S1. Selon une variante, le gisement de S2 est estimé par S1 puis communiqué à S2.

Pour cette configuration à 2 EMAR, les équations d'observation sur l'objet unique 'k=1' s'écrivent :

$$\overline{x}_1 - X_1 = r_{11} \sin\left(L_{11} + \overline{G}_1\right)$$

$$\overline{y}_1 - Y_1 = r_{11} \cos\left(L_{11} + \overline{G}_1\right)$$

$$\overline{x}_1 - X_2 = r_{21} \sin\left(L_{21} + \overline{G}_2\right)$$

$$\overline{y}_1 - Y_2 = r_{21} \cos\left(L_{21} + \overline{G}_2\right)$$

Dans ces expressions, la quantité r représente encore la projection des distances sur le plan horizontal au moyen de :

$$r_{m1} = R_{m1} \sin E_{m1}$$

Pour cette configuration, les gisements peuvent encore être obtenus simplement en linéarisant les équations d'observation dès lors que l'on dispose d'azimuts approchés.

On indique dans cette configuration une manière judicieuse de choisir une position optimale de l'objet à mesurer de façon à disposer d'une performance optimale sur les gisements pour deux positions fixées des 2 systèmes. Cette démarche qui exploite la propagation de covariance, est générale et s'applique à l'ensemble des configurations avec des calculs qui comme ici peuvent être menés de façon à obtenir une expression analytique simple et pour des configurations plus complexes pouvant se limiter à la résolution numérique d'un système linéaire. En considérant les erreurs de mesure comme principalement bruitées, l'erreur sur la grandeur estimée (ici le gisement ou l'azimut correspondant à la lecture zéro de l'EMAR) est décrite par une matrice de covariance.

Selon cette approche basée sur la propagation de covariance, la différentiation des équations d'observation permet, après quelques calculs simples, d'exprimer la covariance $\Lambda_A$ sur les azimuts $A_{jk} = L_{jk}+G_j$ de l'objet k en fonction des covariances sur les différences de position $\Lambda_{\Delta P}$ et les mesures de distance $\Lambda_R$ sous la forme :

$$\Lambda_A = N^{-1}\left[\Lambda_{\Delta P} + \begin{pmatrix} -\sin A_1 & \sin A_2 \\ -\cos A_1 & \cos A_2 \end{pmatrix}\Lambda_R \begin{pmatrix} -\sin A_1 & \sin A_2 \\ -\cos A_1 & \cos A_2 \end{pmatrix}^T\right](N^{-1})^T$$

où la matrice 2×2 N du système d'inconnues A1 et A2 s'inverse simplement avec :

$$N^{-1} = \frac{1}{R_1 R_2 \sin(A_2 - A_1)}\begin{pmatrix} R_2 \sin A_2 & R_2 \cos A_2 \\ R_1 \sin A_1 & R_1 \cos A_1 \end{pmatrix}$$

Avec des erreurs identiques ou voisines sur les deux systèmes optroniques, la configuration de meilleure performance correspond à des visées symétriques, c'est-à-dire en visant un objet se situant sur la médiatrice du segment joignant les deux positions des systèmes optroniques. Pour cette configuration on a : A2=-A1=-A et R1=R2=R et si l'on néglige la corrélation sur les coordonnées de position, on a :

$$\Lambda_A = \frac{1}{R^2 \sin^2 2A}\begin{pmatrix} \Lambda_{\Delta Y} \cos^2 A + \Lambda_{\Delta X} \sin^2 A & \Lambda_{\Delta Y} \cos^2 A - \Lambda_{\Delta X} \sin^2 A \\ \Lambda_{\Delta Y} \cos^2 A - \Lambda_{\Delta X} \sin^2 A & \Lambda_{\Delta X} \sin^2 A + \Lambda_{\Delta Y} \cos^2 A \end{pmatrix}$$

Ainsi avec des composantes identiques d'erreur de position ($\Lambda_{\Delta X}=\Lambda_{\Delta Y}=\sigma_{\Delta P}^2$) et en se rappelant que dans cette configuration de visée, la distance R à l'objet est liée à la base B et l'azimut A par la relation R=0.5*B/sinA, on peut écrire l'écart type d'azimut sous la forme :

$$\sigma_A^2 = \sigma_G^2 + \sigma_L^2 = \frac{\sigma_{\Delta P}^2 + 2\sigma_R^2 - \sigma_R^2 \sin^2 2A}{B^2 \cos^2 A}$$

Rechercher le lieu optimal pour l'objet à utiliser, revient à trouver la performance maximale sur l'estimation de G pour une base donnée lorsque l'azimut A varie. Dans ce cas $\sigma_G^2$ est encore maximal et correspond à la valeur $(\partial\sigma_G^2/\partial A=0)$ soit tous calculs faits à un azimut optimal A∗ vérifiant :

$$\cos^2 A_* = \frac{\sqrt{\sigma_{\Delta P}^2 + 2\sigma_R^2}}{2\sigma_R}$$

L'angle parallactique optimal γ∗, ou angle entre les deux visées (le double de la valeur d'azimut en visées symétriques), conduisant à une estimation de zéro de l'EMAR avec une performance optimale, peut être obtenu et tracé sous forme de nappe 3D avec l'expression précédente. On note qu'une amélioration ou dégradation homogène des mesures laisse invariante la valeur parallactique. La géométrie optimale ne dépend ainsi que du rapport μ de l'écart type de différence de position à celui de distance avec :

$$\cos \gamma_* = \frac{\sqrt{\sigma_{\Delta P}^2 + 2\sigma_R^2} - \sigma_R}{\sigma_R} = \sqrt{2 + \mu^2} - 1$$

Pour fixer les idées avec $\sigma_{\Delta P}$=1m et $\sigma_R$=2m, on obtient un angle parallactique de 60°. Cet angle reste inchangé si les erreurs de différence, de position et de distance restent le double l'une de l'autre et dans le cas général il est facile d'utiliser l'expression précédente pour évaluer l'angle optimal afin de choisir la distance approximative de l'objet qui donnera la meilleure performance R*=(B/2) / sin($\gamma$*/2). Ce type d'information est très utile pour le processus de formation d'équipes de systèmes optroniques collaborant.

Si l'on souhaite disposer de la performance en tout point, on peut exploiter les relations précédentes pour calculer et tracer des courbes iso-performance pour la recherche de Nord avec un objet unique.

Une fois le Nord et sa performance obtenus, il est aisé de déterminer la performance avec laquelle le système peut localiser l'objet utilisé.

La distribution spatiale de la performance peut aussi être représentée de manière plus visuelle en indiquant sur le plan horizontal, les courbes de niveau iso-performance en fonction de la position de l'objet pour un choix de position des systèmes optroniques et de qualité des mesures.

Dans l'exemple des figures 10, le gisement des 2 systèmes (S1, S2) est calculé au moyen d'un objet unique. Les 2 systèmes S1 et S2 sont représentés (vue de dessus) sur le plan (x,y) de la scène. Lorsque l'objet 'o1' est située à la position (x,y) du plan, les gisements de S1 et de S2 peuvent être calculés.

La performance théorique sur ces gisements (PGT) peut être calculée pour différentes positions et pour un jeu réaliste d'erreur de mesure. On dispose alors d'une surface d'erreur au-dessus du plan dont la hauteur est d'autant plus faible que la performance est bonne. Cette surface présente des courbes d'iso-performance dans l'espace qui peuvent être projetées dans le plan horizontal.

Sur la figure 10a, les valeurs indiquées correspondent à ces courbes pour la performance moyenne des gisements 'G1' et 'G2' exprimés en mrd. Ici le trait plein gras correspond à la performance de 1 mrad pour le gisement moyen.

Pour cette même configuration la figure 10b indique la performance (en mètres) obtenue sur la position (x1,y1) de l'objet 'o1'.

Ces courbes de PGT illustrent la dépendance de la performance par rapport à la configuration ainsi que le besoin d'adaptation de la configuration en vue atteindre la PGS.

**Configuration 2.5 (objet mobile)**

Selon une autre configuration on considère cette fois 2 systèmes optroniques collaborant pour établir simultanément leur Nord, en utilisant des mesures sur un unique objet mobile O, de coordonnées et de vitesse inconnues. L'objet peut évoluer au sol comme par exemple un piéton, un véhicule terrestre ou un bateau isolé voguant sur la mer, ou dans l'espace (aéronef). Une telle variante présente 2 intérêts :

- s'adapter à un contexte difficile très pauvre en objets sur lesquels effectuer des mesures communes,
- caractériser les cinématiques d'objets évoluant dans une scène.

Les mesures supplémentaires sont des mesures :

- depuis S1

  ◦ de distances $R_{1j}$ sur l'objet aux instants $t_j$,
  ◦ d'élévations $E_{1j}$ de l'objet aux instants $t_j$,
  ◦ d'angles relatifs horizontaux $L_{1j}$ de l'EMAR lorsque son système optronique pointe sur l'objet aux instants $t_j$,
  ◦ d'azimut approchés $A_{1j}$ de la direction système optronique-objet aux instants $t_j$.

- depuis S2 et de manière symétrique mais multi-dates

  ◦ de distances $R_{2j'}$ sur l'objet aux instants $t_{j'}$,
  ◦ d'élévations $E_{2j'}$ de l'objet aux instants $t_{j'}$,
  ◦ d'angles relatifs horizontaux $L_{2j'}$ de l'EMAR lorsque son système optronique pointe sur l'objet aux instants $t_{j'}$,
  ◦ d'azimut approchés $A_{1j'}$ de la direction système optronique-objet aux instants $t_{j'}$.

Un objet mobile unique 'k' participe aux mesures des deux systèmes.

Les quantités estimées sont :

- les gisements des deux systèmes $\overline{G_1}$ et $\overline{G_2}$,

- les coefficients caractérisant le modèle de trajectoire de l'objet mobile.

Ces quantités sont estimées par S1 et/ou par S2 comme on l'a déjà vu.

Pour cela, le système optronique exploitant les mesures réparties les interpole temporellement à partir de leur datation respective. La datation UTC disponible par exemple au niveau des récepteurs GNSS (par exemple des récepteurs GPS) constitue une échelle commune de temps ayant la précision requise. Toutefois le système aura intérêt à synchroniser ces mesures sur une base de temps de bonne cohérence et plus haute cadence (comme une prise d'image à 50 ou 100Hz) elle-même synchronisée pour disposer d'une mesure absolue à la base UTC.

Pour effectuer les mesures supplémentaires, les deux positions déterminées étant celles de S1 et S2 et pour un seul objet mobile:

- le premier système optronique S1 comporte en outre :

  ◦ un EMED apte à fournir les distances $R_{1j}$ entre S1 et l'objet mobile aux instants $t_j$,
  ◦ un inclinomètre apte à fournir les élévations $E_{1j}$ de l'objet mobile par rapport à S1 aux instants $t_j$,
  ◦ un compas magnétique informant de l'azimut approché $A_{1j}$ sur l'objet aux instants $t_j$,
  ◦ des moyens de datation et de synchronisation des mesures images, angles aux instants $t_j$, hébergés par exemple au sein de l'unité de traitement 110.

- et le second système optronique S2 comporte en outre :

  ◦ un EMAR apte à fournir l'angle relatif $L_{2j'}$ entre S2 et l'objet k aux instants $t_{j'}$,
  ◦ un EMED apte à fournir les distances $R_{2j'}$ entre S2 et l'objet mobile aux instants $t_{j'}$,
  ◦ un inclinomètre apte à fournir les élévations $E_{2j'}$ de l'objet mobile par rapport à S2 aux instants $t_{j'}$,
  ◦ un compas magnétique informant de l'azimut approché $A_{2j'}$ sur l'objet aux instants $t_{j'}$,
  ◦ des moyens de datation et de synchronisation des mesures images, angles aux instants $t_{j'}$, hébergés par exemple au sein de l'unité de traitement.

L'augmentation de vitesse de l'objet accroît la contrainte de synchronisation, et donc de qualité de datation des mesures, dans une échelle commune de temps. L'augmentation de la manœuvrabilité de l'objet accroît la complexité ou le nombre de paramètres du modèle de trajectoire et donc le nombre de mesures nécessaires à sa caractérisation. Les mesures des équipements doivent être réalisées sur des intervalles de temps qui se recouvrent en partie.

La scène peut être très pauvre en objets, lorsque par exemple en présence d'un fond homogène de type mer ou ciel. Selon cette approche, la trajectoire de l'objet est modélisée à l'ordre P sous la forme paramétrique suivante :

$$\bar{x}(t) = \sum_{p=0}^{P} \frac{a_p}{p!}(t - t_0)^p$$

$$\bar{y}(t) = \sum_{p=0}^{P} \frac{b_p}{p!}(t - t_0)^p$$

$$\bar{z}(t) = \sum_{p=0}^{P} \frac{c_p}{p!_p}(t - t_0)^p$$

où les 3P coefficients ($a_p$, $b_p$, $c_p$) sont à déterminer pour caractériser la trajectoire. Le temps t est par exemple exprimé dans la base UTC du récepteur GNSS ; $t_0$ est un temps de référence arbitraire qui permet en particulier d'améliorer la configuration numérique du système d'équation ; il peut correspondre par exemple à la date de première mesure sur l'objet.

La vitesse est obtenue en dérivant l'expression de la trajectoire en fonction du temps.

On peut éventuellement prendre en compte un décalage d'horloge entre les datations de mesures des 2 systèmes optroniques ce qui ajoute une inconnue. Ceci est inutile si l'on utilise des signaux de qualité GNSS comme ceux du GPS mais elle peut s'avérer pratique dès lors qu'une base de temps de qualité moindre est employée. Pour fixer les idées, on peut par exemple arrêter la modélisation de la trajectoire à l'ordre 2 pour représenter un objet réalisant un mouvement accéléré dans les trois directions de l'espace. Les équations d'observations sur l'objet s'écrivent alors :

- à trois instants $t_j$ depuis le système optronique S1 réalisant les mesures $R_{1j}$, $L_{1j}$ et $E_{1j}$ aux instants $t_j$ :

$$a_0 + a_1\left(t_j - t_0\right) + \frac{a_2}{2}\left(t_j - t_0\right)^2 - X_1 = R_{1j}\sin\left(L_{1j} + \overline{G}_1\right)\cos\left(E_{1j}\right)$$

$$b_0 + b_1\left(t_j - t_0\right) + \frac{b_2}{2}\left(t_j - t_0\right)^2 - Y_1 = R_{1j}\cos\left(L_{1j} + \overline{G}_1\right)\cos\left(E_{1j}\right)$$

$$c_0 + c_1\left(t_j - t_0\right) + \frac{c_2}{2}\left(t_j - t_0\right)^2 - Z_1 = R_{1j}\sin\left(E_{1j}\right)$$

- à trois instants tj' (pouvant être généralement différents de tj) depuis le système optronique S2 réalisant les mesures R2j', L2j' et E2j' aux instants tj' :

$$a_0 + a_1\left(t_{j'} - t_0\right) + \frac{a_2}{2}\left(t_{j'} - t_0\right)^2 - X_2 = R_{2j'}\sin\left(L_{2j'} + \overline{G}_2\right)\cos\left(E_{2j'}\right)$$

$$b_0 + b_1\left(t_{j'} - t_0\right) + \frac{b_2}{2}\left(t_{j'} - t_0\right)^2 - Y_2 = R_{2j'}\cos\left(L_{2j'} + \overline{G}_2\right)\cos\left(E_{2j'}\right)$$

$$c_0 + c_1\left(t_{j'} - t_0\right) + \frac{c_2}{2}\left(t_{j'} - t_0\right)^2 - Z_2 = R_{2j'}\sin\left(E_{2j'}\right)$$

Les informations approchées d'azimut $A_{0mk}$ permettent encore de linéariser les expressions trigonométriques pour l'observation sur le système Sm, $m \in \{1, 2\}$, à l'instant k avec :

$$L_{mk} + \overline{G}_m = L_{mk} + G_{0m} + \Delta\overline{G}_m = A_{mk}$$

dans lequel, disposant d'un azimut approché $A_{0mk}$, on substitue :

$$L_{mk} + \overline{G}_m = A_{0mk} + \Delta\overline{G}_m$$

pour linéariser totalement les équations d'observation et obtenir, de manière itérative pour les $\Delta G_m$ via un algorithme de type Gauss-Newton, l'ensemble des inconnues du système.

On note que le système peut aussi être résolu en éliminant les coefficients de trajectoire en soustrayant les équations membres à membres. On élimine a0 dans une première étape, puis a1 en multipliant les équations par le coefficient temporel approprié, etc ; puis renouvelant l'opération pour les équations des composantes Y et Z avec les coefficients en b et c.

Avec 11 inconnues, ou 12 si l'on introduit un délai entre les horloges des récepteurs des 2 systèmes, un jeu de mesures sur l'objet par chaque système optronique S1 et S2 sont suffisantes pour disposer de 12 équations. Ces mesures pourraient être réalisées à 2 dates identiques mais la rigidification de la trajectoire par son modèle permet de traiter des mesures à 4 dates distinctes mais de préférence comprises sur des intervalles recouvrant. La synchronisation des mesures par la base de temps du récepteur GNSS est privilégiée. Avec les 12 équations disponibles, le système d'équations est (déjà) surabondant ; le traitement proposé permet de traiter à l'identique un système d'équations qui serait surdimensionné avec davantage d'observations.

Lorsque la modélisation de trajectoire de l'objet peut se limiter à un mouvement rectiligne (P=1), le nombre d'inconnues est réduit à 8. Il est alors nécessaire de disposer d'au moins 3 mesures sur l'objet pour obtenir une solution pour les deux gisements $\overline{G}_1$ de S1 et $\overline{G}_2$ de S2.

Cette approche trouve une application efficace avec des systèmes optroniques qui disposent d'une fonction de poursuite automatique avec un mécanisme d'orientation de la LdV et un écartomètre image pour maintenir l'objet au centre image malgré ces évolutions dans la scène.

Comme autre variante à cette approche, la recherche de Nord peut aussi être conduite en l'absence de mesure de distances $R_{1j}$ et $R_{2j}$, sur l'objet mobile. Cette approche devient pertinente dès lors que le système optronique n'est pas en mesure de réaliser une MED sur l'objet, de par son éloignement ou en raison de sa faible surface équivalente ou encore simplement parce que le système n'est pas pourvu d'un EMED.

**Configuration 2.6 (mesures en bi-statique)**

Selon une autre configuration, deux systèmes optroniques S1 et S2 collaborent ; leurs moyens de communication sont optiques et assurés par un système bi-statique qui peut coder les observations par modulation d'un signal de faisceau laser. Une revue de tels systèmes est présentée dans le document : « Survey on Free Space Optical Communication - A Communication Theory Perspective 2014 ». Les technologies de communication optique/laser en espace libre (FSO/FSL) se développent et des systèmes lidar bi-statique sont proposés :

- en environnement exo-atmosphérique pour la détection de débris spatiaux "Multistatic Laser Ranging to Space Débris" Kirchner 2012,
- en environnement atmosphérique pour l'aide à l'atterrissage via l'analyse du contenu atmosphérique comme décrit dans "Unmanned Aircraft Bistatic LIDAR for CO2 Column Density Determination" 2014,
- en milieu sous-marin comme décrit dans "Experiments in bistatic Laser Line Scan (LLS) underwater imaging" Dalgleish 2009.

Ces technologies peuvent être exploitées sur des systèmes optroniques qui disposent de télémètres fonctionnant de manière appropriée en bande 0.8 à 1.5 $\mu$m pour assurer le transport de l'information entre deux systèmes optroniques délocalisés. Selon l'invention, on exploite cette technologie à titre de nouvelle modalité d'observation et de communication pour un système bi-statique collaboratif avec des systèmes optroniques ayant pour objectif de rechercher leur nord en vue de calibrer/exploiter leur EMAR.

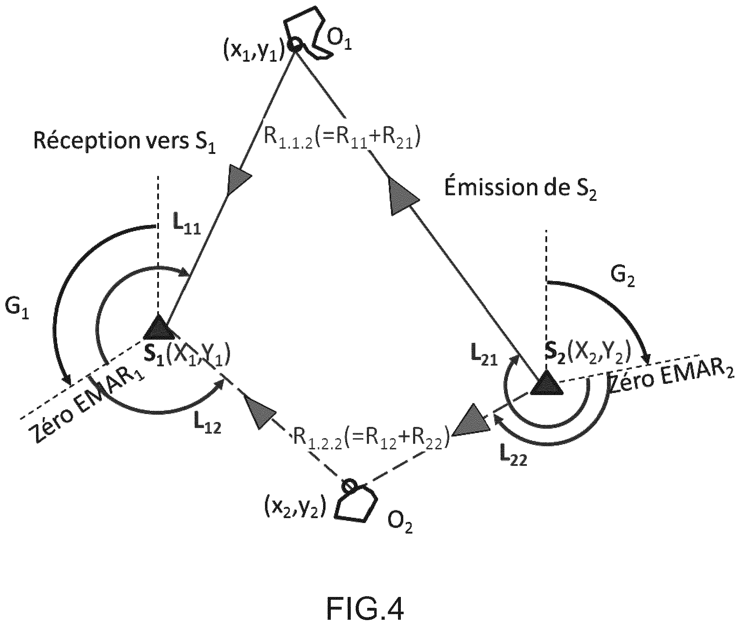

- Selon cette configuration illustrée figures 4 et 6, les deux systèmes collaborent donc avec un équipement de type laser bi-statique et avec des mesures d'une autre nature que les précédentes. Dans cette configuration limitée pour cette description à deux systèmes S1 et S2, S2 émet avec son émetteur 206 un faisceau laser pointé vers un objet 'Ok' de la scène (naturel ou artificiel) et S1 réceptionne avec son récepteur 107 le faisceau renvoyé par l'objet Ok. S1 mesure par conséquent une distance correspondant à la somme des distances entre S1 et O1 d'une part et O1 et S2 d'autre part, chaque terme de la somme n'étant pas mesuré séparément. S1 dispose des moyens lui permettant d'orienter son récepteur laser sur l'objet pointé par S2. S2 profite des capacités de modulation du signal émis, pour adjoindre au faisceau des informations préalables de mesure, en particulier ses mesures :
- de position géodésique, réalisée au moyen de son EMPG 205,
- de site sur l'objet, réalisée au moyen d'un inclinomètre 209,
- d'azimut approché sur l'objet, réalisée au moyen d'un compas magnétique 208.

En pratique, l'inclinaison de la direction visée doit permettre de rectifier l'observation dans le plan horizontal mais ceci est facilité lorsque l'on connaît la distance du système optronique à l'objet visé. On peut dans un premier temps supposer les mesures quasi horizontales pour estimer une position approchée de l'objet puis réitérer par la suite le calcul en utilisant une distance approchée via ce calcul de position initiale.

Une situation pratique est d'utiliser un azimut approché fourni par exemple par un compas magnétique, pour obtenir une position approchée de l'objet par triangulation (après communication de position du système optronique et direction visée).

L'équation d'observation bi-statique entre le système optronique S1 et le système optronique S2, qui correspond à la somme $S_{12}$ des distances S1- objet Ok et objet Ok-S2, est de la forme :

$$\sqrt{\left(x_k - X_1\right)^2 + \left(y_k - Y_1\right)^2} + \sqrt{\left(x_k - X_2\right)^2 + \left(y_k - Y_2\right)^2} = S_{12-k}$$

Si l'on dispose de 2 systèmes optroniques de coordonnées connues, de cette observation bi-statique, de la lecture horizontale goniomètre des deux systèmes optroniques, on dispose au total de 5 équations pour 6 inconnues ($\overline{R_{1k}}$, $\overline{R_{2k}}$, $\overline{x_k}$, $\overline{y_k}$, $\overline{G_1}$, $\overline{G_2}$). Aussi, comme le mode bi-statique ne permet pas d'estimer les distances individuelles, on utilise un 3ième système optronique ou un second objet.

En ajoutant les mesures plus classiques, on dispose alors de l'ensemble des observations (10 équations à 10 inconnues) figurant dans le tableau suivant qui montre les relations d'observations 2D avec 2 caméras et 2 objets participant à une mesure bi-statique :

|  | Objet O1 | Objet O2 |
|---|---|---|
| S1 | $\overline{x}_1 - X_1 = \overline{R}_{11} \sin(L_{11} + \overline{G}_1)$ <br> $\overline{y}_1 - Y_1 = \overline{R}_{11} \cos(L_{11} + \overline{G}_1)$ | $\overline{x}_2 - X_1 = \overline{R}_{12} \sin(L_{12} + \overline{G}_1)$ <br> $\overline{y}_2 - Y_1 = \overline{R}_{12} \cos(L_{12} + \overline{G}_1)$ |
| S2 | $\overline{x}_1 - X_2 = \overline{R}_{21} \sin(L_{21} + \overline{G}_2)$ <br> $\overline{y}_1 - Y_2 = \overline{R}_{21} \cos(L_{21} + \overline{G}_2)$ | $\overline{x}_2 - X_2 = \overline{R}_{22} \sin(L_{22} + \overline{G}_2)$ <br> $\overline{y}_2 - Y_2 = \overline{R}_{22} \cos(L_{22} + \overline{G}_2)$ |
| Bi statique S1 & S2 | $\sqrt{(\overline{x}_1 - X_1)^2 + (\overline{y}_1 - Y_1)^2} +$ <br> $\sqrt{(\overline{x}_1 - X_2)^2 + (\overline{y}_1 - Y_2)^2} = S_{12-1}$ | $\sqrt{(\overline{x}_2 - X_1)^2 + (\overline{y}_2 - Y_1)^2} +$ <br> $\sqrt{(\overline{x}_2 - X_2)^2 + (\overline{y}_2 - Y_2)^2} = S_{12-2}$ |

Pour 2 systèmes optroniques et 2 objets, on dispose alors d'un nombre d'observations tout juste suffisant mais d'un système d'équations non-linéaires. Pour le résoudre de manière simple on suppose disposer d'une solution approchée de la position des objets ($x_{0k}$, $y_{0k}$) obtenue via un compas magnétique et technique classique de triangulation depuis les directions de visées approchées des 2 systèmes par exemple. On pose alors :

$$\overline{x}_1 = x_{01} + \overline{dx_1}$$

$$\overline{y}_1 = y_{01} + \overline{dy_1}$$

et on recherche les incréments $\overline{dx_1}$ et $\overline{dy_1}$ supposés petits devant les distances aux caméras.

Cette information permet de déterminer des distances approchées entre les systèmes optroniques et l'objet, ainsi qu'éventuellement des gisements approchés.

Dans cette configuration « bi-statique », les positions de S1 et S2 étant déterminées, les mesures supplémentaires sont $L_{1k}$, $L_{2k}$, et des mesures d'azimut approché $A_{01k}$, $A_{02k}$. Les positions approchées des objets ($x_{0k}$, $y_{0k}$) sont obtenues comme indiqué ci-dessus.

En pratique l'équation de mesure bi-statique s'écrit pour l'entité 'k' :

$$\sqrt{(x_{0k} - X_1 + \overline{dx_k})^2 + (y_{0k} - Y_1 + \overline{dy_k})^2} + \sqrt{(x_{0k} - X_2 + \overline{dx_k})^2 + (y_{0k} - Y_2 + \overline{dy_k})^2} = S_{12}$$

soit après arrangement au premier ordre :

$$\left( \frac{x_{0k} - X_1}{R_{01k}} + \frac{x_{0k} - X_2}{R_{02k}} \right)\overline{dx_k} + \left( \frac{y_{0k} - Y_1}{R_{01k}} + \frac{y_{0k} - Y_2}{R_{02k}} \right)\overline{dy_k} = S_{12-k} - R_{01k} - R_{02k}$$

Par ailleurs, on dispose toujours des visées angulaires vérifiant les 4 équations suivantes pour (m,k= {1,2})

$$[(x_{0k} - X_m)\sin A_{0mk} + (y_{0k} - Y_m)\cos A_{0mk}]\overline{\Delta G_m} - \cos A_{0mk}\overline{dx_k} + \sin A_{0mk}\overline{dy_k} =$$
$$(x_{0k} - X_m)\cos A_{0mk} - (y_{0k} - Y_m)\sin A_{0mk}$$

où :

$$A_{0mk} = L_{mk} + G_{0m}$$

$$\overline{G_m} = G_{m0} + \overline{\Delta G_m}$$

Soit une réduction à 6 équations linéaires aux 6 inconnues ( $\overline{dx_1}$ , $\overline{dy_1}$ , $\overline{dx_2}$ , $\overline{dy_2}$ , $\overline{\Delta G_1}$ , $\overline{\Delta G_2}$ ) :

$$
\begin{cases}
\text{objet } 1 : \\
(\Delta x_{11} \sin A_{011} + \Delta y_{11} \cos A_{011})\overline{\Delta G_1} - \cos A_{011}\overline{dx_1} + \sin A_{011}\overline{dy_1} = \Delta x_{11} \cos A_{011} - \Delta y_{11} \sin A_{011} \\
(\Delta x_{21} \sin A_{021} + \Delta y_{21} \cos A_{021})\overline{\Delta G_2} - \cos A_{021}\overline{dx_1} + \sin A_{021}\overline{dy_1} = \Delta x_{21} \cos A_{021} - \Delta y_{21} \sin A_{021} \\
\left(\dfrac{\Delta x_{11}}{R_{011}} + \dfrac{\Delta x_{21}}{R_{021}}\right)\overline{dx_1} + \left(\dfrac{\Delta y_{11}}{R_{011}} + \dfrac{\Delta y_{21}}{R_{021}}\right)\overline{dy_1} = S_{12-1} - R_{011} - R_{021} \\
\text{objet } 2 : \\
(\Delta x_{12} \sin A_{012} + \Delta y_{12} \cos A_{012})\overline{\Delta G_1} - \cos A_{012}\overline{dx_2} + \sin A_{012}\overline{dy_2} = \Delta x_{12} \cos A_{012} - \Delta y_{12} \sin A_{012} \\
(\Delta x_{22} \sin A_{022} + \Delta y_{22} \cos A_{022})\overline{\Delta G_2} - \cos A_{022}\overline{dx_2} + \sin A_{022}\overline{dy_2} = \Delta x_{22} \cos A_{022} - \Delta y_{22} \sin A_{022} \\
\left(\dfrac{\Delta x_{12}}{R_{012}} + \dfrac{\Delta x_{22}}{R_{022}}\right)\overline{dx_2} + \left(\dfrac{\Delta y_{12}}{R_{012}} + \dfrac{\Delta y_{22}}{R_{022}}\right)\overline{dy_2} = S_{12-2} - R_{021} - R_{022}
\end{cases}
$$

Avec pour notation :

$$\Delta x_{mk} = x_{0k} - X_m \quad ; \quad \Delta y_{mk} = y_{0k} - Y_m$$

Du précédent système linéaire on estime aisément les deux gisements $\overline{G_1}$ et $\overline{G_2}$ de S1 et S2 et accessoirement la position des 2 objets sujets aux mesures.

Remarque : En cas de vision directe optique des 2 systèmes S1 et S2, contrainte qui peut aussi être facilitée en exploitant les cartes de visibilité avec les MNT, les deux systèmes peuvent préalablement établir une communication pour s'échanger des informations de protocole, leurs positions géodésiques et directions approchées sur des objets participant à des mesures.

Ce type de collaboration présente les avantages suivants :

- l'incorporation conjointe des aspects de mesure et transmission d'information,
- l'absence d'erreur naturelle liée à des pointés sur une zone légèrement distincte de l'objet, alors cette erreur doit être réduite par l'utilisateur dans le cas de 2 système classiques,
- un gain de masse et de coût respectif des EMED des deux systèmes.

**Configuration 3.1 (1 EMAR, M systèmes optroniques, K objets)**

Selon une autre configuration, on considère M systèmes collaborant en vue d'estimer un nord sur le seul système optronique S1 disposant d'un EMAR, avec M≥2. Les M-1 autres systèmes ne disposent pas d'EMAR, et les systèmes optroniques réalisent des mesures sur K objets, avec K≥2 (au minimum K=2 objets dès lors que les M-1 systèmes ne disposent pas de moyen de mesure d'azimut approché).

- Le premier système optronique S1 comporte un EMED ou "Equipement de Mesure Electronique de Distance" de type télémètre avec un émetteur 106 et un récepteur 107, dont la direction est harmonisée sur l'axe du dispositif d'acquisition 101, apte à fournir la distance $R_{1k}$ entre S1 et l'objet Ok,
- Et chacun des 'M-1' autres systèmes optroniques Sm m∈{2,...,M} comportent en outre :

    ◦ un EMED de type télémètre avec un émetteur 206 et un récepteur 207, dont la direction est harmonisée sur l'axe du dispositif 201 d'acquisition de S2, apte à fournir la distance $R_{mk}$ entre Sm et l'objet Ok.

- Les positions géographiques des M-1 autres systèmes sont fournies par les moyens de positionnement (EMPG) équipant chaque système optronique. Les mesures supplémentaires sont des mesures de distances réalisées depuis les systèmes optroniques sur les objets 'Ok'.
- Les systèmes optroniques S1,... , SM, réalisent leur mesures sur K objets Ok ($k \in \{1,...,K\}$) ; les M-1 autres systèmes S2, ..., SM envoient leurs mesures à S1.
- La quantité calculée est le gisement $\overline{G_1}$ de l'EMAR de S1.

On dispose des équations d'observations qui permettent de se ramener à la forme :

$$\sin(L_{1K} + \psi_{1m})\cos\overline{G_1} + \cos(L_{1K} + \psi_{1m})\sin\overline{G_1} = \frac{B_{1m}^2 + R_{1K}^2 - R_{mK}^2 - 2R_{1K}\Delta Z_{m1}\sin E_{1K}}{2R_{1K}B_{1m}\cos E_{1K}}$$

ou encore :

$$\left(\Delta X_{m1}\sin L_{1K} + \Delta Y_{m1}\cos L_{1K}\right)\cos\overline{G_1} + \left(\Delta X_{m1}\cos L_{1K} - \Delta Y_{m1}\sin L_{1K}\right)\sin\overline{G_1} = \frac{B_{1m}^2 + R_{1K}^2 - R_{mK}^2 - 2R_{1K}\Delta Z_{m1}\frac{\sin E_{1K}}{2R_{1K}\cos E_{1K}}}{}$$

avec :

$$\Delta X_{m1} = X_m - X_1 \quad ; \quad \Delta Y_{m1} = Y_m - Y_1 \quad ; \quad B_{m1} = \sqrt{(X_m - X_1)^2 + (Y_m - Y_1)^2 + (Z_m - Z_1)^2}$$

$$\psi_{1m} = \arctan(\Delta Y_{m1}; \Delta X_{m1})$$

et donc pour les différentes observations, un gisement $\overline{G_1}$ vérifiant le système :

$$\begin{pmatrix} \Delta X_{21}\sin L_{11} + \Delta Y_{21}\cos L_{11} & \Delta X_{21}\cos L_{11} - \Delta Y_{21}\sin L_{11} \\ \vdots & \vdots \\ \Delta X_{21}\sin L_{1K} + \Delta Y_{21}\cos L_{1K} & \Delta X_{21}\cos L_{1K} - \Delta Y_{21}\sin L_{1K} \\ \vdots & \vdots \\ \Delta X_{M1}\sin L_{11} + \Delta Y_{M1}\cos L_{11} & \Delta X_{M1}\cos L_{MK} - \Delta Y_{M1}\sin L_{1K} \\ \vdots & \vdots \\ \Delta X_{M1}\sin L_{1K} + \Delta Y_{M1}\cos L_{1K} & \Delta X_{M1}\cos L_{1K} - \Delta Y_{M1}\sin L_{1K} \end{pmatrix} \begin{pmatrix} \overline{\cos G_1} \\ \overline{\sin G_1} \end{pmatrix} = \begin{pmatrix} \frac{B_{12}^2 + R_{11}^2 - R_{21}^2 - 2R_{11}\Delta Z_{21}\sin E_{11}}{2R_{11}\cos E_{11}} \\ \vdots \\ \frac{B_{12}^2 + R_{1K}^2 - R_{2K}^2 - 2R_{1K}\Delta Z_{21}\sin E_{1K}}{2R_{1K}\cos E_{1K}} \\ \vdots \\ \frac{B_{1M}^2 + R_{1K}^2 - R_{MK}^2 - 2R_{1K}\Delta Z_{M1}\sin E_{1K}}{2R_{11}\cos E_{11}} \\ \vdots \\ \frac{B_{1M}^2 + R_{1K}^2 - R_{MK}^2 - 2R_{1K}\Delta Z_{M1}\sin E_{1K}}{2R_{1K}\cos E_{1K}} \end{pmatrix}$$

Soit posant A la matrice du système, D le second membre de composante ($D_{mk}$) et $N_{MK}$ la matrice $A^T A$ (où $A^T$ est la matrice transposée de A) :

EP 3 472 557 B1

$$A_{MK} = \begin{pmatrix} \Delta X_{21}\sin L_{11} + \Delta Y_{21}\cos L_{11} & \Delta X_{21}\cos L_{11} - \Delta Y_{21}\sin L_{11} \\ \vdots & \vdots \\ \Delta X_{21}\sin L_{1K} + \Delta Y_{21}\cos L_{1K} & \Delta X_{21}\cos L_{1K} - \Delta Y_{21}\sin L_{1K} \\ \vdots & \vdots \\ \Delta X_{M1}\sin L_{11} + \Delta Y_{M1}\cos L_{11} & \Delta X_{M1}\cos L_{MK} - \Delta Y_{M1}\sin L_{1K} \\ \vdots & \vdots \\ \Delta X_{M1}\sin L_{1K} + \Delta Y_{M1}\cos L_{1K} & \Delta X_{M1}\cos L_{1K} - \Delta Y_{M1}\sin L_{1K} \end{pmatrix} \quad F_{MK} = \begin{pmatrix} D_{11} \\ \vdots \\ D_{1K} \\ \vdots \\ D_{M1} \\ \vdots \\ D_{MK} \end{pmatrix}$$

Avec pour $n \in \{2,...,M\}$ et $l \in \{1,...,K\}$ :

$$D_{n\ell} = \frac{B_{1n}^2 + R_{1\ell}^2 - R_{n\ell}^2 - 2R_{1\ell}\Delta Z_{n1}\sin E_{1\ell}}{2R_{1\ell}B_{1n}\cos E_{1\ell}}$$

$$\gamma_{n\ell} = L_{1\ell} + \psi_{1n}$$

Avec pour solution du système :

$$\left( \frac{\overline{\cos G_1}}{\overline{\sin G_1}} \right) = N_{MK}^{-1} A_{MK}^T F_{MK}$$

Soit posant A la matrice du système, F le second membre et $N_{MK}$ la matrice $A^T A$ :

$$N_{MK} = A_{MK}^T A_{MK} = \begin{pmatrix} \sum\limits_{k=1}^{K}\sum\limits_{m=1}^{M}\sin^2\gamma_{mk} & \sum\limits_{k=1}^{K}\sum\limits_{m=2}^{M}\sin\gamma_{mk}\cos\gamma_{mk} \\ \sum\limits_{k=1}^{K}\sum\limits_{m=2}^{M}\sin\gamma_{mk}\cos\gamma_{mk} & \sum\limits_{k=1}^{K}\sum\limits_{m=2}^{M}\cos^2\gamma_{mk} \end{pmatrix}$$

Soit un déterminant pour N de :

$$\Delta_{MK} = \tfrac{1}{4}\left[ K^2(M-1)^2 - \left( \sum\limits_{k=1}^{K}\sum\limits_{m=2}^{M}\cos 2\gamma_{mk} \right)^2 - \left( \sum\limits_{k=1}^{K}\sum\limits_{m=2}^{M}\sin 2\gamma_{mk} \right)^2 \right]$$

La performance est maximale lorsque ce déterminant est nul ; soit pour :

$$\sum\limits_{k=1}^{K}\sum\limits_{m=1}^{M-1}\cos 2\gamma_{mk} = 0 \quad et \quad \sum\limits_{k=1}^{K}\sum\limits_{m=1}^{M-1}\sin 2\gamma_{mk} = 0$$

Tout calcul fait, la solution s'écrit comme :

$$\overline{G_1} = \arctan\left( \overline{\sin G_1} ; \overline{\cos G_1} \right)$$

avec :

$$\overline{\sin G_1} = \frac{1}{\Delta_{MK}} \sum_{k=1}^{K} \sum_{m=2}^{M} \sum_{\ell=1}^{K} \sum_{n=2}^{M} D_{n\ell} \sin \gamma_{mk} \sin(\gamma_{mk} - \gamma_{n\ell})$$

$$\overline{\cos G_1} = \frac{1}{\Delta_{MK}} \sum_{k=1}^{K} \sum_{m=2}^{M} \sum_{\ell=1}^{K} \sum_{n=2}^{M} D_{n\ell} \cos \gamma_{mk} \sin(\gamma_{n\ell} - \gamma_{mk})$$

ou, donnant une expression compacte du gisement $\overline{G_1}$, sous la forme :

$$\overline{G_1} = \arctan\left( \sum_{k=1}^{K} \sum_{m=2}^{M} \sum_{\ell=1}^{K} \sum_{n=2}^{M} D_{n\ell} \sin \gamma_{mk} \sin(\gamma_{mk} - \gamma_{n\ell}) ; \sum_{k=1}^{K} \sum_{m=2}^{M} \sum_{\ell=1}^{K} \sum_{n=2}^{M} D_{n\ell} \cos \gamma_{mk} \sin(\gamma_{n\ell} - \gamma_{mk}) \right)$$

où $(n,m) \in \{2,...,M\}^2$ et $(l,k) \in \{1,...,K\}^2$ et atan(a ;b) correspond à la fonction atan(b/a) bijective sur $[-\pi,\pi]$, souvent aussi notée atan2.

L'expression précédente indique ainsi la valeur du gisement de l'EMAR du système S1 collaborant avec M-1 autres systèmes optroniques qui lui communiquent des mesures sur K objets, les mesures en question étant les positions géographiques des M-1 autres systèmes, et la distance entre les M-1 autres systèmes et les K objets.

En pratique si la mesure du système 'n' sur l'objet '$\ell$' n'est pas réalisée, l'équation d'observation correspondante n'existe pas et ne doit pas être prise en compte dans les sommations. Pour généraliser l'expression à ces situations, des symboles de Kroner noté '$\delta_{n\ell}$', valant 1 si le système 'n' réalise la mesure sur l'objet '$\ell$' et 0 en cas contraire pourait être utilisés.

L'intérêt de l'expression précédente est d'obtenir un gisement dans une configuration qui ne nécessite pas de recourir à un compas magnétique ou à toute forme d'information nécessaire pour disposer d'une valeur de référence d'orientation approchée à quelques degrés. Une fois le gisement obtenu, il est recommandé de linéariser le système d'observation initial autour de cette valeur et chercher une valeur optimale de $\overline{G_1}$ sous forme d'itération dans une procédure de type Gauss-Newton ; avec pour seule inconnue l'incrément $\overline{\Delta G_1}$ déterminé à chaque étape. Cette recommandation s'applique particulièrement si le nombre d'objets K est réduit comme par ex K=2, avec deux objets proches l'un de l'autre (en regard de la distribution des objets p/r aux systèmes optroniques).

**Configuration 3.2 (passive)**

Dans une approche passive, l'acquisition conjointe par deux systèmes optroniques délocalisés peut utiliser pratiquement la géométrie épipolaire des 2 systèmes optroniques en vue de réduire sur un second système optronique le délai de recherche d'un objet acquis par un premier système optronique. Cette géométrie épipolaire qui repose sur la contrainte géométrique posée par les modèles de prise de vue des 2 systèmes optroniques indique qu'un objet de la scène de coordonnées images connues correspondant à une direction spatiale dans la scène, se trouve situé sur une courbe (dite épipolaire) dans l'image du deuxième système optronique. Si l'objet se déplace sur la direction initiale (en modifiant sa profondeur dans la scène) correspondant à un point dans l'image du premier système optronique, alors il se déplace sur la courbe épipolaire dans l'image du second système optronique. Dans le cas le plus classique de senseur, dont la géométrie de prise de vue correspond à un modèle sténopé, ces courbes épipolaires sont des droites. Au lieu de chercher un objet de la scène dans tout le plan image (espace 2D) du deuxième système optronique, on limite ainsi sa recherche à une courbe/droite (espace 1D).

Pour effectuer ces mesures supplémentaires, le premier système optronique S1 comporte déjà un inclinomètre (ou un EMAR à 2 axes) apte à fournir aussi les élévations $E_{1k}$ de l'objet k par rapport à S1, et dispose d'un GNSS apte à fournir la position de S1.

Le second système optronique S2 comporte en outre :

    o un inclinomètre apte à fournir les élévations $E_{2k}$ de l'objet k par rapport à S2,
    ∘ un dispositif (EMAR ou « Equipement de Mesure Angulaire horizontal Relatif ») de mesure d'angle relatif $L_{2k}$ entre S2 et l'objet k,
    ∘ un GNSS apte à fournir la position de S2.

Le troisième système optronique S3 comporte en outre :

◦ un inclinomètre apte à fournir les élévations $E_{3k}$ de l'objet k par rapport à S3,

◦ un dispositif (EMAR ou « Equipement de Mesure Angulaire horizontal Relatif ») de mesure d'angle relatif $L_{3k}$ entre S3 et l'objet k,

◦ un GNSS apte à fournir la position de S3.

Sur la base des observations échangées (L1k, mesures supplémentaires et au moins trois positions de systèmes optroniques) chaque système optronique disposant d'un EMAR va déterminer son gisement $\overline{G_m}$ et éventuellement la performance associée.

Tout d'abord des coordonnées approchées des objets sont déterminées. Pour cela, l'utilisation de valeurs d'azimuts approchés permet de déterminer par triangulation de couple de mesures des positions approchées des objets ($x_{0k}$, $Y_{0k}$, $Z_{0k}$).

Une autre approche permettant de disposer de valeurs approchées des positions des objets, consiste à résoudre simplement le système linéaire suivant :

$$\overline{x}_{0k} \cos A_{0mk} - \overline{y}_{0k} \sin A_{0mk} = X_m \cos A_{0mk} - Y_m \sin A_{0mk}$$

où les azimuts-approchés sont fixés d'après la valeur fournie par le compas magnétique :

$$A_{0mk} = L_{mk} + G_{0m}$$

$$S1\begin{cases} \overline{x}_1 \cos A_{011} - \overline{y}_1 \sin A_{011} = X_1 \cos A_{011} - Y_1 \sin A_{011} \\ \overline{x}_2 \cos A_{012} - \overline{y}_2 \sin A_{012} = X_1 \cos A_{012} - Y_1 \sin A_{012} \\ \vdots \\ \overline{x}_K \cos A_{01K} - \overline{y}_K \sin A_{01K} = X_1 \cos A_{01K} - Y_1 \sin A_{01K} \end{cases}$$

$$S2\begin{cases} \overline{x}_1 \cos A_{021} - \overline{y}_1 \sin A_{021} = X_2 \cos A_{021} - Y_2 \sin A_{021} \\ \overline{x}_2 \cos A_{022} - \overline{y}_2 \sin A_{022} = X_2 \cos A_{022} - Y_2 \sin A_{022} \\ \vdots \\ \overline{x}_K \cos A_{02K} - \overline{y}_K \sin A_{02K} = X_2 \cos A_{02K} - Y_2 \sin A_{02K} \end{cases}$$

$$\vdots$$

$$SM\begin{cases} \overline{x}_1 \cos A_{0M1} - \overline{y}_1 \sin A_{0M1} = X_M \cos A_{0M1} - Y_M \sin A_{0M1} \\ \overline{x}_2 \cos A_{0M2} - \overline{y}_2 \sin A_{0M2} = X_M \cos A_{0M2} - Y_M \sin A_{0M2} \\ \vdots \\ \overline{x}_K \cos A_{0MK} - \overline{y}_K \sin A_{0MK} = X_M \cos A_{0MK} - Y_M \sin A_{0MK} \end{cases}$$

En oubliant l'indice 0 indiquant l'obtention de valeurs approchées pour ne pas surcharger les expressions, les coordonnées des K objets sont donc obtenues, selon :

$$\begin{pmatrix} \cos A_{11} & -\sin A_{11} & 0 & 0 & \cdots & 0 & 0 \\ 0 & 0 & \cos A_{12} & -\sin A_{21} & \cdots & 0 & 0 \\ \vdots & \vdots & \vdots & \vdots & \ddots & \vdots & \vdots \\ 0 & 0 & 0 & 0 & \cdots & \cos A_{1K} & -\sin A_{1K} \\ \cos A_{21} & -\sin A_{21} & 0 & 0 & \cdots & 0 & 0 \\ 0 & 0 & \cos A_{22} & -\sin A_{22} & \cdots & 0 & 0 \\ \vdots & \vdots & \vdots & \vdots & \ddots & \vdots & \vdots \\ 0 & 0 & 0 & 0 & \cdots & \cos A_{2K} & -\sin A_{2K} \\ \vdots & \vdots & \vdots & \vdots & \vdots & \vdots & \vdots \\ \vdots & \vdots & \vdots & \vdots & \vdots & \vdots & \vdots \\ \cos A_{M1} & -\sin A_{M1} & 0 & 0 & \cdots & 0 & 0 \\ 0 & 0 & \cos A_{M2} & -\sin A_{M2} & \cdots & 0 & 0 \\ \vdots & \vdots & \vdots & \vdots & \ddots & \vdots & \vdots \\ 0 & 0 & 0 & 0 & \cdots & \cos A_{MK} & -\sin A_{MK} \end{pmatrix} \begin{pmatrix} \overline{x}_1 \\ \overline{y}_1 \\ \overline{x}_2 \\ \overline{y}_2 \\ \overline{x}_K \\ \overline{y}_K \end{pmatrix} = \begin{pmatrix} X_1 \cos A_{11} - Y_1 \sin A_{11} \\ \vdots \\ X_1 \cos A_{1K} - Y_1 \sin A_{1K} \\ \vdots \\ X_M \cos A_{M1} - Y_M \sin A_{M1} \\ \vdots \\ X_M \cos A_{MK} - Y_M \sin A_{MK} \end{pmatrix}$$

Une fois les 2K coordonnées ( $\overline{x_{0k}}$, $\overline{y_{0k}}$ ) disponibles pour k∈{1,...K}, on peut linéariser l'ensemble du système et chercher M valeurs $\overline{\Delta G_m}$ et K correctifs de coordonnées ($d\overline{x}_k, d\overline{y}_k$) vérifiant :

$$\overline{x}_k = x_{0k} + d\overline{x}_k \quad ; \quad k \in \left\{1, \cdots, K\right\}$$

$$\overline{y}_k = y_{0k} + d\overline{y}_k \quad ; \quad k \in \left\{1, \cdots, K\right\}$$

$$\overline{G}_m = G_{0m} + \overline{\Delta G_m} \quad ; \quad m \in \left\{1, \cdots, M\right\}$$

Le développement de l'équation d'observation générique donne :

$$\left(x_{0k} + d\overline{x}_k - X_m\right)\cos\left(A_{0mk} + \overline{\Delta G_m}\right) = \left(y_{0k} + d\overline{y}_k - Y_m\right)\sin\left(A_{0mk} + \overline{\Delta G_m}\right)$$

soit :

$$\left(x_{0k} + d\overline{x}_k - X_m\right)\left(\cos A_{0mk} - \sin A_{mk0}\overline{\Delta G_m}\right) = \left(y_{0k} + d\overline{y}_k - Y_m\right)\left(\sin A_{0mk} + \cos A_{0mk}\overline{\Delta G_m}\right)$$

et en développant :

$$\left[\left(x_{0k} - X_m\right)\sin A_{0mk} + \left(y_{0k} - Y_m\right)\cos A_{0mk}\right]\overline{\Delta G_m} - \cos A_{0mk}d\overline{x}_k + \sin A_{0mk}d\overline{y}_k = \left(x_{0k} - X_m\right)\cos A_{0mk} - \left(y_{0k} - Y_m\right)\sin A_{0mk}$$

d'où des incréments solutions du système linéaire :

$$\left(\Delta x_{mk}\sin A_{0mk} + \Delta y_{mk}\cos A_{0mk}\right)\overline{\Delta G_m} - \cos A_{0mk}d\overline{x}_k + \sin A_{0mk}d\overline{y}_k = \Delta x_{mk}\cos A_{0mk} - \Delta y_{mk}\sin A_{0mk}$$

avec :

$$\Delta x_{mk} = x_{0k} - X_m \quad ; \quad \Delta y_{mk} = y_{0k} - Y_m$$

Soit pour chaque système Sm et pour chaque objet k :

$$S1\begin{cases} (\Delta\bar{x}_{11}\sin A_{011} + \Delta\bar{y}_{11}\cos A_{011})\overline{\Delta G_1} - \cos A_{011}d\bar{x}_1 + \sin A_{011}d\bar{y}_1 = \Delta\bar{x}_{11}\cos A_{011} - \Delta\bar{y}_{11}\sin A_{011} \\ (\Delta\bar{x}_{12}\sin A_{012} + \Delta\bar{y}_{12}\cos A_{012})\overline{\Delta G_1} - \cos A_{012}d\bar{x}_2 + \sin A_{012}d\bar{y}_2 = \Delta\bar{x}_{12}\cos A_{012} - \Delta\bar{y}_{12}\sin A_{012} \\ \vdots \\ (\Delta\bar{x}_{1K}\sin A_{01K} + \Delta\bar{y}_{1K}\cos A_{01K})\overline{\Delta G_1} - \cos A_{01K}d\bar{x}_K + \sin A_{01K}d\bar{y}_K = \Delta\bar{x}_{1K}\cos A_{01K} - \Delta\bar{y}_{1K}\sin A_{01K} \end{cases}$$

$$S2\begin{cases} (\Delta\bar{x}_{21}\sin A_{021} + \Delta\bar{y}_{21}\cos A_{021})\overline{\Delta G_2} - \cos A_{021}d\bar{x}_1 + \sin A_{021}d\bar{y}_1 = \Delta\bar{x}_{21}\cos A_{021} - \Delta\bar{y}_{21}\sin A_{021} \\ (\Delta\bar{x}_{22}\sin A_{022} + \Delta\bar{y}_{22}\cos A_{022})\overline{\Delta G_2} - \cos A_{022}d\bar{x}_2 + \sin A_{022}d\bar{y}_2 = \Delta\bar{x}_{22}\cos A_{022} - \Delta\bar{y}_{22}\sin A_{022} \\ \vdots \\ (\Delta\bar{x}_{2K}\sin A_{02K} + \Delta\bar{y}_{2K}\cos A_{02K})\overline{\Delta G_2} - \cos A_{02K}d\bar{x}_K + \sin A_{02K}d\bar{y}_K = \Delta\bar{x}_{2K}\cos A_{02K} - \Delta\bar{y}_{2K}\sin A_{02K} \end{cases}$$

$$\vdots$$

$$SM\begin{cases} (\Delta\bar{x}_{M1}\sin A_{0M1} + \Delta\bar{y}_{M1}\cos A_{0M1})\overline{\Delta G_M} - \cos A_{0M1}d\bar{x}_1 + \sin A_{0M1}d\bar{y}_1 = \Delta\bar{x}_{M1}\cos A_{0M1} - \Delta\bar{y}_{M1}\sin A_{0M1} \\ (\Delta\bar{x}_{M2}\sin A_{0M2} + \Delta\bar{y}_{M2}\cos A_{0M2})\overline{\Delta G_M} - \cos A_{0M2}d\bar{x}_2 + \sin A_{0M2}d\bar{y}_2 = \Delta\bar{x}_{M2}\cos A_{0M2} - \Delta\bar{y}_{M2}\sin A_{0M2} \\ \vdots \\ (\Delta\bar{x}_{MK}\sin A_{0MK} + \Delta\bar{y}_{MK}\cos A_{0MK})\overline{\Delta G_M} - \cos A_{0MK}d\bar{x}_K + \sin A_{0MK}d\bar{y}_K = \Delta\bar{x}_{MK}\cos A_{0MK} - \Delta\bar{y}_{MK}\sin A_{0MK} \end{cases}$$

et sous forme de système linéaire :
et

$$A\begin{pmatrix} \overline{\Delta G_1} \\ \vdots \\ \overline{\Delta G_M} \\ d\bar{x}_1 \\ d\bar{y}_1 \\ \vdots \\ d\bar{x}_K \\ d\bar{y}_K \end{pmatrix} = \begin{pmatrix} \Delta\bar{x}_{11}\cos A_{011} - \Delta\bar{y}_{11}\sin A_{011} \\ \Delta\bar{x}_{12}\cos A_{012} - \Delta\bar{y}_{12}\sin A_{012} \\ \vdots \\ \Delta\bar{x}_{1K}\cos A_{01K} - \Delta\bar{y}_{1K}\sin A_{01K} \\ \Delta\bar{x}_{21}\cos A_{021} - \Delta\bar{y}_{21}\sin A_{021} \\ \Delta\bar{x}_{22}\cos A_{022} - \Delta\bar{y}_{22}\sin A_{022} \\ \vdots \\ \Delta\bar{x}_{2K}\cos A_{02K} - \Delta\bar{y}_{2K}\sin A_{02K} \\ \vdots \\ \Delta\bar{x}_{M1}\cos A_{0M1} - \Delta\bar{y}_{M1}\sin A_{0M1} \\ \Delta\bar{x}_{M2}\cos A_{0M2} - \Delta\bar{y}_{M2}\sin A_{0M2} \\ \vdots \\ \Delta\bar{x}_{MK}\cos A_{0MK} - \Delta\bar{y}_{MK}\sin A_{0MK} \end{pmatrix}$$

où

$$A = \begin{pmatrix} A_G & A_{xy} \end{pmatrix}$$

$$A_G = \begin{pmatrix}
\Delta\overline{x}_{11}\sin A_{011} + \Delta\overline{y}_{11}\cos A_{011} & 0 & 0 & 0 \\
\Delta\overline{x}_{12}\sin A_{012} + \Delta\overline{y}_{12}\cos A_{012} & 0 & 0 & 0 \\
\vdots & \vdots & \vdots & 0 \\
\Delta\overline{x}_{1K}\sin A_{01K} + \Delta\overline{y}_{1K}\cos A_{01K} & 0 & 0 & 0 \\
& \Delta\overline{x}_{21}\sin A_{021} + \Delta\overline{y}_{21}\cos A_{021} & \cdots & 0 \\
& \Delta\overline{x}_{22}\sin A_{022} + \Delta\overline{y}_{22}\cos A_{022} & \cdots & 0 \\
& \vdots & \cdots & \vdots \\
& \Delta\overline{x}_{2K}\sin A_{02K} + \Delta\overline{y}_{2K}\cos A_{02K} & \cdots & 0 \\
& & \ddots & \\
& & & \Delta\overline{x}_{M1}\sin A_{0M1} + \Delta\overline{y}_{M1}\cos A_{0M2} \\
& & & \Delta\overline{x}_{M2}\sin A_{0M2} + \Delta\overline{y}_{M2}\cos A_{0.} \\
& & & \Delta\overline{x}_{MK}\sin A_{0MK} + \Delta\overline{y}_{MK}\cos A_{0.}
\end{pmatrix}$$

$$A_{xy} = \begin{pmatrix}
-\cos A_{011} & \sin A_{011} & 0 & 0 & \cdots & 0 & 0 \\
0 & 0 & -\cos A_{012} & \sin A_{012} & \cdots & 0 & 0 \\
\vdots & \vdots & \vdots & \vdots & \ddots & \vdots & \vdots \\
0 & 0 & 0 & 0 & \cdots & -\cos A_{01K} & \sin A_{01K} \\
-\cos A_{021} & \sin A_{021} & 0 & 0 & \cdots & 0 & 0 \\
0 & 0 & -\cos A_{022} & \sin A_{022} & \cdots & 0 & 0 \\
\vdots & \vdots & \vdots & \vdots & \ddots & \vdots & \vdots \\
0 & 0 & 0 & 0 & \cdots & -\cos A_{02K} & \sin A_{02K} \\
\vdots & \vdots & \vdots & \vdots & \ddots & \vdots & \vdots \\
-\cos A_{0M1} & \sin A_{0M1} & 0 & 0 & \cdots & 0 & 0 \\
0 & 0 & -\cos A_{0M2} & \sin A_{0M2} & \cdots & 0 & 0 \\
\vdots & \vdots & \vdots & \vdots & \ddots & \vdots & \vdots \\
0 & 0 & 0 & 0 & \cdots & -\cos A_{0MK} & \sin A_{0MK}
\end{pmatrix}$$

Une fois les corrections déterminées, les quantités inconnues sont mises à jour et les éléments des matrices sont recalculés, le système est à nouveau résolu pour déterminer une nouvelle correction comme dans une approche Gauss-Newton. Les itérations sont interrompues lorsque la norme pondérée (ou fractionnée de façon à séparer la comparaison des variables angulaires et de position) du vecteur solution passe sous un seuil faible et cohérent (par exemple 1/10) de l'objectif recherché de performance (PGS).

Pour disposer d'un degré de liberté minimal, permettant de résoudre le système, on précise la relation donnant le nombre minimal d'objets $K_{3D}$ sur lesquels doivent être réalisées les mesures depuis M systèmes. Pour des mesures en 3D :

$$K_{3D} \geq \frac{M}{2M - 3}$$

$K_{3D}$ étant positif, il découle alors d'un besoin d'au moins M=2 systèmes et dans ce cas d'au moins $K_{3D}$=2 objets à observer.

Dans le cas de mesures 2D, ou en limite du cas 2D lorsque les mesures d'élévations sont faibles devant la PGS, les nombres d'observations et d'inconnues sont différents. Pour un même nombre de M systèmes, la disponibilité d'un nombre de degré de liberté suffisant (DoF≥0) correspond à un nombre d'objet $K_{2D}$ vérifiant :

$$K_{2D} \geq \frac{M}{M-2}$$

soit, pour cette situation, un besoin minimal de 3 systèmes et d'alors au moins $K_{2D}=3$ objets à observer.

On rappelle que le nombre de degrés de liberté, désigné par Degree of Freedom en langage anglo-Saxon (DoF), est un nombre obtenu en retranchant du nombre d'équations disponibles le nombre d'inconnues ou quantités à estimer. Il est donc positif ou nul au minimum.

Une fois les gisements et coordonnées estimés avec un nombre donné d'objets, ces valeurs peuvent être utilisées pour être améliorées dans une approche apportant des mesures complémentaires sur de nouveaux objets.

**Configuration 3.3 (estimation attitude)**

Les configurations précédentes visent à caler l'axe de rotation vertical de l'EMAR de chaque système optronique, en l'alignant sur la verticale locale de sa position (direction de la gravité). Ou dit autrement elles permettent de positionner son plan de rotation horizontal dans le plan perpendiculaire à la direction du fil à plomb. Cette nouvelle configuration permet d'estimer l'attitude complète de l'EMAR dans le repère géographique local et donc de procéder sans cette opération préalable de calibration de son axe de rotation.

Selon cette configuration 3.3 on utilise M systèmes optroniques similaires collaborant Sm, pour $m \in \{1,...M\}$, dotés de moyens de mesure d'angle relatif, et on calcule leurs attitudes en repère géographique local c'est-à-dire les rotations autour des trois directions d'orientation (les 3 angles d'Euler $\varphi_m$, $\theta_m$, $\psi_m$, la rotation fixant le Nord correspondant à $\psi_m$) ; cela revient pour S1 à calculer deux autres directions d'orientation, son gisement complétant la troisième rotation autour de l'axe vertical. Les systèmes optroniques sont tous équipés d'EMAR (EMAR 120, 220, ...) sous forme de goniomètres 2 axes donc aptes à fournir également les élévations, et collaborent en s'échangeant des mesures sur au moins 2 objets communs distincts de la scène ($K \geq 2$).

En hypothèse, les axes de l'EMAR sont supposés grossièrement positionnés à l'horizontale ; soit en pratique $|\varphi_m| < 10°$ et $|\theta_m| < 10°$.

Les mesures supplémentaires sont des mesures :

- Pour le système optronique 1 :

  ○ de distance $R_{1k}$ entre S1 et l'objet k, $k \in \{1,...,K\}$,
  ○ d'élévation $E_{1k}$ sur l'objet k, $k \in \{2,...,K\}$ depuis S1,
  ○ d'angle relatif horizontal $L_{1k}$ de la visée depuis S1 sur l'objet k, $k \in \{2,...,K\}$.
  ○ d'azimut approché $A_{01k}$ de la visée depuis S1 sur l'objet k, $k \in \{1,...,K\}$.

- Pour le système optronique m, $m \in \{2, ..., M\}$ :

  ○ de distance $R_{mk}$ entre Sm et l'objet k, $k \in \{1,...,K\}$,
  ○ d'élévation $E_{mk}$ sur l'objet k, $k \in \{1,...,K\}$ depuis Sm,
  ○ d'angle relatif horizontal $L_{mk}$ de la visée depuis Sm sur l'objet k, $k \in \{1,...,K\}$.
  ○ d'azimut approché $A_{0mk}$ de la visée depuis S1 sur l'objet k, $k \in \{1,...,K\}$.

- K objets ($K \geq 2$) participent aux mesures des M systèmes.
- Les quantités recherchées sont :

  ○ les M gisements $\overline{G_m}$ (ou ici $\overline{\psi_m}$) qui caractérisent l'orientation de l'axe de référence de l'EMAR (Nord) dans le plan horizontal,
  ○ les angles de roulis $\overline{\varphi_m}$ et tangage $\overline{\theta_m}$ caractérisant les rotations élémentaires (inférieures à 10 degrés) permettant de faire passer le plan de référence de l'EMAR dans le plan horizontal.
  ○ accessoirement les coordonnées des K objets qui peuvent de toute façon être évaluées après estimation des attitudes précédentes sur chaque EMAR.

Pour effectuer ces mesures supplémentaires, les M positions de S1, ..., SM étant déterminées :

- le système optronique Sm comporte en outre :

   ◦ un EMED 'm06', 'm07' apte à fournir les distances $R_{mk}$ entre Sm et l'objet Ok,
   ◦ un inclinomètre 'm09' apte à fournir les élévations $E_{mk}$ de l'objet Ok par rapport à Sm, (sauf si élévations fournies par un goniomètre 2 axes)
   ◦ un compas magnétique 'm08' apte à fournir un azimut approché $A_{0mk}$ sur l'objet Ok depuis Sm avec une précision de quelques degrés.

Chaque EMAR '120', '220', ..., 'M20' doit orienter les 3 axes du goniomètre dans le repère topographique local. On suppose que l'inclinaison de l'EMAR est raisonnablement faible (réglage grossier limité à une précision de quelques degrés (moins de 5 °). Le système peut ainsi initialiser une attitude approchée.

Dans un modèle simple, la transformation $T_E{}^G$ passant du repère des mesures de chaque EMAR au repère géographique utilise 3 rotations (ex avec rotations autour de x, y, z sous forme des angles d'Euler ( $\overline{\varphi_m}$ , $\overline{\theta_m}$ , $\overline{\psi_m}$ ). Elle transforme une direction $s_E$ mesurée dans le repère (RE) de l'EMAR en une direction $s_G$ mesurée dans le repère géographique local avec :

$$\mathbf{s_G} = \mathbf{T_E^G}\ \mathbf{s_E}$$

$$\begin{pmatrix} u_G \\ v_G \\ w_G \end{pmatrix} = \mathbf{T_E^G} \begin{pmatrix} u_E \\ v_E \\ w_E \end{pmatrix}$$

La direction $s_G$=[$u_G$ ; $v_G$ ; $w_G$] du repère géographique local se détermine simplement à partir de la direction $s_E$=[$u_E$ ; $v_E$ ; $w_E$] dans le repère embase de l'EMAR à partir des lectures horizontale (L) et verticale (E). Pour le système optronique Sm, la direction vers l'objet k s'écrit :

$$\begin{pmatrix} u_E \\ v_E \\ w_E \end{pmatrix} = \begin{pmatrix} \cos L_{mk} \cos E_{mk} \\ \sin L_{mk} \cos E_{mk} \\ \sin E_{mk} \end{pmatrix}$$

Mesurant la distance $R_{mk}$ depuis le système optronique m vers l'objet 'k', cette direction géographique s'exprime en fonction de celle dans le repère de l'EMAR par :

$$\begin{pmatrix} \overline{x}_k - X_m \\ \overline{y}_k - Y_m \\ \overline{z}_k - Z_m \end{pmatrix} = R_{mk} \mathbf{r}_{\overline{\psi}_m} \mathbf{r}_{\overline{\theta}_m} \mathbf{r}_{\overline{\varphi}_m} \begin{pmatrix} u_E \\ v_E \\ w_E \end{pmatrix}$$

Avec :

$$\begin{pmatrix} u_G \\ v_G \\ w_G \end{pmatrix} = \frac{1}{R_{mk}} \begin{pmatrix} \overline{x}_k - X_m \\ \overline{y}_k - Y_m \\ \overline{z}_k - Z_m \end{pmatrix}$$

La matrice d'attitude de l'EMAR se décompose en trois rotations $r_\psi$, $r_\theta$, $r_\varphi$ autour des axes (x,y,z) du repère local. En pratique $\overline{\psi_m}$ correspond au gisement du système Sm qui est initialisé avec la mesure approchée du compas et les deux autres angles $\overline{\varphi_m}$ et $\overline{\theta_m}$ ) sont supposés petits (inférieurs à quelques degrés) ce qui permet d'écrire :

$$\frac{1}{R_{mk}}\begin{pmatrix} \overline{x}_k - X_m \\ \overline{y}_k - Y_m \\ \overline{z}_k - Z_m \end{pmatrix} = \mathbf{r}_{\overline{\psi}_m} \begin{pmatrix} 1 & 0 & \overline{\theta}_m \\ 0 & 1 & 0 \\ -\overline{\theta}_m & 0 & 1 \end{pmatrix} \begin{pmatrix} 1 & 0 & 0 \\ 0 & 1 & -\overline{\varphi}_m \\ 0 & \overline{\varphi}_m & 1 \end{pmatrix} \begin{pmatrix} u_E \\ v_E \\ w_E \end{pmatrix}$$

L'angle de rotation $\psi$ autour de z correspond à la lecture augmenté du zéro de l'EMAR. Par différences des équations d'observations du système Sm à celles du système optronique S1 $m \in \{2,...,M\}$ on obtient pour l'objet k :

$$\mathbf{r}_\psi = \begin{pmatrix} \cos\overline{\psi}_m & -\sin\overline{\psi}_m & 0 \\ \sin\overline{\psi}_m & \cos\overline{\psi}_m & 0 \\ 0 & 0 & 1 \end{pmatrix} = \begin{pmatrix} \cos(A_{0mk} + \Delta\overline{\psi}_m) & -\sin(A_{0mk} + \Delta\overline{\psi}_m) & 0 \\ \sin(A_{0mk} + \Delta\overline{\psi}_m) & \cos(A_{0mk} + \Delta\overline{\psi}_m) & 0 \\ 0 & 0 & 1 \end{pmatrix}$$

Avec pour le membre de droite l'utilisation des azimuts approchés et de l'équivalence entre G et $\psi$ :

$$\overline{\psi}_m \equiv L_{mk} + \overline{G}_m = A_{0mk} + \Delta\overline{G}_m \equiv A_{0mk} + \Delta\overline{\psi}_m$$

Soit en développant l'expression :

$$R_{mk}\begin{pmatrix} w_G \sin A_{0mk} & w_G \cos A_{0mk} & -u_G \sin A_{0mk} - v_G \cos A_{0mk} \\ -w_G \cos A_{0mk} & w_G \sin A_{0mk} & u_G \cos A_{0mk} - v_G \sin A_{0mk} \\ v_G & -u_G & 0 \end{pmatrix}\begin{pmatrix} \overline{\varphi}_m \\ \overline{\theta}_m \\ \Delta\overline{\psi}_m \end{pmatrix} =$$

$$\begin{pmatrix} \overline{x}_k - X_m \\ \overline{y}_k - Y_m \\ \overline{z}_k - Z_m \end{pmatrix} - R_{mk}\begin{pmatrix} u_G \cos A_{0mk} - v_G \sin A_{0mk} \\ u_G \sin A_{0mk} + v_G \cos A_{0mk} \\ w_G \end{pmatrix}$$

On peut développer ces expressions dans le cas de M (M≥2) systèmes optroniques et k objets. Dans la mesure où les coordonnées des objets sont inconnues on considère, pour l'ensemble des systèmes, les mesures sur l'objet particulier k et on travaille avec la différence aux mesures d'un système pivot (S1 par exemple) :

S2-S1:

$$X_2 - X_1 - R_{1k}\left(u_{1k} \cos A_{01k} - v_{1k} \sin A_{01k}\right) + R_{2k}\left(u_{2k} \cos A_{02k} - v_{2k} \sin A_{02k}\right)$$
$$- R_{1k}w_{1k}\theta_1 \cos A_{01k} - R_{1k}w_{1k}\varphi_1 \sin L_{1k0} + R_{2k}w_{2k}\theta_2 \cos A_{02k} + R_{2k}w_{2k}\varphi_2 \sin A_{02k} =$$
$$+ w_{1k}R_{1k} \sin A_{01k}\varphi_1 + w_{1k}R_{1k} \cos A_{01k}\theta_1 - R_{1k}\left(u_{1k} \sin A_{01k} + v_{1k} \cos A_{01k}\right)\Delta\psi_1$$
$$- w_{2k}R_{2k} \sin A_{02k}\varphi_2 - w_{2k}R_{2k} \cos A_{02k}\theta_2 + R_{2k}\left(u_{2k} \sin A_{02k} + v_{2k} \cos A_{02k}\right)\Delta\psi_2$$

$$Y_2 - Y_1 - R_{1k}\left(u_{1k} \sin A_{01k} + v_{1k} \cos A_{01k}\right) + R_{2k}\left(u_{2k} \sin A_{02k} + v_{2k} \cos A_{02k}\right)$$
$$- R_{1k}w_{1k}\theta_1 \sin A_{01k} + R_{1k}w_{1k}\varphi_1 \cos A_{01k} + R_{2k}w_{2k}\theta_2 \sin A_{02k} + R_{2k}w_{2k}\varphi_2 \cos A_{02k} =$$
$$- w_{1k}R_{1k} \cos A_{01k}\varphi_1 + w_{1k}R_{1k} \sin A_{01k}\theta_1 + R_{1k}\left(u_{1k} \cos A_{01k} - v_{1k} \sin A_{01k}\right)\Delta\psi_1$$
$$+ w_{2k}R_{2k} \cos A_{02k}\varphi_2 - w_{2k}R_{2k} \sin A_{02k}\theta_2 - R_{2k}\left(u_{2k} \cos A_{02k} - v_{2k} \sin A_{02k}\right)\Delta\psi_2$$

$$Z_2 - Z_1 - R_{1k}\left(-u_{1k}\theta_1 + v_{1k}\varphi_1 + w_{1k}\right) + R_{2k}\left(-u_{2k}\theta_2 + v_{2k}\varphi_2 + w_{2k}\right) =$$
$$- u_{1k}R_{1k}\theta_1 + u_{2k}R_{2k}\theta_2 + v_{1k}R_{1k}\varphi_1 - v_{2k}R_{2k}\varphi_2$$

*Sm* - *S*1:

$$X_m - X_1 - R_{1k}\left(u_{1k}\cos A_{01k} - v_{1k}\sin A_{01k}\right) + R_{mk}\left(u_{mk}\cos A_{0mk} - v_{mk}\sin A_{0mk}\right)$$
$$- R_{1k}w_{1k}\theta_1\sin A_{01k} + R_{1k}w_{1k}\varphi_1\cos A_{01k} + R_{mk}w_{mk}\theta_{m0}\cos A_{0mk} + R_{mk}w_{mk}\varphi_m\sin A_{0mk} =$$
$$+ w_{1k}R_{1k}\sin A_{01k}\varphi_1 + w_{1k}R_{1k}\cos A_{01k}\theta_1 - R_{1k}\left(u_{1k}\sin A_{01k} + v_{1k}\cos A_{01k}\right)\Delta\psi_1$$
$$- w_{mk}R_{mk}\sin A_{0mk}\varphi_m - w_{mk}R_{mk}\cos A_{01k}\theta_m + R_{mk}\left(u_{mk}\sin A_{0mk} + v_{mk}\cos A_{0mk}\right)\Delta\psi_m$$

$$Y_m - Y_1 - R_{1k}\left(u_{1k}\sin A_{01k} + v_{1k}\cos A_{01k}\right) + R_{2k}\left(u_{2k}\sin A_{0mk} + v_{2k}\cos A_{0mk}\right)$$
$$- R_{1k}w_{1k}\theta_1\sin A_{01k} + R_{1k}w_{1k}\varphi_1\cos A_{01k} + R_{mk}w_{mk}\theta_m\sin A_{0mk} + R_{mk}w_{mk}\varphi_m\cos A_{0mk} =$$
$$- w_{1k}R_{1k}\cos A_{01k}\varphi_1 + w_{1k}R_{1k}\sin A_{01k}\theta_1 + R_{1k}\left(u_{1k}\cos A_{01k} - v_{1k}\sin A_{01k}\right)\Delta\psi_1$$
$$+ w_{mk}R_{mk}\cos A_{0mk}\varphi_2 - w_{mk}R_{mk}\sin A_{0mk}\theta_m - R_{mk}\left(u_{mk}\cos A_{0mk} - v_{mk}\sin A_{0mk}\right)\Delta\psi_m$$

$$Z_m - Z_1 - R_{1k}\left(-u_{1k}\theta_1 + v_{1k}\varphi_{10} + w_{1k}\right) + R_{mk}\left(-u_{mk}\theta_m + v_{mk}\varphi_m + w_{mk}\right) =$$
$$- u_{1k}R_{1k}\theta_1 + u_{mk}R_{mk}\theta_m + v_{1k}R_{1k}\varphi_1 - v_{mk}R_{mk}\varphi_m$$

Soit un système linéaire de 3×(M-1)×K équations pour les 3xM inconnues d'angles élémentaires ($\overline{\varphi m}$, $\overline{\theta m}$, $\overline{\Delta\psi m}$). Partant des valeurs nulles pour tous ces petits angles, un algorithme de type Gauss-Newton procédant avec la matrice pseudo-inverse comme déjà évoqué et réitérant en 2 ou 3 étapes, suffit à obtenir la performance dans la gamme d'objectif évoqué. Lors de chaque étape, les valeurs des quantités inconnues sont mises à jour à partir des incréments estimés.

Dans cette approche générale (M systèmes optroniques et K objets), procédant par différences de coordonnées de position des systèmes optroniques, le nombre de degrés de liberté est fixé à 3×M×(K-1)-3 :

- le nombre d'équations d'observation est égal à 3 (M-1) × K,
- le nombre d'inconnues est égal à 3 × M.

En termes d'observabilité, M=2 et K=2 objets sont au minimum nécessaires pour répondre au besoin d'estimation d'attitude. Nous avons vérifié l'aptitude à estimer les attitudes des 2 systèmes dans cette configuration. Pour s'en assurer de manière générale, l'homme du métier peut en évaluer la performance au moyen d'une méthode Monte-Carlo en caractérisant par exemple la qualité d'estimation d'attitude pour le système Sm d'après le critère :

$$\chi_m = \sqrt{\left(\psi_m^* - \psi_m^\Diamond\right)^2 + \left(\theta_m^* - \theta_m^\Diamond\right)^2 + \left(\varphi_m^* - \varphi_m^\Diamond\right)^2}$$

où $\psi^*$ est la valeur estimée et $\psi^\Diamond$ la valeur vraie. Pour l'ensemble des systèmes collaborant la moyenne de cette expression peut par exemple être utilisée comme critère global de qualité moyenne avec :

$$\chi = \frac{1}{M}\sum_{m=1}^{M}\chi_m$$

Comme indiqué précédemment, des objets peuvent encore être ajoutés en les sélectionnant a posteriori, selon la performance accessible au regard de l'objectif visé de performance.

L'estimation d'attitude des systèmes optroniques en repère géographique local est accessible pour ces systèmes dès lors qu'ils partagent plusieurs directions spatiales correspondant à des objets communs de la scène et ceci sans nécessiter de direction ou de position de référence pour ces objets. Une fois l'attitude estimée pour ces systèmes, chacun peut par exemple réaliser une fonction de type pistage d'objet :

- de manière autonome en pistant les directions angulaires dans son propre environnement et en affectant des directions absolues avec la qualité d'attitude estimée précédemment,

- de manière collaborative en estimant les directions locales des objets comme ci-dessus puis leur distance par triangulation passive en associant les informations images des objets détectés dans l'espace commun de chaque système.

**Configuration 4.1 (en partie sans dispositif de positionnement / M>2)**

On considère une configuration où M systèmes S1, S2, ..., SM collaborent en disposant partiellement d'EMPG. Cette variante de collaboration s'applique si l'un ou plusieurs des systèmes optroniques collaborant ne dispose pas de moyens de positionnement, soit parce qu'il ne dispose pas d'EPMG soit parce qu'il n'a pas de réception GNSS (par exemple lorsque le système est situé à l'intérieur d'un bâtiment, ou parce que les signaux GNSS sont masqués ou brouillés). On a indiqué que l'observabilité (obtention d'une solution unique et correcte) nécessite au moins 2 positions dans le réseau ; pour M systèmes collaborant, le nombre maximal autorisé de systèmes sans EMPG sera donc de M-2.
A partir de l'échange d'observations sur des objets de coordonnées et de directions géographiques toutes inconnues, les systèmes optroniques vont déterminer leurs gisements ainsi que les positions géodésiques des systèmes optroniques dépourvus d'EMPG.
En toute généralité (a contrario il suffit de permuter les indices), on considère que S1 et SM disposent de réceptions correctes et que M-2 systèmes sont potentiellement sans GNSS. Les M systèmes collaborent sur K objets.

- Le premier système optronique S1 comporte un EMED ou "Equipement de Mesure Electronique de Distance" de type télémètre avec un émetteur 106 et un récepteur 107, dont la direction est harmonisée sur l'axe du dispositif d'imagerie 101, apte à fournir la distance $R_{1k}$ entre S1 et l'objet Ok. Il dispose de plus :

  ○ D'un compas magnétique 108, ou tout autre moyen apte à fournir un azimut approché $A_{1k}$ de l'objet Ok et
  ○ D'un inclinomètre 109 apte à fournir l'élévation $E_{1k}$ de l'objet Ok par rapport à S1.

- Le dernier système optronique SM dispose de la même configuration.
- Et chacun des 'M-2' autres systèmes optroniques Sm $m \in \{2,...,M-1\}$ dispose d'une configuration équivalente sauf qu'il ne possède pas d'EMPG ou de réception GNSS ou de toute autre information (carte, amer, ...) qui pourrait lui permettre de déterminer sa position.
- Les systèmes optroniques réalisent leurs mesures sur K objets Ok ($k \in \{1,...,K\}$)
- Les quantités calculées sont les gisements $\overline{G_m}$ des EMAR des M systèmes ; les positions ($\overline{X_m, Y_m}$) sont celles des M-2 systèmes sans EMPG ; les positions ($\overline{x_k, y_k}$) sont celles des objets sur lesquels sont effectuées les mesures.

S'il dispose des observations nécessaires, un système peut estimer les gisements de tous les systèmes et les communiquer ensuite à chaque autre système concerné. Plus généralement, chaque système qui dispose des observations en provenance d'autres systèmes peut estimer leurs gisements.
Dans la configuration particulière où la collaboration s'effectue sur un nombre minimal de K=2 objets O1 et O2, on dispose, en utilisant les mêmes expressions et notations que les précédentes (voir config 3.2 par exemple) entre valeurs d'azimut approché, lectures EMAR et valeurs de gisement, des relations suivantes :

| | Objet O1 | Objet O2 |
|---|---|---|
| **S1** | $\overline{x}_1 - X_1 = r_{11} \sin\left(A_{011} + \overline{\Delta G_1}\right)$ <br> $\overline{y}_1 - Y_1 = r_{11} \cos\left(A_{011} + \overline{\Delta G_1}\right)$ | $\overline{x}_2 - X_1 = r_{12} \sin\left(A_{012} + \overline{\Delta G_2}\right)$ <br> $\overline{y}_2 - Y_1 = r_{12} \cos\left(A_{012} + \overline{\Delta G_2}\right)$ |
| **S2 (pas de GPS)** | $\overline{x}_1 - \overline{X}_2 = r_{21} \sin\left(A_{021} + \overline{\Delta G_2}\right)$ <br> $\overline{y}_1 - \overline{Y}_2 = r_{21} \cos\left(A_{021} + \overline{\Delta G_2}\right)$ | $\overline{x}_2 - \overline{X}_2 = r_{22} \sin\left(A_{022} + \overline{\Delta G_2}\right)$ <br> $\overline{y}_2 - \overline{Y}_2 = r_{22} \cos\left(A_{022} + \overline{\Delta G_2}\right)$ |
| **SM=S3** | $\overline{x}_1 - X_M = r_{M1} \sin\left(A_{0M1} + \overline{\Delta G_M}\right)$ <br> $\overline{y}_1 - Y_M = r_{M1} \cos\left(A_{0M1} + \overline{\Delta G_M}\right)$ | $\overline{x}_2 - X_M = r_{M2} \sin\left(A_{0M2} + \overline{\Delta G_M}\right)$ <br> $\overline{y}_2 - Y_M = r_{M2} \cos\left(A_{0M2} + \overline{\Delta G_M}\right)$ |

La quantité 'r$_{mk}$' représente toujours la projection dans le plan horizontal de la distance du système Sm à l'objet Ok, réalisée au moyen de la mesure d'élévation 'E$_{mk}$'.

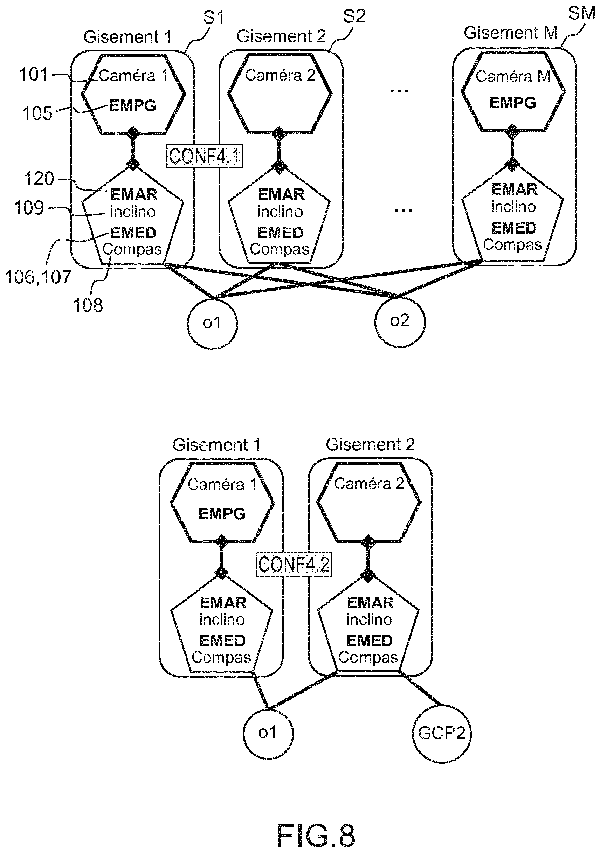

De manière plus générale on dispose avec M systèmes de 4M équations à 3M inconnues (nombre de degrés de liberté ou DOF=M). Pour l'exemple de M=3 systèmes S1, S2, S3 (config 4.1 de la figure 8) cela correspond à résoudre un système de 12 équations à 9 inconnues. En pratique l'un des 3 systèmes pourrait ne pas observer l'un des 2 objets ; il resterait alors 10 équations d'observation qui permettraient encore d'estimer les 9 inconnues. Cette possibilité d'observation partielle des objets s'applique bien entendu avec davantage de systèmes et d'objets et ce sur la plupart des configurations décrites.

Par élimination des coordonnées inconnues des objets on écrit :

$$\overline{X}_2 - X_1 = r_{11} \sin\left(A_{011} + \overline{\Delta G_1}\right) - r_{21} \sin\left(A_{021} + \overline{\Delta G_2}\right)$$
$$\overline{Y}_2 - Y_1 = r_{11} \cos\left(A_{011} + \overline{\Delta G_1}\right) - r_{21} \cos\left(A_{021} + \overline{\Delta G_2}\right)$$
$$\overline{X}_2 - X_1 = r_{12} \sin\left(A_{012} + \overline{\Delta G_1}\right) - r_{22} \sin\left(A_{022} + \overline{\Delta G_2}\right)$$
$$\overline{Y}_2 - Y_1 = r_{12} \cos\left(A_{012} + \overline{\Delta G_1}\right) - r_{22} \cos\left(A_{022} + \overline{\Delta G_2}\right)$$
$$\vdots$$
$$X_M - \overline{X}_2 = r_{21} \sin\left(A_{021} + \overline{\Delta G_2}\right) - r_{M1} \sin\left(A_{0M1} + \overline{\Delta G_M}\right)$$
$$Y_M - \overline{Y}_2 = r_{21} \cos\left(A_{021} + \overline{\Delta G_2}\right) - r_{M1} \cos\left(A_{0M1} + \overline{\Delta G_M}\right)$$
$$X_M - \overline{X}_2 = r_{22} \sin\left(A_{022} + \overline{\Delta G_2}\right) - r_{M2} \sin\left(A_{0M2} + \overline{\Delta G_M}\right)$$
$$Y_M - \overline{Y}_2 = r_{22} \cos\left(A_{022} + \overline{\Delta G_2}\right) - r_{M2} \cos\left(A_{0M2} + \overline{\Delta G_M}\right)$$

Dans le cas plus général de M systèmes, cette élimination conserve le nombre 'M' de degré de liberté puisqu'on dispose de 4M-4 équations pour 3M-4 inconnues.

Pour cet exemple de 3 systèmes S1, S2, S3, on obtient 8 équations pour 5 inconnues.

Si l'on cherche prioritairement à extraire les gisements, on peut éliminer les coordonnées inconnues des systèmes sans EMPG pour écrire en utilisant les 4 premières et dernières équations :

$$X_M - X_1 = r_{11} \sin\left(A_{011} + \overline{\Delta G_1}\right) - r_{M1} \sin\left(A_{0M1} + \overline{\Delta G_M}\right)$$

$$X_M - X_1 = r_{12} \sin\left(A_{012} + \overline{\Delta G_1}\right) - r_{M2} \sin\left(A_{0M2} + \overline{\Delta G_M}\right)$$

$$Y_M - Y_1 = r_{11} \cos\left(A_{011} + \overline{\Delta G_1}\right) - r_{M1} \cos\left(A_{0M1} + \overline{\Delta G_M}\right)$$

$$Y_M - Y_1 = r_{12} \cos\left(A_{012} + \overline{\Delta G_1}\right) - r_{M2} \cos\left(A_{0M2} + \overline{\Delta G_M}\right)$$

Par développement limité des expressions trigonométriques on obtient $\overline{\Delta G_1}$ et $\overline{\Delta G_M}$ en résolvant le système suivant :

$$\begin{pmatrix} r_{11}\cos A_{011} & -r_{M1}\cos A_{0M1} \\ r_{12}\cos A_{012} & -r_{M2}\cos A_{0M2} \\ -r_{11}\sin A_{011} & r_{M1}\sin A_{0M1} \\ -r_{12}\sin A_{012} & r_{M2}\sin A_{0M2} \end{pmatrix} \begin{pmatrix} \overline{\Delta G_1} \\ \overline{\Delta G_M} \end{pmatrix} = \begin{pmatrix} X_M - X_1 - r_{11}\sin A_{011} + r_{M1}\sin A_{0M1} \\ X_M - X_1 - r_{12}\sin A_{012} + r_{M2}\sin A_{0M2} \\ Y_M - Y_1 - r_{11}\cos A_{011} + r_{M1}\cos A_{0M1} \\ Y_M - Y_1 - r_{12}\cos A_{012} + r_{M2}\cos A_{0M2} \end{pmatrix}$$

L'étape suivante utilise les gisements estimés avec $\overline{\Delta G1}$ et $\overline{\Delta GM}$, pour déterminer les coordonnées ( $\overline{x_1}$ , $\overline{y_1}$ )

et ($\overline{x_2}$, $\overline{y_2}$) des objets 'o1' et 'o2' à partir des premières et dernières relations d'observation. La redondance des observations peut être gérée soit en prenant la valeur moyenne de chaque coordonnée calculée soit en cherchant les valeurs optimales dans une approche linéaire de type moindres carrés.

L'étape finale utilise dans le cas général les coordonnées obtenues des objets pour estimer les 'M-2' gisements à partir des quantités $\overline{\Delta G_m}$ ainsi que les M-2 coordonnées des systèmes ($\overline{X_m}$, $\overline{Y_m}$) pour $m \in \{2, M-1\}$. Pour cela, on linéarise les fonctions trigonométriques dans les 4M-4 relations d'observation correspondant aux systèmes sans EMPG. On résout ensuite de manière itérative un système linéaire de 4M-4 équations à 3M-6 inconnues (2M-4 pour les positions systèmes et M-2 pour les gisements).

Dans ce schéma de résolution, on rappelle que la gestion de différences de coordonnées des systèmes est favorable en vue de réduire le bilan d'erreur, en particulier si les EMPG travaillent sur un schéma de type GNSS (suppression d'erreur de propagation ionosphérique et troposphérique sur une zone de quelques dizaines de kilomètres).

**Configuration 4.2 (en partie sans dispositif de positionnement/ 1 amer)**

Selon une autre configuration, on considère 2 systèmes collaborant avec pour spécificité :

- collecte de mesures des systèmes S1 et S2 sur un objet commun 'Ok' (k=1) de la scène de coordonnées inconnues ($\overline{x_1}$, $\overline{y_1}$, $\overline{z_1}$) ;
- absence de réception GNSS sur S2 (coordonnées géodésiques de S2 inconnues et donc de position inconnue ($\overline{X_2}$, $\overline{Y_2}$, $\overline{Z_2}$) ;
- capacité de S2 à réaliser des mesures sur un amer k=2 (ou GCP acronyme de l'expression anglo-saxonne Ground Control Point) de coordonnées connues ($x_2$, $y_2$, $z_2$) ;
- éventuelle mise œuvre préalable d'une collaboration avec d'autres systèmes travaillant par exemple avec un dispositif similaire à la configuration 5.1 pour construire les coordonnées du GCP.

Cette mise en œuvre préalable est réalisée si l'on souhaite éviter la contrainte de connaissance des coordonnées d'un amer ou d'une direction de référence. L'étape préliminaire utilise au minimum un objet de la scène de coordonnées inconnues et un sous-ensemble de 2 systèmes sur des positions délocalisées depuis lesquelles les réceptions GNSS permettent l'utilisation de leur EPMG.

On a indiqué en préambule que ces méthodes chercheur de nord basées sur amers étaient performantes mais contraignantes vis-à-vis de la gestion de bases de données d'amers mais aussi en termes de probabilités d'en trouver à proximité des systèmes. L'étape peut :

- soit exploiter 2 systèmes optroniques déjà présents sur zone pour construire un amer à partir d'un objet de coordonnées inconnues sur lequel sont effectuées les mesures collaboratives, y compris sur des objets naturel (arbres, véhicule a l'arrêt).
- soit exploiter la progression ou le déplacement d'un système optronique sur le terrain tout en allégeant la masse et le délai de mise en œuvre, par exploitation de la seule partie portable d'un système (par exemple exploitation de la caméra sans mise sur trépied et exploitation goniomètre).

Remarque : dans le cas d'utilisation d'un système unique se déplaçant, cette configuration comprend le cas de mesures sur des objets partagés depuis des positions le long d'un trajet, certains stationnements du système ne permettant pas de mesure avec EMPG (ex sans réception GNSS).

Pour décrire cette configuration, on considère deux systèmes S1 et S2 collaborant au moyen de mesures sur :

- un objet commun k=1 de coordonnées inconnues,
- un GCP construit, partiellement visible depuis l'unique système S2.

Les deux systèmes optroniques réalisent alors des observations sur l'objet n°1 commun de la scène et S2 y ajoute ses observations sur l'objet GCP (Ground Control Point) (k=2).

Les mesures supplémentaires sont des mesures :

- de distance $R_{11}$ entre S1 et l'objet 1 et $R_{2k}$ entre S2 et l'objet $k \in \{1,2\}$,
- d'élévation $E_{2k}$ entre S2 et l'objet k,
- d'azimut approché $A_{011}$ de S1 sur l'objet 01,
- d'azimut approchés $A_{021}$ et $A_{022}$ de S2 sur les objets O1 et O2.

Deux objets sont destinés aux observations ; seul l'objet 1 fait l'objet de mesure des deux systèmes, le GCP est observé uniquement par S2.

Les quantités à estimer en priorité sont les gisements de S1 et de S2 et les coordonnées géodésiques de S2, accessoirement les coordonnées de l'objet n°1 et les performances sur ces quantités.

Pour effectuer les mesures supplémentaires, les deux positions déterminées étant celles de S1 et S2 et avec K=2 :

- Le premier système optronique S1 comporte en outre :

  ◦ un EMED 106, 107 apte à fournir la distance $R_{11}$ entre S1 et l'objet O1,
  ◦ un compas magnétique 108, ou tout autre moyen lui permettant de disposer d'une orientation approchée de l'azimut de l'objet O1 vu depuis S1.

- Et le second système optronique S2 comporte en outre :

  ◦ un EMED de type télémètre 206 et 207 dont la direction est harmonisée sur l'axe du dispositif d'acquistion de S2 201, apte à fournir la distance $R_{21}$ entre S2 et l'objet 01, et la distance $R_{22}$ entre S2 et l'objet O2 (GCP),
  ◦ un inclinomètre 209 apte à fournir les élévations $E_{2k}$ des objets $k \in \{1,2\}$ par rapport à S2.
  ◦ un compas magnétique 208 permettant de disposer d'une orientation approchée de l'azimut de l'objet Ok vu depuis S2.

- un objet Ok (k=1) est observé depuis S1 et deux objets (k=1 & 2) sont observés depuis S2. L'objet O1 dispose de coordonnées connues (amers ou « GCP »)
- les quantités à estimer sont les gisements des deux systèmes et la position géodésique de S2.

Les observations se répartissent comme suit.

| | Objet 1 (commun) | Objet 2 (GCP visible de S2) |
|---|---|---|
| S1 | $\overline{x}_1 - X_1 = R_{11}\sin\left(L_{11} + \overline{G}_1\right)\cos E_{11}$ $\overline{y}_1 - Y_1 = R_{11}\cos\left(L_{11} + \overline{G}_1\right)\cos E_{11}$ $\overline{z}_1 - Z_1 = R_{11}\sin E_{11}$ | (invisible depuis S1) |
| S2 (GPS denied) | $\overline{x}_1 - \overline{X}_2 = R_{21}\sin\left(L_{21} + \overline{G}_2\right)\cos E_{21}$ $\overline{y}_1 - \overline{Y}_2 = R_{21}\cos\left(L_{21} + \overline{G}_2\right)\cos E_{21}$ $\overline{z}_1 - \overline{Z}_2 = R_{21}\sin E_{21}$ | $x_2 - \overline{X}_2 = R_{22}\sin\left(L_{22} + \overline{G}_2\right)\cos E_{22}$ $y_2 - \overline{Y}_2 = R_{22}\cos\left(L_{22} + \overline{G}_2\right)\cos E_{22}$ $z_2 - \overline{Z}_2 = R_{22}\sin E_{22}$ |

NB : si l'on dispose d'une direction de référence vue depuis S2 plutôt qu'un amer les équations d'observation se modifient en :

$$x_2 - \overline{X}_2 = k\,u_{22}$$

$$y_2 - \overline{Y}_2 = k\,v_{22}$$

$$z_2 - \overline{Z}_2 = k\,w_{22}$$

On dispose donc au total de 9 équations à 8 inconnues. En se limitant aux informations planimétriques ou après rectification des mesures, on dispose de 6 équations pour 6 inconnues. Ces équations peuvent être linéarisées dès lors que des valeurs approchées $G_{01}$ et $G_{02}$ de respectivement $G_1$ et $G_2$ sont disponibles à quelques degrés près (un compas magnétique de qualité médiocre est suffisant). Une fois les coordonnées de S2 aussi déterminées, S2 connaissant son gisement se trouve en capacité de localiser de manière autonome d'autres objets présents dans son environnement à partir de ces mesures EMAR et EMED.

En projetant les distances dans le plan au moyen des élévations des visées et avec les mêmes notations 'r' que les précédentes, on obtient :

$$
\begin{pmatrix} r_{11}\cos A_{011} & r_{22}\cos A_{022} - r_{21}\cos A_{021} \\ -r_{11}\sin A_{011} & r_{21}\sin A_{021} - r_{21}\sin A_{021} \end{pmatrix} \begin{pmatrix} \Delta\overline{G}_1 \\ \Delta\overline{G}_2 \end{pmatrix} = \begin{pmatrix} x_2 - X_1 - r_{11}\sin A_{011} + r_{21}\sin A_{021} - r_{22}\sin A_{022} \\ y_2 - Y_1 - r_{11}\cos A_{011} + r_{21}\cos A_{021} - r_{22}\cos A_{022} \end{pmatrix}
$$

où

$$
A_{0mk} = L_{mk} + G_{0m}
$$

$$
\overline{G}_m = G_{0m} + \Delta\overline{G}_m
$$

Le système possède une solution pour les 2 gisements dès lors que la configuration systèmes optroniques relativement aux objets vérifie :

$$
r_{22}\sin(A_{022} - A_{011}) \neq r_{21}\sin(A_{021} - A_{011})
$$

Une fois le gisement G2 obtenu, la position du système optronique S2 s'obtient aisément en utilisant les équations d'observation de S2 sur le GCP.

La configuration peut se décliner avec davantage de systèmes dont plusieurs sans réception GPS. Cette configuration élémentaire illustre l'intérêt d'une collaboration en connaissance de coordonnées de référence (ici un GCP) ; on note que S1 seul n'est pas en mesure de déterminer son Nord. De même S2 seul ne peut trouver son Nord et sa position. Leur collaboration permet de déterminer simultanément les gisements G1 et G2 sur les deux systèmes optroniques, accessoirement les coordonnées de l'objet O1 si cette information présente un intérêt. En absence totale d'EMPG, absence totale de GPS sur le réseau, 2 GCP seront nécessaires pour orienter l'ensemble des informations et estimer, avec autant d'objets communs de coordonnées inconnues observés que nécessaire les gisements et positions de l'ensemble des systèmes.

**Configuration 5.1 (Avec EMAR 'dégradés')**

Selon cette configuration, on considère 2 systèmes collaborant sans dispositifs de mesure d'angle relatif très performants. Pour fixer les idées, on va considérer une collaboration entre systèmes portables utilisant chacun un EMAR de type compas magnétique. La mesure d'azimut se fait au moyen d'un compas magnétique qui dispose généralement d'une capacité d'orientation qui :

- en absolu se situe à un ordre de grandeur inférieur à la PGS (typiquement de la classe du degré vs le milli radian recherché pour la PGS),
- en relatif peut atteindre quelques milli radians (autour de 1 à 3 mrad) dès lors que le compas a fait l'objet d'une procédure de calibration de ses composants internes (estimation des biais, facteurs d'échelle, non orthogonalités d'axes pour ses magnétomètres et accéléromètres) et évolue en environnement magnétique non pollué ou perturbé par des sources de rayonnement électromagnétiques.

La mesure d'élévation peut être réalisée par un inclinomètre qui utilise des accéléromètres avec des performances de la classe du mrad et ceci même avec des capteurs MEMS.

Le compas magnétique, monté dans le système optronique et harmonisé avec sa LdV, permet une mesure absolue de la direction d'orientation observée par le système, en référence à la direction du champ magnétique local. L'angle entre le champ magnétique et le nord géographique local, appelé déclinaison magnétique et illustré figure 1, peut être évalué à partir de cartes géographiques ou d'un modèle mondial. Les modèles mondiaux les plus connus pour décrire le champ magnétique terrestre sont le World Magnetic Model (WMM) et l'International Geomagnetic Reference Field (IGRF). L'intérêt de ces derniers réside dans la facilité de mise en œuvre, l'automatisation de l'accès à la valeur déclinaison à partir de la position EMPG ainsi que de son extrapolation temporelle à partir de la date courante. La qualité avec laquelle on évalue la déclinaison au moyen de ces modèles est de l'ordre de 0.5° aux latitudes proches de l'équateur avec une dégradation en allant vers les pôles magnétiques et avec l'âge ou l'écart entre date courante et la date de mise à jour du modèle (mise à jour et disponibilité des nouveaux modèles tous les 5 ans). De plus, des phénomènes dont la période temporelle est plus courte que celle de mise à jour des modèles ou dont la période spatiale est bien plus fine que leur cellule de résolution, provoquent un effet sur la déclinaison qui ne peut être inscrite au travers des paramètres du modèle. Ainsi malgré l'accès à un modèle, il reste souhaitable d'accéder à une capacité permettant de mieux caractériser la déclinaison locale. Une erreur sur sa valeur se traduit directement par un biais angulaire sur la détermination de gisement.

Le compas magnétique permet, outre sa mesure absolue, une mesure relative d'orientation avec une qualité pouvant atteindre quelques mrd dans un environnement magnétique peu pollué et après une calibration des paramètres internes visant en particulier à estimer les biais et facteurs d'échelle des composants internes au compas (de type accéléromètres et magnétomètres). La performance d'une différence de mesure d'azimut par un compas est systématiquement meilleure que sa performance de mesure absolue puisque :

- elle élimine l'erreur sur la connaissance de déclinaison,
- elle réduit les défauts de mesure propres au compas de type biais,
- elle supprime les défauts de biais d'alignement (sous forme de petites valeurs angulaires caractérisant son montage sur le système) des axes du compas à des axes rattachés à la structure du système ; ici l'axe de référence de la LdV du système optronique par exemple.

En pratique, en désignant par $A_{mk}$ l'azimut géographique sous lequel Sm voit l'objet 'k', par '$L_{mk}$' la mesure magnétique brute, par '$\overline{B_m}$' le cumul des biais de montage et de lecture et par '$\overline{D_m}$' la déclinaison locale au lieu et à la date de mesure, on dispose d'une relation de la forme :

$$A_{mk} = L_{mk} - \overline{B_m} + \overline{D_m}$$

Soit une relation azimut-lecture angulaire EMAR similaire aux précédentes en introduisant le (pseudo)gisement '$\overline{G_m}$' :

$$\overline{G_m} = \overline{D_m} - \overline{B_m}$$

$$A_{mk} = L_{mk} + \overline{G_m}$$

En pratique les biais de montage et la déclinaison peuvent être connus de manière approchée, séparant ainsi la contribution approchée (indicée par '0') de celle inconnue avec :

$$B_m = B_{0m} + \overline{\Delta B_m} \quad ; \quad D_m = D_{0m} + \overline{\Delta D_m}$$

Les biais de mesure compas et les biais de montage peuvent être respectivement réduits après la calibration du compas sur le site de mesure et par une procédure usine comparant une mesure à une information de référence. Après ces 2 opérations, on peut considérer le résidu de biais sur la mesure angulaire comme négligeable devant la valeur de déclinaison et les bruits de mesure du compas.

Pour cette configuration illustrée figure 9, l'estimation du gisement de l'EMAR se traduit par la détermination de l'angle intégrant pour l'essentiel la valeur de déclinaison locale et les résidus d'offset de montage et de lecture du compas.

Ainsi, selon cette configuration, deux systèmes collaborent avec la particularité que les systèmes S1 et S2 utilisent un EMAR 220 de type compas. La réduction de taille et de masse de ce type d'équipement facilite la portabilité et le déplacement du système. Pour obtenir les gisements sur chacun des deux systèmes, le tandem S1-S2 va réaliser des mesures sur un objet Ok (avec k=K=1). Les mesures supplémentaires sont des mesures :

- depuis S1

◦ de distance $R_{1k}$ sur l'objet Ok,
◦ d'élévation $E_{1k}$ entre S1 et l'objet Ok,
◦ d'azimut magnétique $L_{1k}$ de l'EMAR (compas magnétique) lorsque le système optronique S1 pointe sur l'objet Ok,

- depuis S2

◦ de distance $R_{2k}$ sur l'objet Ok,
◦ d'élévation $E_{2k}$ entre S2 et l'objet Ok,
◦ d'azimut magnétique $L_{2k}$ sur l'EMAR de S2 lorsque son système optronique pointe l'objet Ok.

Un objet (k=K=1) participe aux mesures des deux systèmes.

Les quantités calculées sont les gisements $\overline{G_1}$ et $\overline{G_2}$ des EMAR de S1 et S2 intégrant la correction de déclinaison locale. Si besoin, les coordonnées des objets s'en déduisent aisément ainsi que les précisions sur ces quantités.

Pour effectuer les mesures supplémentaires, les deux positions déterminées étant celles de S1 et S2 et avec un objet O1 (K=1) :

- Le premier système optronique S1 comporte en outre un EMED ou « Equipement de Mesure Electronique de Distance » de type télémètre 106 et 107 dont la direction est harmonisée sur l'axe du dispositif d'acquisition, apte à fournir la distance $R_{1k}$ entre S1 et l'objet Ok.

- Et le second système optronique S2 comporte en outre :

◦ un EMED ou « Equipement de Mesure Electronique de Distance » de type télémètre 206 et 207 dont la direction est harmonisée sur l'axe du dispositif d'acquisition, apte à fournir la distance $R_{2k}$ entre S2 et l'objet Ok,
◦ un inclinomètre 209 apte à fournir l'élévation $E_{2k}$ de l'objet Ok (k=1) par rapport à S2,
◦ un EMAR lui aussi dégradé, 220 apte à fournir les angles relatifs entre S2 et l'objet Ok en utilisant son compas magnétique.

- Les quantités estimées sont les gisements des 2 systèmes et les coordonnées de l'objet.

Ainsi on dispose de 2 systèmes de type caméra portable avec compas magnétiques n'accédant qu'à une connaissance de leur déclinaison magnétique qui peut être de qualité médiocre en regard de la performance recherchée, telle que celle obtenue à haute latitude avec des modèles mondiaux de référence comme par exemple WMM ou IRGF. Les systèmes sont en capacité de mesurer :

- des positions géodésiques des deux systèmes (avec EMPG type récepteur GNSS),
- des mesures de chaque système optronique sur un objet commun, constituées de :

◦ la distance du système optronique $m \in \{1,2\}$ à l'objet k=1,
◦ l'élévation de la visée $E_{m1}$ sur l'objet,
◦ la mesure d'azimut magnétique $L_{m1}$ sur l'objet.

Un objet commun unique de coordonnées inconnues est utilisé.

Les quantités à estimer sont les (pseudo)gisements des compas permettant d'estimer les azimuts sur l'objet depuis les deux systèmes, et la position de l'objet.

Les équations d'observations sont les suivantes, équations au sein desquelles l'azimut $A_{mk}$ géographique est déduit de la mesure du compas, le biais d'harmonisation et la déclinaison étant connus de manière approchée et devant être affinée :

| | Objet 1 (commun) |
|---|---|
| S1 | $\overline{x}_1 - \overline{X}_1 = R_{11} \sin \overline{A}_{11} \cos E_{11}$ <br> $\overline{y}_1 - Y_1 = R_{11} \cos \overline{A}_{11} \cos E_{11}$ <br> $\overline{z}_1 - Z_1 = R_{11} \sin E_{11}$ |

(suite)

| | Objet 1 (commun) |
|---|---|
| S2 | $\overline{x}_1 - \overline{X}_2 = R_{21} \sin \overline{A}_{21} \cos E_{21}$ <br> $\overline{y}_1 - \overline{Y}_2 = R_{21} \cos \overline{A}_{21} \cos E_{21}$ <br> $\overline{z}_1 - \overline{Z}_2 = R_{21} \sin E_{21}$ |

La configuration permet de déterminer:

- Le (pseudo)gisement intégrant déclinaison magnétique locale $\overline{D_m}$ , biais de montage et de mesure du compas pour chaque système,
- une localisation collaborative précise de l'objet au moyen des élévation $E_{m1}$, de la distance $R_{m1}$ et de la position du système Sm. Cette localisation est obtenue par exemple dans un repère géographique, avec son origine sur l'un des 2 systèmes (exemple S1),
- La position topographique 'T1' (resp. T2) de S1 (resp S2) s'obtient en convertissant les coordonnées géodésiques de l'EMPG en coordonnées géocentriques puis en coordonnées topographiques dans un repère topographique dont l'origine est en S2 (resp. S1).
- Les azimuts géographiques (True North) $A_{m1}$ de l'objet 1 vu depuis chaque système $S_m$ peuvent s'obtenir à partir des coordonnées des systèmes et de la localisation de l'objet Ok en rectifiant ces valeurs comme déjà indiqué.
- Le (pseudo)gisement intégrant déclinaison magnétique locale ' $\overline{D_m}$ ', offsets de montage et de mesure du compas ' $\overline{B_m}$ ' se déduisent sur les deux systèmes optroniques au moyen des mesures magnétiques $L_{m1}$.

Ainsi, outre la position de l'objet avec une performance de classe métrique, les deux systèmes optroniques disposent de valeurs de pseudo-gisements de leur compas en vue de réaliser d'autres localisations approchées dans leur voisinage. La valeur de gisement ainsi obtenue, qui intègre l'éventuel biais de montage du compas en azimut relativement aux axes de référence du système, permet de compenser ce poste d'alignement pour rectifier les futures mesures du compas.

Les corrections d'azimuts et la position estimée de l'objet peuvent s'obtenir simultanément en résolvant simplement et de manière itérative le système linéaire suivant.

$$\begin{pmatrix} 1 & 0 & 0 & -R_{11}\cos E_{11}\cos A_{011} & 0 \\ 0 & 1 & 0 & R_{11}\cos E_{11}\sin A_{011} & 0 \\ 0 & 0 & 1 & 0 & 0 \\ 1 & 0 & 0 & 0 & -R_{21}\cos E_{21}\cos A_{021} \\ 0 & 1 & 0 & 0 & R_{21}\cos E_{21}\sin A_{021} \\ 0 & 0 & 1 & 0 & 0 \end{pmatrix} \begin{pmatrix} \overline{x}_1 \\ \overline{y}_1 \\ \overline{z}_1 \\ \overline{\Delta G_1} \\ \overline{\Delta G_2} \end{pmatrix} = \begin{pmatrix} X_1 + R_{11}\cos E_{11}\sin A_{011} \\ Y_1 + R_{11}\cos E_{11}\cos A_{011} \\ Z_1 + R_{11}\sin E_{11} \\ X_2 + R_{21}\cos E_{21}\sin A_{021} \\ Y_2 + R_{21}\cos E_{21}\cos A_{021} \\ Z_2 + R_{21}\sin E_{021} \end{pmatrix}$$

Une force de cette collaboration réside dans la capacité à estimer un biais global dans un environnement intégrant en particulier des offsets magnétiques d'amplitude forte et ceci sans connaissance de référence de position ou direction géographique.

Une fois les (pseudo)gisements ' $\overline{G_m}$ ' estimés simultanément à la localisation géographique de l'objet ( $\overline{x_k}$ , $\overline{y_k}$ , $\overline{z_k}$ ), les (pseudo)gisements des compas permettent de mieux localiser un autre objet de l'environnement depuis un unique système Sm préalablement à toute collaboration de systèmes.

La localisation de l'objet estimée dans le cadre collaboratif peut être d'excellente qualité (typiquement de classe métrique), ce qui permet aussi d'exploiter cette configuration en vue de produire des amers pouvant alimenter des fonctionnalités sur d'autres systèmes ou d'autres conditions d'utilisation comme pour la configuration 4.2. Pour donner un aperçu plus fin on résout le système et on réalise une évaluation de performance de localisation dans une approche Monte-Carlo. On obtient une qualité sur la position de l'objet meilleure que 2 m à 1 sigma dans les conditions suivantes :

- Avec des mesures présentant des qualités à 1 sigma pour l'EMPG de 2m, pour l'EMED de 2.2m, pour la mesure d'élévation de 1.25 mrd et pour une connaissance en azimut de 15 mrd.
- Avec un objet situé dans une plage de distance à la base des deux systèmes allant de 0.5 à 10 km et pour des rapports base à distance variant de 0.5 à 2.

Cette approche indique aussi l'angle parallactique donnant la meilleure performance ce qui permet de sélectionner une zone privilégiée pour le choix de l'objet sur lequel les systèmes ont tout intérêt à partager leurs mesures. Pour les configurations précédentes, il se situe par exemple un peu au-dessus de 60°.

Les erreurs sur les coordonnées de l'objet (biais et covariance) peuvent s'obtenir par propagation d'erreur avec une technique similaire de celle décrite précédemment.

L'objet est alors être caractérisé par sa position et par l'erreur associée, et il peut être qualifié de GCP. Ses coordonnées ($\overline{x_k}$, $\overline{y_k}$, $\overline{z_k}$) en RGL (Repère Géographique Local) peuvent être converties au besoin en coordonnées géodésiques sur un système géodésique (ou datum) spécifique (par exemple WGS84).

La démarche peut se généraliser simplement avec un nombre supérieur à 'M=2' caméras. Par ailleurs, on note qu'une seule caméra pourrait être utilisée en la déplaçant sur le terrain.

Les coordonnées géodésiques de l'objet alors disponibles, peuvent être exploitées depuis ces mêmes ou autres systèmes dont au moins l'un d'entre eux doit estimer son gisement.

La répétition de cette opération sur plusieurs objets situés dans des directions différentes permet de calibrer plus finement l'EMAR de chaque système optronique ; ceci en estimant un modèle transformant la mesure d'azimut magnétique en azimut géographique sans se limiter à un modèle de biais tel que décrit plus haut. Cette utilisation est décrite à la suite.

**Configuration 5.2 (Avec EMAR 'dégradés' / plusieurs objets)**

Dans une configuration où un nombre 'M' de systèmes collaborent, on peut généraliser l'approche précédente à partir d'observations sur plusieurs objets situés dans des directions différentes. Il est alors possible de calibrer plus finement le compas magnétique constituant l'EMAR de chaque système optronique en estimant un modèle de calibration du compas magnétique, décrivant la transformation entre mesures d'azimut magnétique et géographique, plus complexe que celui limité à un biais tels que décrit plus haut. Par exemple, on peut intégrer dans le modèle des effets de perturbations fortes et douces du champ magnétique ('hard' et 'soft' iron) et transformer la lecture brute compas à l'azimut géographique avec la forme :

$$A_{mk} = L_{mk} + \overline{\alpha_m} + \overline{\beta_m} \sin L_{mk} + \overline{\gamma_m} \cos L_{mk} + \overline{\delta_m} \sin 2L_{mk} + \overline{\varepsilon_m} \cos 2L_{mk}$$

Pour plus de détails voir "The American Practical Navigator" Chapter 6.

En termes de degré de liberté (DoF), un tel modèle utilisé avec M systèmes optroniques collaborant sur K objets apporte 6K observations pour 5M+3K inconnues. Le DOF qui en résulte, nécessairement positif pour espérer une solution, s'établit à 3K-5M. Il nécessite alors la collaboration de M senseurs (M≥2) sur K objets avec K≥⌈5M/3⌉ (où ⌈x⌉ est la partie entière par excès correspondant à la valeur du plus petit entier supérieur à x).

Pour une configuration à 2 systèmes, K=4 objets sont alors nécessaires pour estimer les modèles de (pseudo)gisement de chaque système.

Ceci termine la description des configurations proposées sans pour autant limiter la fonction de recherche de nord collaborative aux seules configurations et aux seules spécificités exposées. Comme indiqué, on peut notamment collaborer dans des configurations incluant à la fois des absences d'EMPG sur certains systèmes mais aussi d'EMED par exemple. L'objectif étant de disposer d'un nombre suffisant d'observations, on agit pour cela sur le nombre de systèmes, le nombre d'objets sur lesquels les mesures sont réalisées et le nombre de systèmes partageant des mesures sur un objet donné ; ceci dans le but de disposer d'une observabilité suffisante (DoF≥0) pour estimer les quantités d'intérêt.

Ces configurations se déclinent aussi en fonctionnant avec un ou plusieurs capteurs optroniques omnidirectionnels (OMNI). La particularité de ces capteurs est d'offrir une vision panoramique qui permet d'exploiter comme EMAR l'image optronique sans autre dispositif matériel pour la mesure de direction relative. Sa particularité est d'offrir une large vision simultanée de la scène.

Lorsque Sm dispose d'un capteur optronique OMNI (de type fisheye, catadioptrique, cylindrique par exemple) l'azimut $A_{mk}$ sur un objet 'Ok' de coordonnées image ($p_{mk}$, $q_{mk}$) s'exprime d'après :

$$A_{mk} = L_{mk} + \overline{G_m}$$

$$L_{mk} = \arctan\left(q_{mk} - q_{m0},\, p_{mk} - p_{m0}\right)$$

Dans cette expression, $\overline{G_m}$ désigne encore le gisement, c'est-à-dire l'angle entre le nord géographique et l'axe colinéaire aux lignes de l'imageur ; $(p_{m0}, q_{m0})$ sont les coordonnées image du point principal de symétrie (axe optique du senseur) sur le détecteur, et $L_{mk}$ correspond à la lecture de l'EMAR dans une configuration plus traditionnelle.

Dans le repère image du système Sm avec l'origine au point principal de symétrie (PPS), et avec les axes x et y colinéaires aux lignes 'q' et colonnes 'p' de l'image et axe z à l'axe optique, la direction d'un point 'Ok' est donnée d'après :

$$u_{mk} = \begin{pmatrix} \cos A_{mk} \cos E_{mk} \\ \sin A_{mk} \cos E_{mk} \\ \sin E_{mk} \end{pmatrix}$$

On en déduit l'élévation $E_{mk}$ de la manière suivante :

1) dans le cas le plus simple, lorsque le capteur OMNI a fait l'objet d'une mise à l'horizontale du plan détecteur avec un niveau à bulle par exemple, l'élévation $E_{mk}$ est déduite d'une loi spécifique à l'architecture du capteur (selon la combinaison et spécificité optique) symétrique de révolution détermine la trajectoire des photons jusqu'au détecteur avec une loi qui ne dépend pour l'élévation que de la position du pixel au centre de symétrie de coordonnées $(p_{m0}, q_{m0})$. La dépendance paramétrique de la fonction '$\zeta$' dépend plus intimement de l'architecture du système et ses paramètres peuvent être estimés lors d'une phase usine de pré-calibration :

$$E_{mk} = \zeta\left(p_{mk},\, q_{mk}\right) = \zeta\left(\rho_{mk}\right)$$

$$\rho_{mk} = \sqrt{\left(p_{mk} - p_{m0}\right)^2 + \left(q_{mk} - q_{m0}\right)^2}$$

2) dans un cas plus complexe l'élévation $E_{1k}$ est déduite en évaluant en plus du gisement, les angles roulis et tangage caractérisant l'écart de l'axe du détecteur à la verticale locale. L'attitude ou l'orientation du capteur dans le repère géographique local s'estime alors par une matrice de rotation au moyen d'observations (via une version passive de la configuration 3.3).

On peut supposer que le capteur OMNI ne dispose généralement pas d'EMED permettant d'évaluer sa distance à un point particulier de la scène. Cette spécificité peut complexifier la recherche de gisement puisque l'accès à une position approchée d'un objet en vue de linéariser des équations d'observation n'est plus direct. Les informations de distances aux objets peuvent donc rester comme des inconnues à éliminer dans les observations.

Le cas d'utilisation d'images OMNI permet de disposer potentiellement d'un très grand nombre d'objets (pour fixer les idées d'une dizaine à 1/10 du nombre de pixels communs identifiables dans les portions communes des images) conduisant à des mesures communes de directions spatiales. Le traitement de ce volume d'informations est préférentiellement conduit de manière totalement automatique en procédant comme suit avec une description limitée à 2 systèmes optroniques S1 et S2, chacun équipé d'un capteur OMNI :

- acquisition d'une image par les capteurs de S1 et S2 et transfert de l'image de S2 vers S1 ainsi que la position et l'attitude ou l'orientation approchée de S2,
- sur S1, extraction d'information image ou descripteurs (par exemple des formes de type points ou/et segments, ...) dans les images de S2 et S1,
- filtrage spatial de descripteurs à faible potentiel de discrimination afin d'éliminer dans l'image de S2 des descripteurs spatialement trop proches ou à pauvre caractéristique radiométrique,
- mise en correspondance entre les descripteurs image, en exploitant :

    o les poses approchées (position des senseurs et orientations approximatives des images via les compas),
    o utilisation d'un algorithme robuste de type RANSAC, pour déterminer de 'bonnes correspondances' (cf ci-dessous) entre les informations extraites des images des deux capteurs, Random Sample Consensus: A Paradigm for Model Fitting with Applications to Image Analysis and Automated Cartography Fischler & Bolles (1981). De la sorte on dispose d'un grand nombre de Mises En Correspondance, couples de coordonnées MECk = ({$p_{1k}$,$q_{1k}$}, {$p_{2k}$,$q_{2k}$}), k={1,...,K} et donc d'objets automatiquement appariés.

o Calcul des attitudes définitives des 2 systèmes optroniques, et au besoin des coordonnées des objets, en utilisant les 'bonnes correspondances' établies.

L'utilisation de capteurs OMNI et le grand nombre d'objets disponibles dans les images permet ainsi :

- une automatisation complète du procédé, plus de recherches d'objets, de pointages de système, ou d'interventions spécifiques pour la prise de mesures.
- une recherche automatique robuste d'appariement entre images ; on indique en langage anglo-saxon par « inlier » une 'bonne correspondance' entre descripteurs des 2 images correspondant effectivement à un même détail ou objet de la scène et par « oulier » une correspondance entre des pixels n'appartenant pas au même détail ou objet de la scène.
- un accroissement du nombre d'observations utilisées et donc une amélioration de l'estimation de $\overline{G_m}$ ou autres quantités à estimer.

Dans cette approche, la recherche de correspondances peut être accélérée du point de vue temps de calcul en utilisant la géométrie épipolaire des 2 capteurs OMNI. Cette propriété de la géométrie des images indique qu'un objet Ok vu dans la direction $u_{2k}$ depuis le capteur de S2 se retrouve le long d'une courbe épipolaire dans le plan de l'image du capteur de S1. Dans le cas de capteurs OMNI, cette courbe n'est plus une droite. Pour plus de détails voir par exemple : « Numerical estimation of epipolar curves for omnidirectional sensors » (2005).

Pour cela on peut rectifier une vignette image du capteur de S2 autour de la position d'un descripteur en la ré-échantillonnant dans la géométrie de l'image du capteur de S1. Puis on déplace la vignette ré-échantillonnée le long de la courbe épipolaire pour établir un score de corrélation entre les niveaux des images.

Ainsi cette approche limite la dimension de l'espace de recherche d'un objet ponctuel de l'image du capteur de S2 à une dimension dans l'image de S1 (au lieu d'une recherche 2D dans toute l'image). La généralisation à 3 images de 3 capteurs limite la recherche à un point dans l'image (en pratique une petite zone autour du point compte tenu des erreurs sur les valeurs des paramètres internes du capteur et des paramètres externes de position et d'attitude pour les 2 images).

Comme alternative, si l'on dispose au niveau d'un système optronique Sm :

- de sa position géographique avec son EMPG,
- de son orientation approchée (avec compas) donnant un '$G_{0m}$',
- d'une hypothèse de sol ou un modèle de terrain (MNT),

il devient possible d'évaluer une position géographique approchée d'un objet situé au sol à partir de sa position image et du modèle indiqué ci-dessus donnant la direction d'un pixel. Ceci par une technique type lancé de rayon.

A partir de sa position image, le système optronique positionne l'objet le long d'une direction qui coupe la surface fournie par le modèle de terrain au voisinage du sol. Dès lors que l'information terrain est exploitée elle restreint le procédé à l'emploi d'objets du sol, plus précisément d'objets situés sur l'enveloppe du MNT représentant le terrain.

Dans le cadre d'une capacité auto-collaborative le système, qui profite de son mouvement pour acquérir des mesures, pourra dans le cadre des capacités décrites :

- Lorsqu'il s'agit d'un système avec caméra portable disposant d'un EMAR sous forme compas magnétique 108 :

  o Localiser un objet en utilisant des mesures acquises avec EMPG, EMED et ses mesures angulaires au moyen d'inclinomètres et de son compas approchée non calibré,
  o Calibrer son compas soit sous forme d'estimation d'un offset avec mesures sur un objet unique (config 5.1) soit sous forme d'un modèle plus complexe si plusieurs objets font l'objet d'acquisitions entre les déplacements (config 5.2)
  o Localiser directement depuis sa position d'autres objets avec son EMAR calibré dans sa dernière position. Ce type de calibration nécessite une recalibration de l'EMAR pour tout nouveau déplacement afin de rendre compte de la variabilité de l'environnement électro-magnétique. Pour bénéficier des mesures précédemment réalisées mémorisées lors d'un nouveau stationnement sur une zone il sera donc judicieux d'acquérir des objets sur des zones disposant du meilleur indice possible de visibilité.

- Lorsqu'il s'agit d'un système portable sur trépied avec un goniomètre, il sera bénéfique :

  o d'exploiter uniquement la partie capteur optronique 100 pour acquérir des mesures afin de raccourcir le délai de mise en œuvre des acquisitions.
  o Les informations mesurées sont alors mémorisées dans 100 lors du déplacement. Le compas magnétique 108 de 100 peut être calibré comme indiqué ci-dessus afin de faciliter au besoin la ré-acquisition des objets lors des stationnements ultérieurs.
  ◦ L'ensemble des informations est ensuite exploité lors d'une installation complète du système pour déterminer le gisement de l'EMAR 120.

Le procédé s'applique aussi au cas où un ou plusieurs des systèmes collaborant S2, ..., Sm sont mobiles, S1 étant supposé fixe, dès lors que l'ensemble des mesures sont temporellement synchronisées. Les configurations précédentes se déclinent alors à l'identique.

Le traitement temporel des informations d'un système mobile unique 'Sm' collaborant en 'T' instants avec S1 équivaut sur le plan de l'information engrangée, à traiter des mesures quasi-instantanées de 'T' systèmes identiques à 'Sm' mais spatialement répartis.

Cette description donne un cadre à bien d'autres configurations pouvant être utilisées. Pour toutes ces configurations de collaboration, la localisation (ou coordonnées géographiques) des objets visés peut en outre être déterminée :

- en résolvant de manière simultanée les inconnues angulaires (gisement/attitude) et celles correspondant aux coordonnées inconnues des objets,
- en déterminant les coordonnées des objets après avoir orienté les systèmes - dans ce cas les coordonnées des objets sont d'abord éliminées des observations dans la première phase d'estimation, puis, évaluées à partir des références angulaires par des routines classiques de triangulation ou tri-latération,
- en déterminant l'orientation sur les systèmes après avoir d'abord estimé les coordonnées des objets (construction d'amer puis chercheur de nord).

Après ces étapes de calibration (chercheur nord, positions des objets ou des systèmes optroniques), une fonction de localisation d'objets éloignés consistant à déterminer leurs positions géographiques et la qualité de ces positions, peut être assurée localement par le système collaboratif à partir de mesures acquises depuis un système optronique unique ou par plusieurs systèmes optroniques dans la plupart des configurations décrites.

De manière générale, la performance prédite (PGT) sur les quantités estimées peut être systématiquement déterminée de manière théorique. Elle dépend généralement du nombre de systèmes collaborant, du type (ou nature) des mesures mises en œuvre, du nombre d'objets utilisés, de la configuration géométrique ou de la position relative des entités systèmes et objets. Ces calculs peuvent être conduit par :

- L'analyse de la moyenne et de la variance ou propagation de covariance, dans cette approche :

  ◦ on linéarise et on différentie les équations d'observation par rapport aux quantités à estimer et aux mesures,
  ◦ on isole le vecteur des différentielles sur les quantités élémentaires d'intérêt des différentielles sur les mesures,
  ◦ on multiplie par les vecteurs conjugués les deux membres et on prend l'espérance,
  ◦ on obtient la covariance sur les quantités comme fonction de la covariance sur les mesures ; les matrices Jacobienne intervenant de part et d'autre encapsulant la dilution géométrique des mesures ;

Pour détail, l'analyse de moyenne et de variance (AMV) exploite le développement des équations d'observation autour de la valeur vraie des inconnues. Si l'on note $\overline{\Theta}$ le vecteur des valeurs des paramètres et $M$ le vecteur des mesures réalisées par le système, la différentiation des équations d'observation $f(\overline{\Theta}, M) = 0$ peut s'écrire de manière générique comme :

$$J_{\Theta} \cdot d\overline{\Theta} = -J_M \cdot dM$$

$$J_{\Theta} = \frac{\partial f(\overline{\Theta}, M)}{\partial \overline{\Theta}} \quad ; \quad J_M = \frac{\partial f(\overline{\Theta}, M)}{\partial M}$$

Avec $J_P$ la matrice jacobienne des équations d'observation relativement aux paramètres et $J_M$ par rapport aux mesures.

Le biais sur les paramètres est obtenu selon le vecteur de biais des dispositifs de mesures selon :

$$\overline{\delta\Theta} = -(J_\Theta^T J_\Theta)^{-1} \cdot J_\Theta^T J_M \cdot \delta M$$

Ainsi un biais de mesure '$\delta M$' se propage en un biais sur les paramètres '$\overline{\delta\Theta}$'. En absence de biais sur les mesures, les paramètres recherchés ne seront pas biaisés, ie $\overline{\delta\Theta}$ =0, hors biais spécifique de l'estimateur.

La variance $\Lambda_\Theta$ sur les paramètres est obtenue à partir de la variance sur les mesures $\Lambda_M$ avec :

$$\Lambda_\Theta = E\left[\left(\overline{d\Theta} - \overline{\delta\Theta}\right)\left(\overline{d\Theta} - \overline{\delta\Theta}\right)^T\right]$$

$$\Lambda_M = E\left[(dM - \delta M) \cdot (dM - \delta M)^T\right]$$

En multipliant par la quantité transposée :

$$J_\Theta \cdot \left(\overline{d\Theta} - \overline{\delta\Theta}\right)\left(\overline{d\Theta} - \overline{\delta\Theta}\right)^T \cdot J_\Theta^T = J_M \cdot (dM - \delta M) \cdot (dM - \delta M)^T \cdot J_M^T$$

Sans biais, accessible ci-dessus, prenant l'espérance :

$$J_\Theta \cdot \Lambda_\Theta \cdot J_\Theta^T = J_M \cdot \Lambda_M \cdot J_M^T$$

La variance sur les paramètres s'exprime comme :

$$\Lambda_\Theta = (J_\Theta^T \cdot J_\Theta)^{-1} \cdot J_\Theta^T \cdot J_M \cdot \Lambda_M \cdot J_M^T \cdot J_\Theta \cdot (J_\Theta^T \cdot J_\Theta)^{-1}$$

Un ordre de grandeur de l'écart type d'un paramètre est ensuite accessible en prenant la racine carrée de l'élément diagonal associé dans $\Lambda_\Theta$, et l'erreur quadratique moyenne $EQM_\Theta$ s'approxime par :

$$EQM_\Theta^2 = \overline{\delta\Theta} \cdot \overline{\delta\Theta}^T + \Lambda_\Theta$$

- La borne de Cramer-Rao déduite comme limite de la matrice d'information de Fisher qui donne une performance ultime. Pour détails voir chapitre 4 de Harry L. Van Trees, Kristine L. Bell, "Bayesian Bounds for Parameter Estimation and Nonlinear Filtering Tracking" (2007).

Disposant d'un jeu d'observations et d'un estimateur des paramètres inconnus, il est aussi possible d'évaluer cette performance au moyen d'une technique de Monte-Carlo. Dans cette approche, disposant de la configuration géométrique (positions respectives des systèmes et objets) :

  ∘ on construit les mesures théorique (distances, angles exacts),
  ∘ on applique les erreurs instrumentales sur l'ensemble des observations,
  ∘ on détermine les quantités avec les mesures erronées en appliquant l'algorithme d'estimation opérationnel permettant l'estimation les quantités,
  ∘ on retourne à la seconde étape pour déterminer et appliquer un nouveau jeu d'erreurs de mesure (aléatoirement selon les lois de distribution connues des erreurs instrumentales)
  ∘ après un certain nombre d'itérations (plusieurs dizaines) on dispose d'une répartition statistique des quantités obtenues ; de cette répartition peuvent être extraites des caractéristiques statistiques (valeur moyenne et covariance) décrivant la performance de la configuration (PGT).

Pour détail voir chapitre 'Monte Carlo Simulation of Synthetic Data Sets' dans l'ouvrage 'Numerical Recipes in C.' (2002)

La qualité d'estimation du gisement (PGE) est évaluée (étape C figure 11) par l'unité de traitement de S1, ou toute autre unité qui disposerait des informations relevées et communiquées par les autres systèmes, à partir des observations, généralement redondantes, et d'un algorithme d'estimation d'après la covariance du vecteur de paramètre estimé ou/et analyse des résidus sur les observations.

Pour détail, cette opération s'effectue après avoir sélectionné une configuration et avoir effectivement mis œuvre les mesures, on recherche les valeurs optimales $\overline{\Theta}^*$ du vecteur des paramètres ainsi que sa variance qui donnera PGE. Dans le cas général où aucune solution analytique explicite n'est accessible et où le nombre de mesures est redondant, la solution optimale $\overline{\Theta}^*$ s'obtient via une méthode d'estimation basée sur le maximum de vraisemblance ou de type moindres carrés avec un algorithme de descente de gradient, de Newton-Raphson, de Gauss-Newton ou encore de Levenberg-Marquardt ou via une méthode par filtrage des observations avec un filtre de Kalman étendu par exemple. La solution optimale peut être notée :

$$\overline{\Theta}^* = \arg\min_{\overline{\Theta}} f(\overline{\Theta}, M)$$

Les composantes du vecteur solution minimisent les écarts aux mesures dans les équations d'observations en pondération des covariances respectives. Cette étape nécessite de linéariser les équations d'observation autour d'une valeur approchée de la valeur vraie en vue de calculer des dérivées ou éléments de matrices jacobiennes dans le voisinage des valeurs des paramètres. D'où l'intérêt à disposer soit d'une mesure 'approchée' du gisement, le terme approchée correspondant au fait que l'erreur sur la mesure gisement est très supérieure à la PGS (ex compas magnétique), soit d'un calcul analytique qui utilise un sous ensemble approprié des observations pour calculer une valeur approchée du gisement via des équations explicites.

La présente invention peut s'implémenter à partir d'éléments matériel et/ou logiciel. Elle peut être disponible en tant que produit programme d'ordinateur sur un support lisible par calculateur qu'il soit embarqué au sein du système optronique ou sur une unité centrale externe tel qu'un téléphone portable, .... Le support peut être électronique, magnétique, optique, électromagnétique ou être un support de diffusion de type infrarouge. De tels supports sont par exemple, des mémoires à semiconducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

**1.** Procédé d'estimation de gisement d'un système optronique dans un repère géographique, le système optronique étant situé à une première position et désigné premier système optronique (S1), **caractérisé en ce qu'**il comporte les étapes suivantes :

- A) une configuration collaborative étant définie par :

- une géométrie ou des positions d'au moins deux systèmes optroniques dont le premier système optronique (S1) et au moins un autre système optronique (S2, ..., Sm, ...SM), lesdits systèmes optroniques étant respectivement situés en des positions distinctes et équipés de moyens de communication entre eux et de dispositifs d'acquisition d'un ou plusieurs objets dans une scène, le premier système optronique étant en outre équipé d'un dispositif de mesure d'élévation et d'un dispositif de mesure d'angle relatif, chaque autre système optronique étant en outre équipé d'un dispositif de mesure de distance et/ou d'un dispositif de mesure d'élévation et/ou d'un dispositif de mesure d'angle relatif et/ou d'un dispositif de mesure d'azimut approché,
- K objets (01, ...Ok, ... OK) de la scène dont les positions sont inconnues, lesdits objets étant communs auxdits systèmes optroniques,
- la nature des mesures disponibles pour chaque système optronique,
- des caractéristiques statistiques connues des erreurs des mesures, déterminer une configuration collaborative pour atteindre une précision souhaitée prédéterminée (PGS), qui comprend les sous-étapes suivantes :

◦ A1) définir une configuration collaborative,
◦ A2) pour cette configuration collaborative, calculer au moyen d'une unité de traitement (110) équipant le premier système optronique, une précision théorique (PGT) en utilisant ladite configuration collaborative
◦ A3) si la précision théorique (PGT) est supérieure à la précision souhaitée (PGS), réitérer les étapes A1), A2) et A3) pour une autre configuration collaborative, sinon passer à l'étape B),

- B) à partir des systèmes optroniques de la configuration collaborative issue de l'étape A3), estimer un gisement ($\overline{G_1}$) du premier système optronique qui comprend les sous-étapes suivantes :

  ∘ B1) au moyen du dispositif d'acquisition de chaque système optronique, acquérir dans la scène un ou plusieurs objets (01, ...Ok, ... OK) communs auxdits systèmes optroniques, la direction d'orientation entre chaque système optronique et chaque objet étant inconnue,
  ∘ B2) déterminer deux positions géodésiques parmi celles desdits systèmes optroniques,
  ∘ B3) pour au moins un objet commun :

  - mesurer l'angle relatif au moyen du dispositif de mesure d'angle relatif équipant le premier système optronique (S1),
  - mesurer l'élévation de l'objet au moyen du dispositif de mesure d'élévation équipant le premier système optronique (S1),
  - au moyen du premier système optronique (S1) et des dispositifs de mesure de chaque autre système optronique (S2, ..., Sm, ...SM), réaliser des mesures supplémentaires de distance et d'au moins un troisième paramètre angulaire de l'objet ;

  ∘ B4) les deux positions des systèmes optroniques et lesdites mesures constituant des observations, communication par chaque autre système optronique (S2, ..., Sm, ...SM) au premier système optronique (S1) des observations issues de chaque autre système optronique,
  ∘ B5) à partir des observations issues du premier système optronique et des observations communiquées par chaque autre système optronique, estimation du gisement ($\overline{G_1}$) du premier système optronique par une unité de traitement (110) équipant le premier système optronique, configurée pour résoudre un système d'équations à au moins une inconnue qui est le gisement ($\overline{G_1}$) du premier système optronique,

- C) estimer une précision (PGE) du gisement estimé ($\overline{G_1}$) du premier système optronique, si la précision (PGE) est supérieure à la précision souhaitée (PGS), réitérer les étapes A) B), et C) en choisissant une autre configuration collaborative, la précision du gisement (PGE) étant évaluée à partir des informations et des observations relevées et communiquées par les autres systèmes et d'un algorithme d'estimation d'après la covariance du vecteur de paramètre estimé ou analyse des résidus sur les observations.

2. Procédé d'estimation du gisement selon la revendication précédente, **caractérisé en ce que** la PGS est de la classe 1 mrd.

3. Procédé d'estimation du gisement selon l'une des revendications précédentes, **caractérisé en ce que** les étapes sont réalisées au moyen de deux systèmes optroniques (S1, S2) et pour un seul objet commun, et **en ce que** les mesures supplémentaires sont obtenues de la façon suivante :

   - mesurer la distance entre chaque système optronique (S1, S2) et l'objet, au moyen d'un dispositif de mesure de distance équipant chaque système optronique,
   - mesurer de manière approchée avec une précision meilleure que 5°, un azimut de l'objet au moyen d'un dispositif de mesure d'azimut approché équipant le premier système optronique (S1).

4. Procédé d'estimation du gisement selon l'une des revendications 1 à 2, **caractérisé en ce que** les étapes sont réalisées au moyen de deux systèmes optroniques (S1, S2) et pour deux objets communs (O1, O2), et **en ce que** les mesures supplémentaires sont obtenues de la façon suivante :

   - mesurer la distance entre chaque système optronique (S1, S2) et chaque objet (O1, O2), au moyen d'un dispositif de mesure de distance équipant chaque système optronique,
   - mesurer l'élévation entre chaque système optronique (S1, S2) et chaque objet (O1, O2).

5. Procédé d'estimation du gisement selon l'une des revendications 1 à 2, **caractérisé en ce que** les étapes sont réalisées au moyen de deux systèmes optroniques (S1, S2) et pour deux objets communs (O1, O2), et **en ce que** les mesures supplémentaires sont obtenues de la manière suivante par chaque système optronique :

- mesurer la distance entre le premier système optronique (S1) et chaque objet (O1, O2), au moyen d'un dispositif de mesure de distance équipant le premier système optronique,
- mesurer l'élévation de chaque objet (01, 02) au moyen d'un dispositif de mesure d'élévation équipant chaque système optronique (S1, S2),
- mesurer l'angle relatif de chaque objet (O1, O2), au moyen d'un dispositif de mesure d'angle relatif équipant chaque système optronique (S1, S2),
- mesurer un azimut avec une précision meilleure que 5°, sur un des deux objets (O1 ou O2) au moyen d'un dispositif de mesure d'azimut équipant chaque système optronique (S1, S2),
- à partir des observations, estimation par le premier ou le second système optronique (S1 ou S2), du gisement ($\overline{G_2}$) du second système optronique (S2) avec une précision d'au moins la classe PGS.

6. Procédé d'estimation du gisement selon l'une des revendications 1 à 2, **caractérisé en ce que** les étapes sont réalisées au moyen de deux systèmes optroniques (S1, S2) et pour au moins deux objets communs, et **en ce que** les mesures supplémentaires sont obtenues de la manière suivante :

- mesurer la distance entre chaque système optronique (S1, S2) et chaque objet, au moyen d'un dispositif de mesure de distance équipant chaque système optronique,
- mesurer l'élévation de chaque objet au moyen d'un dispositif de mesure d'élévation équipant chaque système optronique (S1, S2),
- mesurer l'angle relatif de chaque objet au moyen d'un dispositif de mesure d'angle relatif équipant chaque système optronique (S1, S2),
- à partir des observations, estimation du gisement ($\overline{G_2}$) du deuxième système optronique avec une précision d'au moins la classe PGS.

7. Procédé d'estimation du gisement selon l'une des revendications 1 à 2, **caractérisé en ce que** les étapes sont réalisées au moyen de deux systèmes optroniques (S1, S2) et pour un objet commun, et **en ce que** les mesures supplémentaires sont obtenues de la manière suivante :

- mesurer la distance entre chaque système optronique (S1, S2) et l'objet, au moyen d'un dispositif de mesure de distance équipant chaque système optronique,
- mesurer l'élévation de l'objet au moyen d'un dispositif de mesure d'élévation équipant chaque système optronique (S1, S2),
- à partir des observations, estimation du gisement ($\overline{G_2}$) du deuxième système optronique avec une précision d'au moins la classe PGS.

8. Procédé d'estimation du gisement selon l'une des revendications 1 à 2, **caractérisé en ce que** les étapes sont réalisées au moyen de deux systèmes optroniques (S1, S2) et pour un objet commun mobile, **en ce que** les mesures sont réalisées sur des intervalles de temps qui se recouvrent au moins partiellement, et **en ce que** les mesures supplémentaires sont obtenues de la manière suivante :

- mesurer la distance entre chaque système optronique (S1, S2) et l'objet, au moyen d'un dispositif de mesure de distance équipant chaque système optronique,
- mesurer l'élévation de l'objet au moyen d'un dispositif de mesure d'élévation équipant chaque système optronique (S1, S2),
- mesurer l'angle relatif au moyen d'un dispositif de mesure d'angle relatif équipant chaque système optronique (S1, S2),
- mesurer un azimut entre chaque système optronique et l'objet, avec une précision meilleure que 5° au moyen d'un dispositif de mesure d'azimut équipant chaque système optronique,
- à partir des observations, estimation du gisement ($\overline{G_2}$) du deuxième système optronique.

9. Procédé d'estimation du gisement selon la revendication précédente, **caractérisé en ce que** la trajectoire de l'objet mobile est estimée simultanément auxdites estimations sur la plage de temps des mesures.

10. Procédé d'estimation du gisement selon l'une des revendications 1 à 2, **caractérisé en ce que** les étapes sont réalisées pour deux objets communs (01, 02) et au moyen de deux systèmes optroniques (S1, S2), **en ce que** les moyens de communication sont des moyens optiques, **en ce que** les mesures supplémentaires sont obtenues de la manière suivante:

- mesurer la distance correspondant à la somme de la distance entre un objet (01) et un système optronique (S1) et de la distance entre ledit objet (01) et l'autre système optronique (S2), au moyen d'un dispositif de mesure de distance comportant un émetteur (206) équipant l'autre système optronique (S2) et un récepteur (107) équipant le système optronique (S1),
- mesurer l'angle relatif de chaque objet au moyen d'un dispositif de mesure d'angle relatif équipant chaque système optronique,
- mesurer un azimut, avec une précision meilleure que 5°, entre chaque système optronique et chaque objet, au moyen d'un dispositif de mesure d'azimut équipant chaque système optronique,
- à partir des observations, estimation du gisement ($\overline{G_2}$) du deuxième système optronique.

**11.** Procédé d'estimation du gisement selon l'une des revendications 1 à 2, **caractérisé en ce que** les étapes sont réalisées pour au moins deux objets communs et au moyen d'au moins deux systèmes optroniques, **en ce que** les mesures supplémentaires sont obtenues de la manière suivante:

- mesurer l'angle relatif de chaque objet au moyen du dispositif de mesure d'angle relatif équipant le premier système optronique,
- mesurer l'élévation de chaque objet au moyen du dispositif de mesure d'élévation équipant le premier système optronique,
- mesurer la distance entre chaque système optronique et chaque objet, au moyen d'un dispositif de mesure de distance équipant chaque système optronique.

**12.** Procédé d'estimation du gisement selon l'une des revendications 1 à 2, **caractérisé en ce que** les étapes sont réalisées pour au moins un objet commun et au moyen d'au moins trois systèmes optroniques, **en ce que** les mesures supplémentaires sont obtenues de la manière suivante:

- mesurer l'angle relatif de chaque objet au moyen d'un dispositif de mesure d'angle relatif équipant chaque système optronique,
- et l'élévation de chaque objet au moyen d'un dispositif de mesure d'élévation équipant chaque système optronique,
- déterminer la position d'un troisième système optronique,
- à partir des observations, estimation du gisement ($\overline{G_2}, \overline{G_3}$, ...) de chaque système optronique.

**13.** Procédé d'estimation du gisement selon l'une des revendications 1 à 2, **caractérisé en ce que** les étapes sont réalisées pour au moins deux objets communs et au moyen d'au moins deux systèmes optroniques, **en ce que** les mesures supplémentaires sont obtenues de la manière suivante:

- mesurer l'angle relatif de chaque objet au moyen d'un dispositif de mesure d'angle relatif équipant chaque système optronique,
- mesurer la distance entre chaque système optronique et chaque objet, au moyen d'un dispositif de mesure de distance équipant chaque système optronique,
- mesurer un azimut entre chaque système optronique et chaque objet, avec une précision meilleure que 5°, au moyen d'un dispositif de mesure d'azimut équipant chaque système optronique,
- à partir des observations, estimation du gisement ($\overline{G_2}$, ...) ainsi que les roulis et tangage ($\overline{\theta_1}$, $\overline{\varphi_1}$, $\overline{\theta_2}$, $\overline{\varphi_2}$) de chaque système optronique.

**14.** Procédé d'estimation du gisement selon l'une des revendications précédentes, **caractérisé en ce que** les positions des systèmes optroniques sont déterminées au moyen d'un dispositif de positionnement équipant lesdits systèmes optroniques.

**15.** Procédé d'estimation du gisement selon l'une des revendications 1 à 2, **caractérisé en ce que** les étapes sont réalisées au moyen du premier et d'un deuxième système optronique (S1, S2), pour un objet commun et un autre objet de position connue non commun aux deux systèmes optroniques, c'est-à-dire visible seulement par le deuxième système optronique, **en ce que** les mesures supplémentaires sont obtenues de la manière suivante:

- mesurer l'élévation de chaque objet au moyen d'un dispositif de mesure d'élévation équipant le deuxième système optronique,
- mesurer la distance entre le premier système optronique et l'objet commun, au moyen d'un dispositif de mesure de distance équipant le premier système optronique,
- mesurer la distance entre le deuxième système optronique et chaque objet, au moyen d'un dispositif de mesure de distance équipant le deuxième système optronique,

**en ce que** la position du premier système optronique est déterminée au moyen d'un dispositif de positionnement équipant ledit système optronique et **en ce que** la position du second système optronique est déterminée par l'estimation.

16. Procédé d'estimation du gisement selon l'une des revendications précédentes, **caractérisé en ce que** les moyens de communication entre les systèmes optroniques sont assurés par une liaison radio.

17. Procédé d'estimation du gisement selon l'une des revendications précédentes, **caractérisé en ce qu'**il comporte une étape de calcul des coordonnées et/ou de la direction des objets acquis, à partir des observations.

18. Procédé d'estimation du gisement selon l'une des revendications précédentes, **caractérisé en ce qu'**au moins un système optronique Sm, m variant de 2 à M, est un système optronique mobile de trajectoire connue, et **en ce que** les mesures effectuées à partir du (ou des) système(s) mobile(s) sont temporellement synchronisées.

19. Procédé d'estimation du gisement selon l'une des revendications précédentes, **caractérisé en ce qu'**au moins un dispositif d'acquisition est un capteur omnidirectionnel.

20. Procédé d'estimation du gisement selon l'une des revendications précédentes, **caractérisé en ce qu'**au moins un dispositif de mesure d'angle relatif est un compas magnétique.

21. Procédé d'estimation du gisement selon la revendication précédente, **caractérisé en ce que** le compas magnétique est calibré au moyen des mesures sur un ou/et des objets.

22. Procédé d'estimation du gisement selon l'une des revendications précédentes, **caractérisé en ce que** les observations sont stockées et communicables par chaque système optronique.

23. Procédé d'estimation d'une direction d'orientation selon l'une des revendications précédentes, **caractérisé en ce qu'**il comporte préalablement, une étape de sélection des objets de la scène selon un critère de visibilité commune et/ou un critère de performance sur la direction d'orientation.

24. Procédé d'estimation d'une direction d'orientation selon l'une des revendications précédentes, **caractérisé en ce qu'**il comporte préalablement, une étape de sélection de positions des systèmes optroniques.

**Patentansprüche**

1. Verfahren zum Schätzen der Peilung eines optronischen Systems in einem geographischen Referenzrahmen, wobei sich das optronische System an einer ersten Position befindet und als erstes optronisches System (S1) bezeichnet wird, **dadurch gekennzeichnet, dass** es die folgenden Schritte beinhaltet:

   - A) eine kollaborative Konfiguration, definiert durch:
   - eine Geometrie oder Positionen von mindestens zwei optronischen Systemen, darunter das erste optronische System (S1) und mindestens ein anderes optronisches System (S2, ..., Sm, ... SM), wobei sich die optronischen Systeme jeweils an unterschiedlichen Positionen befinden und mit Mitteln zur Kommunikation untereinander und mit Vorrichtungen zur Erfassung eines oder mehrerer Objekte in einer Szene ausgestattet sind, wobei das erste optronische System ferner mit einer Elevationsmessvorrichtung und einer Relativwinkelmessvorrichtung ausgestattet ist, wobei jede andere optronische System ferner mit einer Entfernungsmessvorrichtung und/oder einer Elevationsmessvorrichtung und/oder einer Relativwinkelmessvorrichtung und/oder einer ungefähren Azimutmessvorrichtung ausgestattet ist,
   - K Objekte (O1, ...Ok, ...OK) der Szene, deren Positionen unbekannt sind, wobei diese Objekte den optronischen Systemen gemeinsam sind,
   - die Art der für jedes optronische System verfügbaren Messwerte,
   - Bestimmen, von bekannten statistischen Kennwerten der Messfehler, einer kollaborativen Konfiguration zum Erreichen einer vorbestimmten gewünschten Präzision (PGS), was die folgenden Unterschritte umfasst:

∘ A1) Definieren einer kollaborativen Konfiguration,

∘ A2) Berechnen, für diese kollaborative Konfiguration, mittels einer Verarbeitungseinheit (110), mit der das erste optronische System ausgestattet ist, einer theoretischen Präzision (PGT) anhand der kollaborativen Konfiguration,

∘ A3) Wiederholen, wenn die theoretische Präzision (PGT) größer als die gewünschte Präzision (PGS) ist, der Schritte A1), A2) und A3) für eine andere kollaborative Konfiguration, andernfalls Übergehen zu Schritt B),

- B) Schätzen, auf der Basis der optronischen Systeme der kollaborativen Konfiguration aus Schritt A3), einer Peilung ($\overline{G_1}$) des ersten optronischen Systems, die die folgenden Unterschritte umfasst:

∘ B1) Erfassen, mittels der Erfassungsvorrichtung jedes optronischen Systems, eines oder mehrerer den genannten optronischen Systemen gemeinsamer Objekte (O1, ...Ok, ...OK) in der Szene, wobei die Orientierungsrichtung zwischen jedem optronischen System und jedem Objekt unbekannt ist,

∘ B2) Bestimmen zweier geodätischer Positionen unter diesen der optronischen Systeme,

∘ B3) für mindestens ein gemeinsames Objekt:

▪ Messen des Relativwinkels mittels der Relativwinkelmessvorrichtung, mit der das erste optronische System (S1) ausgestattet ist,

▪ Messen der Elevation des Objekts mittels der Elevationsmessvorrichtung, mit der das erste optronische System (S1) ausgestattet ist,

▪ Durchführen zusätzlicher Messungen der Entfernung und mindestens eines dritten Winkelparameters des Objekts mittels des ersten optronischen Systems (S1) und der Messvorrichtungen jedes weiteren optronischen Systems (S2, ..., Sm, ...SM);

∘ B4) Übermitteln, mit den zwei Positionen der optronischen Systeme und den Messungen, die Beobachtungen darstellen, durch jedes andere optronische System (S2, ..., Sm, ... SM) an das erste optronische System (S1), der Beobachtungen von jedem anderen optronischen System,

∘ B5) Schätzen, auf der Basis der Beobachtungen aus dem ersten optronischen System und den von jedem anderen optronischen System übermittelten Beobachtungen, der Peilung ($\overline{G_1}$) des ersten optronischen Systems durch eine Verarbeitungseinheit (110), mit der das erste optronische System ausgestattet ist, die zum Lösen eines Gleichungssystems mit mindestens einer Unbekannten konfiguriert ist, die die Peilung ($\overline{G_1}$) des ersten optronischen Systems ist,

- C) Schätzen einer Präzision (PGE) der geschätzten Peilung ($\overline{G_1}$) des ersten optronischen Systems, Wiederholen, falls die Präzision (PGE) größer als die gewünschte Präzision (PGS) ist, der Schritte A), B) und C) unter Auswählen einer anderen kollaborativen Konfiguration, wobei die Präzision der Peilung (PGE) auf der Basis der von den anderen Systemen festgestellten und übermittelten Informationen und Beobachtungen und eines Schätzalgorithmus nach der Kovarianz des geschätzten Parametervektors oder der Analyse von Resten auf die Beobachtungen bewertet wird.

2. Verfahren zum Schätzen der Peilung nach dem vorherigen Anspruch, **dadurch gekennzeichnet, dass** die PGS zur Klasse 1 mrd gehört.

3. Verfahren zum Schätzen der Peilung nach einem der vorherigen Ansprüche, **dadurch gekennzeichnet, dass** die Schritte mittels zweier optronischer Systeme (S1, S2) und für ein einziges gemeinsames Objekt durchgeführt werden, und dadurch, dass die zusätzlichen Messwerte wie folgt erhalten werden:

- Messen der Entfernung zwischen jedem optronischen System (S1, S2) und dem Objekt mittels einer Entfernungsmessvorrichtung, mit der jedes optronische System ausgestattet ist,
- Messen eines Azimuts des Objekts näherungsweise mit einer Präzision besser als 5° mittels einer näherungsweisen Azimutmessvorrichtung, mit der das erste optronische System (S1) ausgestattet ist.

4. Verfahren zum Schätzen der Peilung nach einem der Ansprüche 1 bis 2, **dadurch gekennzeichnet, dass** die Schritte mittels zweier optischer Systeme (S1, S2) und für zwei gemeinsame Objekte (O1, 02) durchgeführt werden, und dadurch, dass die zusätzlichen Messwerte wie folgt erhalten werden:

- Messen der Entfernung zwischen jedem optronischen System (S1, S2) und jedem Objekt (O1, 02) mittels einer Entfernungsmessvorrichtung, mit der jedes optronische System ausgestattet ist,
- Messen der Elevation zwischen jedem optronischen System (S1, S2) und jedem Objekt (O1, O2).

**5.** Verfahren zum Schätzen der Peilung nach einem der Ansprüche 1 bis 2, **dadurch gekennzeichnet, dass** die Schritte mittels zweier optischer Systeme (S1, S2) und für zwei gemeinsame Objekte (O1, 02) durchgeführt werden, und dadurch, dass die zusätzlichen Messwerte durch jedes optronische System wie folgt erhalten werden:

- Messen der Entfernung zwischen dem ersten optronischen System (S1) und jedem Objekt (O1, O2) mittels einer Entfernungsmessvorrichtung, mit der das erste optronische System ausgestattet ist,
- Messen der Elevation jedes Objekts (O1, O2) mittels einer Elevationsmessvorrichtung, mit der jedes optronische System (S1, S2) ausgestattet ist,
- Messen des Relativwinkels jedes Objekts (O1, O2) mittels einer Relativwinkelmessvorrichtung, mit der jedes optronische System (S1, S2) ausgestattet ist,
- Messen eines Azimuts mit einer Präzision besser als 5° an einem der beiden Objekte (O1 oder 02) mittels einer Azimutmessvorrichtung, mit der jedes optische System (S1, S2) ausgestattet ist,
- Schätzen, auf der Basis der Beobachtungen, durch das erste oder zweite optronische System (S1 oder S2), der Peilung ($\overline{G_2}$) des zweiten optronischen Systems (S2) mit einer Präzision von mindestens der Klasse PGS.

**6.** Verfahren zum Schätzen der Peilung nach einem der Ansprüche 1 bis 2, **dadurch gekennzeichnet, dass** die Schritte mittels zweier optronischer Systeme (S1, S2) und für mindestens zwei gemeinsame Objekte durchgeführt werden, und dadurch, dass die zusätzlichen Messwerte wie folgt erhalten werden:

- Messen der Entfernung zwischen jedem optronischen System (S1, S2) und jedem Objekt mittels einer Entfernungsmessvorrichtung, mit der jedes optronische System ausgestattet ist,
- Messen der Elevation jedes Objekts mittels einer Elevationsmessvorrichtung, mit der jedes optronische System (S1, S2) ausgestattet ist,
- Messen des Relativwinkels jedes Objekts mittels einer Relativwinkelmessvorrichtung, mit der jedes optronische System (S1, S2) ausgestattet ist,
- Schätzen, auf der Basis der Beobachtungen, der Peilung ($\overline{\overline{G_2}}$) des zweiten optronischen Systems mit einer Präzision von mindestens der Klasse PGS.

**7.** Verfahren zum Schätzen der Peilung nach einem der Ansprüche 1 bis 2, **dadurch gekennzeichnet, dass** die Schritte mittels zweier optischer Systeme (S1, S2) und für ein gemeinsames Objekt durchgeführt werden, und dadurch, dass die zusätzlichen Messwerte wie folgt erhalten werden:

- Messen der Entfernung zwischen jedem optronischen System (S1, S2) und dem Objekt mittels einer Entfernungsmessvorrichtung, mit der jedes optronische System ausgestattet ist,
- Messen der Elevation des Objekts mittels einer Elevationsmessvorrichtung, mit der jedes optronische System (S1, S2) ausgestattet ist,
- Schätzen, auf der Basis der Beobachtungen, der Peilung ($\overline{\overline{G_2}}$) des zweiten optronischen Systems mit einer Präzision von mindestens der Klasse PGS.

**8.** Verfahren zum Schätzen der Peilung nach einem der Ansprüche 1 bis 2, **dadurch gekennzeichnet, dass** die Schritte mittels zweier optischer Systeme (S1, S2) und für ein mobiles gemeinsames Objekt durchgeführt werden, dadurch, dass die Messungen in Zeitintervallen durchgeführt werden, die sich mindestens teilweise überlappen, und dadurch, dass die zusätzlichen Messwerte wie folgt erhalten werden:

- Messen der Entfernung zwischen jedem optronischen System (S1, S2) und dem Objekt mittels einer Entfernungsmessvorrichtung, mit der jedes optronische System ausgestattet ist,
- Messen der Elevation des Objekts mittels einer Elevationsmessvorrichtung, mit der jedes optronische System (S1, S2) ausgestattet ist,
- Messen des Relativwinkels mittels einer Relativwinkelmessvorrichtung, mit der jedes optronische System (S1, S2) ausgestattet ist,
- Messen eines Azimuts zwischen jedem optronischen System und dem Objekt mit einer Präzision besser als 5° mittels einer Azimutmessvorrichtung, mit der jedes optronische System ausgestattet ist,
- Schätzen, auf der Basis der Beobachtungen, der Peilung ($\overline{G_2}$) des zweiten optronischen Systems.

9. Verfahren zum Schätzen der Peilung nach dem vorherigen Anspruch, **dadurch gekennzeichnet, dass** die Trajektorie des mobilen Objekts gleichzeitig mit den Schätzungen über den Zeitbereich der Messungen geschätzt wird.

10. Verfahren zum Schätzen der Peilung nach einem der Ansprüche 1 bis 2, **dadurch gekennzeichnet, dass** die Schritte für zwei gemeinsame Objekte (O1, O2) und mittels zweier optischer Systeme (S1, S2) durchgeführt werden, dadurch, dass die Kommunikationsmittel optische Mittel sind, dadurch, dass die zusätzlichen Messwerte wie folgt erhalten werden:

   - Messen der Entfernung, die der Summe der Entfernung zwischen einem Objekt (O1) und einem optronischen System (S1) und der Entfernung zwischen dem Objekt (O1) und dem anderen optronischen System (S2) entspricht, mittels einer Entfernungsmessvorrichtung, die einen Sender (206), mit dem das andere optronische System (S2) ausgestattet ist, und einen Empfänger (107) aufweist, mit dem das optronische System (S1) ausgestattet ist,
   - Messen des Relativwinkels jedes Objekts mittels einer Relativwinkelmessvorrichtung, mit der jedes optronische System ausgestattet ist,
   - Messen eines Azimuts, mit einer Präzision besser als 5°, zwischen jedem optronischen System und jedem Objekt mittels einer Azimutmessvorrichtung, mit der jedes optronische System ausgestattet ist,
   - Schätzen, auf der Basis der Beobachtungen, der Peilung ($\overline{G_2}$) des zweiten optronischen Systems.

11. Verfahren zum Schätzen der Peilung nach einem der Ansprüche 1 bis 2, **dadurch gekennzeichnet, dass** die Schritte für mindestens zwei gemeinsame Objekte und mittels mindestens zweier optronischer Systeme durchgeführt werden, dadurch, dass die zusätzlichen Messwerte wie folgt erhalten werden:

   - Messen des Relativwinkels jedes Objekts mittels der Relativwinkelmessvorrichtung, mit der das erste optronische System ausgestattet ist,
   - Messen der Elevation jedes Objekts mittels der Elevationsmessvorrichtung, mit der das erste optronische System ausgestattet ist,
   - Messen der Entfernung zwischen jedem optronischen System und jedem Objekt mittels einer Entfernungsmessvorrichtung, mit der jedes optronisches System ausgestattet ist.

12. Verfahren zum Schätzen der Peilung nach einem der Ansprüche 1 bis 2, **dadurch gekennzeichnet, dass** die Schritte für mindestens ein gemeinsames Objekt und mittels mindestens dreier optronischer Systeme durchgeführt werden, dadurch, dass die zusätzlichen Messwerte wie folgt erhalten werden:

   - Messen des Relativwinkels jedes Objekts mittels einer Relativwinkelmessvorrichtung, mit der jedes optronische System ausgestattet ist,
   - und der Elevation jedes Objekts mittels einer Elevationsmessvorrichtung, mit der jedes optronische System ausgestattet ist,
   - Bestimmen der Position eines dritten optronischen Systems,
   - Schätzen, auf der Basis der Beobachtungen, der Peilung ($\overline{G_2}$, $\overline{G_3}$, ...) jedes optronischen Systems.

13. Verfahren zum Schätzen der Peilung nach einem der Ansprüche 1 bis 2, **dadurch gekennzeichnet, dass** die Schritte für mindestens zwei gemeinsame Objekte und mittels mindestens zweier optronischer Systeme durchgeführt werden, dadurch, dass die zusätzlichen Messwerte wie folgt erhalten werden:

   - Messen des Relativwinkels jedes Objekts mittels einer Relativwinkelmessvorrichtung, mit der jedes optronische System ausgestattet ist,
   - Messen der Entfernung zwischen jedem optronischen System und jedem Objekt mittels einer Entfernungsmessvorrichtung, mit der jedes optronische System ausgestattet ist,
   - Messen eines Azimuts zwischen jedem optronischen System und jedem Objekt mit einer Präzision besser als 5° mittels einer Azimutmessvorrichtung, mit der jedes optronische System ausgestattet ist,
   - Schätzen, auf der Basis der Beobachtungen, der Peilung ($\overline{G_2}$, ...) sowie der Roll- und Nickbewegungen ($\overline{\theta_1}$, $\overline{\varphi_1}$, $\overline{\theta_2}$, $\overline{\varphi_2}$) jedes optronischen Systems.

14. Verfahren zum Schätzen der Peilung nach einem der vorherigen Ansprüche, **dadurch gekennzeichnet, dass** die Positionen der optronischen Systeme mittels einer Positionierungsvorrichtung bestimmt werden, mit der die optronischen Systeme ausgestattet sind.

**15.** Verfahren zum Schätzen der Peilung nach einem der Ansprüche 1 bis 2, **dadurch gekennzeichnet, dass** die Schritte mittels des ersten und eines zweiten optronischen Systems (S1, S2) durchgeführt werden, für ein gemeinsames Objekt und ein anderes Objekt mit bekannter Position, das den beiden optronischen Systemen nicht gemeinsam ist, d.h. nur für das zweite optronische System sichtbar ist, dadurch, dass die zusätzlichen Messwerte wie folgt erhalten werden:

- Messen der Elevation jedes Objekts mittels einer Elevationsmessvorrichtung, mit der das zweite optronische System ausgestattet ist,
- Messen der Entfernung zwischen dem ersten optronischen System und dem gemeinsamen Objekt mittels einer Entfernungsmessvorrichtung, mit der das erste optronische System ausgestattet ist,
- Messen der Entfernung zwischen dem zweiten optronischen System und jedem Objekt mittels einer Entfernungsmessvorrichtung, mit der das zweite optronische System ausgestattet ist,

dadurch, dass die Position des ersten optronischen Systems mittels einer Positionierungsvorrichtung bestimmt wird, mit der das genannte optronische System ausgestattet ist, und dadurch, dass die Position des zweiten optronischen Systems durch Schätzen bestimmt wird.

**16.** Verfahren zum Schätzen der Peilung nach einem der vorherigen Ansprüche, **dadurch gekennzeichnet, dass** die Mittel zur Kommunikation zwischen den optronischen Systemen durch eine Funkverbindung gewährleistet sind.

**17.** Verfahren zum Schätzen der Peilung nach einem der vorherigen Ansprüche, **dadurch gekennzeichnet, dass** es einen Schritt des Berechnens der Koordinaten und/oder der Richtung der erfassten Objekte auf der Basis der Beobachtungen beinhaltet.

**18.** Verfahren zum Schätzen der Peilung nach einem der vorherigen Ansprüche, **dadurch gekennzeichnet, dass** mindestens ein optronisches System Sm, wobei m von 2 bis M variiert, ein mobiles optronisches System mit bekannter Trajektorie ist, und dadurch, dass die von dem (den) mobilen System(en) durchgeführten Messungen zeitlich synchronisiert sind.

**19.** Verfahren zum Schätzen der Peilung nach einem der vorherigen Ansprüche, **dadurch gekennzeichnet, dass** mindestens eine Erfassungsvorrichtung ein omnidirektionaler Sensor ist.

**20.** Verfahren zum Schätzen der Peilung nach einem der vorherigen Ansprüche, **dadurch gekennzeichnet, dass** mindestens eine Relativwinkelmessvorrichtung ein magnetischer Kompass ist.

**21.** Verfahren zum Schätzen der Peilung nach dem vorherigen Anspruch, **dadurch gekennzeichnet, dass** der magnetische Kompass mittels Messungen an einem und/oder mehreren Objekten kalibriert wird.

**22.** Verfahren zum Schätzen der Peilung nach einem der vorherigen Ansprüche, **dadurch gekennzeichnet, dass** die Beobachtungen gespeichert werden und von jedem optronischen System mitgeteilt werden können.

**23.** Verfahren zum Schätzen einer Orientierungsrichtung nach einem der vorherigen Ansprüche, **dadurch gekennzeichnet, dass** es vorab einen Schritt des Auswählens der Objekte der Szene nach einem gemeinsamen Sichtbarkeitskriterium und/oder einem Leistungskriterium für die Orientierungsrichtung beinhaltet.

**24.** Verfahren zum Schätzen einer Orientierungsrichtung nach einem der vorherigen Ansprüche, **dadurch gekennzeichnet, dass** es zuvor einen Schritt des Auswählens von Positionen der optronischen Systeme beinhaltet.

**Claims**

**1.** A method for estimating the bearing of an optronic system in a geographical reference frame, the optronic system being situated at a first position and denoted first optronic system (S1), **characterised in that** it has the following steps:

- A) a collaborative configuration defined by:
- a geometry or positions of at least two optronic systems including the first optronic system (S1) and at least one other optronic system (S2, ..., Sm, ...SM), said optronic systems being respectively situated at separate positions and equipped with means for communication with one another and with devices for acquiring one or more objects in a scene, the first optronic system further being equipped with an elevation measurement device and with a relative angle measurement device, each other optronic system further being equipped with a distance measurement device and/or with an elevation measurement device and/or with a relative angle measurement device and/or with an approximate azimuth measurement device,

- K objects (01, ...Ok, ... OK) of the scene common to said optronic systems, whose positions are unknown,
- the nature of the measurements available for each optronic system,
- determining, from known statistical characteristics of the measurement errors, a collaborative configuration in order to achieve a predetermined desired precision (PGS), which comprises the following sub-steps:

  ◦ A1) defining a collaborative configuration,
  ◦ A2) for this collaborative configuration, calculating, by way of a processing unit (110) provided on the first optronic system, a theoretical precision (PGT) using said collaborative configuration,
  ◦ A3) if the theoretical precision (PGT) is higher than the desired precision (PGS), reiterating steps A1), A2) and A3) for another collaborative configuration, and, if not, moving on to step B),

- B) using the optronic systems of the collaborative configuration resulting from step A3), estimating a bearing $(\overline{G_1})$ of the first optronic system, which comprises the following sub-steps:

  ◦ B1) by way of the acquisition device of each optronic system, acquiring, in the scene, one or more objects (O1, ...Ok, ... OK) common to said optronic systems, the direction of orientation between each optronic system and each object being unknown,
  ◦ B2) determining two geodetic positions from among those of said optronic systems,
  ◦ B3) for at least one common object:

    ▪ measuring the relative angle by way of the relative angle measurement device provided on the first optronic system (S1),
    ▪ measuring the elevation of the object by way of the elevation measurement device provided on the first optronic system (S1),
    ▪ by way of the first optronic system (S1) and of the measurement devices of each other optronic system (S2, ..., Sm, ... SM), performing additional measurements of the distance and of at least one third angular parameter;
  ◦ B4) with the two positions of the optronic systems and said measurements constituting observations, communicating, by each other optronic system (S2, ..., Sm, ..SM) to the first optronic system (S1), the observations resulting from each other optronic system,
  ◦ B5) on the basis of the observations resulting from the first optronic system and of the observations communicated by each other optronic system, estimating the bearing $(\overline{G_1})$ of the first optronic system using a processing unit (110) provided on the first optronic system, configured to solve a system of equations having at least one unknown which is the bearing $(\overline{G_1})$ of the first optronic system,

- C) estimating a precision (PGE) of the estimated bearing $(\overline{G_1})$ of the first optronic system, if the precision (PGE) is higher than the desired precision (PGS), reiterating steps A), B) and C) by choosing another collaborative configuration, the precision of the bearing (PGE) being evaluated based on the information and observations made and communicated by the other systems and an estimation algorithm based on the covariance of the estimated parameter vector or residue analysis on the observations.

2. The bearing estimation method according to the preceding claim, **characterised in that** the PGS is of the class of 1 mrd.

3. The bearing estimation method according to one of the preceding claims, **characterised in that** the steps are performed by way of two optronic systems (S1, S2) and for a single common object, and **in that** the additional measurements are obtained as follows:

- measuring the distance between each optronic system (S1, S2) and the object by way of a distance measurement device provided on each optronic system,
- measuring, in an approximate manner with precision better than 5°, an azimuth of the object by way of an approximate azimuth measurement device provided on the first optronic system (S1).

**4.** The bearing estimation method according to one of claims 1 to 2, **characterised in that** the steps are performed by way of two optronic systems (S1, S2) and for two common objects (O1, O2), and **in that** the additional measurements are obtained as follows:

- measuring the distance between each optronic system (S1, S2) and each object (01, 02) by way of a distance measurement device provided on each optronic system,
- measuring the elevation between each optronic system (S1, S2) and each object (O1, O2),

**5.** The bearing estimation method according to one of claims 1 to 2, **characterised in that** the steps are performed by way of two optronic systems (S1, S2) and for two common objects (O1, O2), and **in that** the additional measurements are obtained as follows by each optronic system:

- measuring the distance between the first optronic system (S1) and each object (01, 02) by way of a distance measurement device provided on the first optronic system,
- measuring the elevation of each object (01, 02) by way of an elevation measurement device provided on each optronic system (S1, S2),
- measuring the relative angle of each object (01, 02) by way of a relative angle measurement device provided on each optronic system (S1, S2),
- measuring an azimuth, with a precision better than 5°, on one of the two objects (O1 or O2) by way of an azimuth measurement device provided on each optronic system (S1, S2),
- on the basis of the observations, estimating, using the first or the second optronic system (S1 or S2), the bearing ($\overline{G_2}$) of the second optronic system (S2) with a precision of at least the PGS class,

**6.** The bearing estimation method according to one of claims 1 to 2, **characterised in that** the steps are performed by way of two optronic systems (S1, S2) and for at least two common objects, and **in that** the additional measurements are obtained as follows:

- measuring the distance between each optronic system (S1, S2) and each object by way of a distance measurement device provided on each optronic system,
- measuring the elevation of each object by way of an elevation measurement device provided on each optronic system (S1, S2),
- measuring the relative angle of each object by way of a relative angle measurement device provided on each optronic system (S1, S2),
- on the basis of the observations, estimating the bearing ($\overline{G_2}$) of the second optronic system with a precision of at least the PGS class,

**7.** The bearing estimation method according to one of claims 1 to 2, **characterised in that** the steps are performed by way of two optronic systems (S1, S2) and for one common object, and **in that** the additional measurements are obtained as follows:

- measuring the distance between each optronic system (S1, S2) and the object by way of a distance measurement device provided on each optronic system,
- measuring the elevation of the object by way of an elevation measurement device provided on each optronic system (S1, S2),
- on the basis of the observations, estimating the bearing ($\overline{G_2}$) of the second optronic system with a precision of at least the PGS class,

**8.** The bearing estimation method according to one of claims 1 to 2, **characterised in that** the steps are performed by way of two optronic systems (S1, S2) and for one mobile common object, **in that** the measurements are performed over time intervals that at least partly overlap, and **in that** the additional measurements are obtained as follows:

- measuring the distance between each optronic system (S1, S2) and the object by way of a distance measurement device provided on each optronic system,
- measuring the elevation of the object by way of an elevation measurement device provided on each optronic system (S1, S2),
- measuring the relative angle by way of a relative angle measurement device provided on each optronic system (S1, S2),

- measuring an azimuth between each optronic system and the object, with a precision better than 5°, by way of an azimuth measurement device provided on each optronic system,
- on the basis of the observations, estimating the bearing ($\overline{G_2}$) of the second optronic system,

9. The bearing estimation method according to the preceding claim, **characterised in that** the path of the mobile object is estimated at the same time as said estimations, over the time range of the measurements.

10. The bearing estimation method according to one of claims 1 to 2, **characterised in that** the steps are performed for two common objects (01, 02) and by way of two optronic systems (S1, S2), **in that** the communication means are optical means, **in that** the additional measurements are obtained as follows:

- measuring the distance corresponding to the sum of the distance between an object (01) and an optronic system (S1) and the distance between said object (01) and the other optronic system (S2) by way of a distance measurement device comprising an emitter (206) provided on the other optronic system (S2) and a receiver (107) provided on the optronic system (S1),
- measuring the relative angle of each object by way of a relative angle measurement device provided on each optronic system,
- measuring an azimuth, with a precision better than 5°, between each optronic system and each object by way of an azimuth measurement device provided on each optronic system,
- on the basis of the observations, estimating the bearing ($\overline{G_2}$) of the second optronic system,

11. The bearing estimation method according to one of claims 1 to 2, **characterised in that** the steps are performed for at least two common objects and by way of at least two optronic systems, **in that** the additional measurements are obtained as follows:

- measuring the relative angle of each object by way of the relative angle measurement device provided on the first optronic system,
- measuring the elevation of each object by way of the elevation measurement device provided on the first optronic system,
- measuring the distance between each optronic system and each object by way of a distance measurement device provided on each optronic system,

12. The bearing estimation method according to one of claims 1 to 2, **characterised in that** the steps are performed for at least one common object and by way of at least three optronic systems, **in that** the additional measurements are obtained as follows:

- measuring the relative angle of each object by way of a relative angle measurement device provided on each optronic system,
- and the elevation of each object by way of an elevation measurement device provided on each optronic system,
- determining the position of a third optronic system,
- on the basis of the observations, estimating the bearing ($\overline{G_2}$, $\overline{G_3}$, ...) of each optronic system,

13. The bearing estimation method according to one of claims 1 to 2, **characterised in that** the steps are performed for at least two common objects and by way of at least two optronic systems, **in that** the additional measurements are obtained as follows:

- measuring the relative angle of each object by way of a relative angle measurement device provided on each optronic system,
- measuring the distance between each optronic system and each object by way of a distance measurement device provided on each optronic system,
- measuring an azimuth between each optronic system and each object, with a precision better than 5°, by way of an azimuth measurement device provided on each optronic system,
- on the basis of the observations, estimating the bearing ($\overline{G_2}$, ...) as well as the roll and pitch ($\overline{\theta_1}$, $\overline{\varphi_1}$, $\overline{\theta_2}$, $\overline{\varphi_2}$) of each optronic system,

14. The bearing estimation method according to any one of the preceding claims, **characterised in that** the positions of the optronic systems are determined by way of a positioning device provided on said optronic systems.

15. The bearing estimation method according to one of claims 1 to 2, **characterised in that** the steps are performed by way of the first and of a second optronic system (S1, S2), for a common object and another object having a known position not common to the two optronic systems, that is to say visible only to the second optronic system, **in that** the additional measurements are obtained as follows:

- measuring the elevation of each object by way of an elevation measurement device provided on the second optronic system,
- measuring the distance between the first optronic system and the common object by way of a distance measurement device provided on the first optronic system,
- measuring the distance between the second optronic system and each object by way of a distance measurement device provided on the second optronic system,

**in that** the position of the first optronic system is determined by way of a positioning device provided on said optronic system and **in that** the position of the second optronic system is determined by estimation.

16. The bearing estimation method according to one of the preceding claims, **characterised in that** the means for communication between the optronic systems are formed by a radio link.

17. The bearing estimation method according to one of the preceding claims, **characterised in that** it has a step of calculating the coordinates and/or the direction of the acquired objects on the basis of the observations.

18. The bearing estimation method according to one of the preceding claims, **characterised in that** at least one optronic system Sm, m varying between 2 and M, is a mobile optronic system having a known path, and **in that** the measurements performed from the mobile system(s) are temporally synchronized.

19. The bearing estimation method according to one of the preceding claims, **characterised in that** at least one acquisition device is an omnidirectional sensor.

20. The bearing estimation method according to one of the preceding claims, **characterised in that** at least one relative angle measurement device is a magnetic compass.

21. The bearing estimation method according to the preceding claim, **characterised in that** the magnetic compass is calibrated by way of measurements on one or/and several objects.

22. The bearing estimation method according to one of the preceding claims, **characterised in that** the observations are stored and able to be communicated by each optronic system.

23. The method for estimating a direction of orientation according to one of the preceding claims, **characterised in that** it has, beforehand, a step of selecting the objects of the scene using a common visibility criterion and/or a performance criterion regarding the direction of orientation.

24. The method for estimating a direction of orientation according to one of the preceding claims, **characterised in that** it has, beforehand, a step of selecting positions of the optronic systems.

FIG.1

FIG.2a

FIG.2b

X

FIG.2c

FIG.3

FIG.4

FIG.5

FIG.6

FIG.7

FIG.8

FIG.9

FIG.10a

FIG.10b

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6009629 A
- US 8151475 B
- US 20100088063 A
- US 7451059 B
- EP 0351469 A
- WO 2011073144 A

**Littérature non-brevet citée dans la description**

- **HARRY L. VAN TREES ; KRISTINE L. BELL.** Bayesian Bounds for Parameter Estimation and Nonlinear Filtering Tracking. 2007